(19) **Europäisches Patentamt / European Patent Office / Office européen des brevets**

(11) **EP 2 026 177 A1**

(12) **EUROPEAN PATENT APPLICATION**
published in accordance with Art. 153(4) EPC

(43) Date of publication:
**18.02.2009 Bulletin 2009/08**

(21) Application number: **07738780.1**

(22) Date of filing: **12.03.2007**

(51) Int Cl.:
*G06F 3/042* (2006.01)  *G06F 3/023* (2006.01)
*G06F 3/048* (2006.01)  *H03M 11/04* (2006.01)

(86) International application number:
**PCT/JP2007/055334**

(87) International publication number:
**WO 2007/105819 (20.09.2007 Gazette 2007/38)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **10.03.2006 JP 2006066751**
**21.11.2006 JP 2006314650**
**09.03.2007 JP 2007060495**

(71) Applicant: **YOSHIDA, Kenji**
**Bunkyo-ku**
**Tokyo 112-0002 (JP)**

(72) Inventor: **YOSHIDA, Kenji**
**Bunkyo-ku**
**Tokyo 112-0002 (JP)**

(74) Representative: **Browne, Robin Forsythe et al**
**Leaman Browne**
**5 South Parade**
**Leeds, Yorkshire LS1 5QX (GB)**

(54) **SYSTEM FOR INPUT TO INFORMATION PROCESSING DEVICE**

(57)    New input systems, that is, a paper icon, a paper controller, a paper keyboard, and a mouse pad capable of inputting letters, characters or the like to a computer and performing operations with easy manipulation and replacing hardware devices such as a keyboard, a mouse, and a tablet are provided. By providing an icon formed on a medium for reading a dot pattern formed on a surface of the medium using a scanner connected to an information processing device, for converting the dot pattern into each of or one of a code value and a coordinate value defined by the dot pattern, and for outputting a voice, an image, a moving image, a letter or character or a program corresponding to each of or one of the code value and the coordinate value stored in the information processing device or for outputting information on an access to a website corresponding to each of or one of the code value and the coordinate value stored in the information processing device, it is possible to realize information on the voice, image, moving image or letter or character prepared in advance, start of the program, access to the website or the like.

FIG. 15

EP 2 026 177 A1

## Description

TECHNICAL FIELD

The present invention relates to an input processing system for an information processing device using dot patterns formed (printed) on a surface of a medium such as a paper sheet.

BACKGROUND ART

Computers have been used in every situation of life. Functions and purposes of computers have had dramatic increase such as obtaining necessary information by access to WEB pages on the Internet and purchases of articles in addition to conventional purposes such as creation of documents and calculations.

Conventionally, it is necessary to perform operation such as input of letters or characters using a keyboard and a mouse so as to do these behaviors.

However, it requires many complicated operations and takes long time to learn how to input letters or characters using the keyboard. It is disadvantageously difficult for persons having trouble operating devices such as seniors and handicapped persons, in particular, to operate devices. Furthermore, the problem of "digital divide" occurs that there is a distinction in information and opportunity between those capable of operating the keyboard and the mouse and mastering computers and those incapable of operating them and mastering computers.

To solve these problems, there have been proposed an information processing device and a service providing system capable of inputting information to a computer using code patterns such as a barcode or a QR code (hereinafter, generically "barcode") printed on a surface of a medium. Namely, a barcode is described on a catalog or a website provided by a trader concerned. If a user (an operator) reads the barcode using a barcode reader connected to a computer, the user can obtain desired information or purchase an article (see, for example, Patent Document 1).

Patent Document 1: Japanese Patent Application Laid-Open Publication No. 2005-4574

DISCLOSURE OF INVENTION

PROBLEMS TO BE SOLVED BY THE INVENTION

However, it is necessary to secure a predetermined region on the surface of the medium so as to display the barcodes and there is, therefore, a limit to the number of codes that can be displayed on the surface of the medium. As compared with the keyboard, it is disadvantageously difficult to input codes corresponding to varied letters, characters, and symbols. Besides, the barcodes are factors doing aesthetic harm to the surface of the medium.

The present invention has been made in view of the above-stated respects and provides new input systems, that is, to provide a paper icon, a paper controller, a paper keyboard, and a mouse pad in place of hardware devices such as a keyboard, a mouse, and a tablet capable of inputting letters, characters or the like to a computer and performing operations with easy manipulation.

MEANS FOR SOLVING PROBLEMS

To solve the problems, the present invention adopts the following means.

A first aspect of the present invention is an input processing system for an information processing device, wherein a dot pattern which is formed on a surface of a medium and in which each of or one of a coordinate value and a code value is defined in one format is read using a scanner connected to the information processing device, thereby transmitting an operation instruction for inputting each of or one of the coordinate value and the code value to a central processing unit of the information processing device defined by the dot pattern, the dot pattern being printed on the surface of the medium, and the dot pattern on the surface of the medium is read using the scanner reading the dot pattern, and wherein each of or one of the coordinate value and the code value corresponding to the dot pattern is input to the central processing unit of the information processing device.

A second aspect of the present invention is an input processing system for an information processing device, wherein a dot pattern which is formed on a surface of a medium is read using a scanner connected to the information processing device, and is converted into a code value of an interrupt key on a hardware keyboard defined by the dot pattern, thereby generating a key input interrupt processing in a central processing unit of the information processing device, the dot pattern being formed for each icon printed on the surface of the medium, and wherein if the icon for which the dot pattern is formed on the surface of the medium is to be scanned using the scanner reading the dot pattern, then it is recognized that the scanner is inclined with respect to the surface of the medium before or after reading the dot pattern according to a difference in light and shade of an image picked up by the scanner, and the key input interrupt processing defined according to a direction in which the scanner is inclined with respect to the surface of the medium is generated.

A third aspect of the present invention is the input processing system for the information processing device according to claim 2, wherein a scanner operation is recognized by a change in the difference in the light and the shade of the image picked up by the scanner, and wherein the key input interrupt processing is generated according to the scanner operation.

A fourth aspect of the present invention is the input processing system for the information processing device according to claim 2 or 3, wherein the key input interrupt processing includes a change in a type of an input letter or character, an instruction to convert the letter or character, and a cursor movement.

A fifth aspect of the present invention is a Japanese input system, wherein a dot pattern formed on a surface of a medium is read using a scanner connected to an information processing device and converted into a code of an interrupt key on a hardware keyboard defined by the dot pattern, thereby generating a key input interrupt processing in a central processing unit of the information processing device, the dot pattern being formed for each icon printed on the surface of the medium, if the icon for which the dot pattern is formed on the surface of the medium is to be scanned using the scanner reading the dot pattern and a word including only a vowel is input, the dot pattern on the icon is read by contacting a tip end of the scanner with the icon for which a code value corresponding to the vowel is defined as the dot pattern, and wherein if the icon for which the dot pattern is formed on the surface of the medium is to be scanned using the scanner reading the dot pattern and a word including a consonant and the vowel is input, then the dot pattern corresponding to the consonant is read by contacting and stopping a reader provided on the tip end of the scanner with and on the icon for which a code value corresponding to the consonant is defined as the dot pattern, the reader of the scanner is slid up to the icon for which the code value corresponding to the vowel next to the consonant is defined as the dot pattern on the surface of the medium and temporarily stopped on the icon corresponding to the vowel to read the dot pattern, and the reader provided on the tip end of the scanner is separated from the surface of the medium so as not to be able to recognize the dot pattern, thereby inputting a single letter or character, a series of words or a phrase.

In this way, by contacting with and separating from the icon for which the dot pattern is formed, it is possible to realize a completely different input system for inputting letters and characters that is unrealizable with a hardware keyboard.

A sixth aspect of the present invention is an information input device comprising: a voice input unit that inputs voice information of an operator; a conversion unit that analyzes the input voice information and that converts the input voice information into one or more than one word candidate constituted by letters or characters corresponding to the input voice information; a display unit that displays the one or more than one word candidate obtained by conversion; a scanner that reads a dot pattern that is formed on a surface of a medium and in which each of or one of a coordinate value and a code value for arbitrarily moving a cursor is patterned so as to select one of the word candidate displayed on the display unit; and a deciding unit that converts the dot pattern read by the scanner into the code value, and that inputs the word candidate corresponding to the code value as a decided word.

In this way, when inputting voice information into an information processing device, it is possible to compensate a voice input by selectively reading a printed surface of a dot pattern of a medium using a scanner, with reference to input candidate information (i.e., a character candidate or a menu) displayed on a screen of the information processing device.

A seventh aspect of the present invention is an input processing system for an information processing device, wherein a dot pattern which is formed on a surface of a medium and in which each of or one of a coordinate value and a code value is patterned is read using a scanner connected to the information processing device, thereby transmitting an operation instruction to a central processing unit of the information processing device defined by the dot pattern, the dot pattern being printed on the surface of the medium, and wherein if the dot pattern on the surface of the medium is to be read using the scanner reading the dot pattern, then it is recognized that the scanner is inclined with respect to the surface of the medium by a difference in light and shade of an image picked up by the scanner, and a GUI operation on a screen is performed according to a direction in which the scanner is inclined with respect to the surface of the medium.

An eighth aspect of the present invention is the input processing system for the information processing device according to claim 7, wherein a scanner operation is recognized by a change in the difference in the light and the shade of the image picked up by the scanner, and the GUI operation on the screen is performed according to the scanner operation.

A ninth aspect of the present invention is the input processing system for the information processing device according to claim 7 or 8, wherein the GUI operation on the screen is a mouse-manipulated operation such as screen scrolling, a cursor movement, designation of an icon on the screen, a drag and drop operation, a menu selection or an operation for instructing a letter, character or the like input position.

A tenth aspect of the present invention is an input processing system for an information processing device, wherein a dot pattern formed on a surface of a medium is read using a scanner connected to the information processing device, and is converted into a code of an interrupt key on a hardware keyboard defined by the dot pattern, thereby generating a key input interrupt processing in a central processing unit of the information processing device, the dot pattern being printed, along with concave and convex portions of raised dots, on the surface of the medium as an icon.

An eleventh aspect of the present invention is the input processing system for the information processing device according to claim 10, wherein the dot pattern and the raised dots meaning the dot pattern are formed in a predetermined region as a pair on the surface of the medium, and a bank separating and defining the region is provided for each region.

A twelfth aspect of the present invention is a remote controller for making a reservation of viewing and listening or recording or for accessing a website based on program information or website information printed on a surface of a medium, the remote controller comprising: an imaging unit that optically reads a dot pattern formed by patterning a predetermined code value based on a predetermined algorithm for each region of the program information or the site information printed on the surface of the medium; a control unit that analyzes the dot pattern from an image picked up by the imaging unit and transmitted from the imaging unit, and that decodes the dot pattern to a code value signified by the dot pattern; and a transmission unit that transmits the decoded code value to a program broadcasting receiver, a tuner, a recorder and player, a player or network access device, a settop box for broadcasting reception and network access or a personal computer.

A thirteenth aspect of the present invention is a remote controller having a dot pattern obtained by patterning a predetermined code value based on a predetermined algorithm and formed on an icon on a surface of a medium signifying a control button for a program broadcasting receiver, a tuner, a recorder and player, a player or network access device, a settop box for broadcasting reception and network access or a personal computer, the remote controller comprising: an imaging unit that optically reads the dot pattern; a control unit that analyzes the dot pattern from an image picked up by the imaging unit and transmitted from the imaging unit, and that decodes the dot pattern to a code value signified by the dot pattern; and a transmission unit that transmits the decoded code value to the program broadcasting receiver, the tuner, the recorder and player, the player or network access device, the settop box for the broadcasting reception and network access or the personal computer.

A fourteenth aspect of the present invention is the remote controller according to claim 12 or 13, wherein the imaging unit is a reader provided integrally with the remote controller.

A fifteenth aspect of the present invention is the remote controller according to claim 12 or 13, comprising: a cradle constituting a remote controller main body, the cradle including therein the control unit and the transmission unit; and a scanner connected to the cradle wiredly or wirelessly, the scanner including an imaging unit communicable with the control unit.

A sixteenth aspect of the present invention is a projected image and moving image control system comprising: a projection board on which a dot pattern obtained by patterning each of or one of a predetermined coordinate value and a predetermined code value based on a predetermined algorithm is formed, the projection board having one surface constituted by an image display area for projecting a moving image or an image and a controller area for displaying an icon image for controlling the moving image or the image projected on the image display area; a projection unit being for projecting the moving image or the image at least on the image display area; a reading unit that reads the dot pattern formed in the controller area; and a control unit that analyzes the dot pattern on the icon image formed in the controller area and read by the reading unit, that converts the dot pattern into a coordinate value or a code value signified by the dot pattern, that outputs a control signal corresponding to the coordinate value or the code value to the projection unit, and that controls output of the moving image or the image displayed in the image display area.

A seventeenth aspect of the present invention is the projected image and moving image control system according to claim 16, wherein the projection board is configured so that a transparent sheet is bonded onto a surface of a white board via an adhesion layer, and the dot pattern is formed between the transparent sheet and the adhesion layer.

An eighteenth aspect of the present invention is an information processing and display system comprising: a projection board on which a dot pattern obtained by patterning each of or one of a predetermined coordinate value and a predetermined code value based on a predetermined algorithm is formed; a projection unit that projects an icon image signifying at least start of a program on the projection board, and that projects an image or a moving image for displaying a program installed in a storage device corresponding to the icon image; a reading unit that reads the dot pattern formed on the projected icon image; and a control unit that analyzes the dot pattern formed on the icon image and read by the reading unit, that converts the dot pattern into a coordinate value or a code value signified by the dot pattern, and that starts the program from the storage device based on a startup signal corresponding to the coordinate value or the code value.

A nineteenth aspect of the present invention is the projected image and moving image control system or the information processing and display system according to claim 16 or 18, wherein a surface of the projection board on which the dot pattern is formed differs from a surface onto which the image, the moving image or the icon image is projected, and the projection unit is arranged as a rear projector with respect to the projection board.

A twentieth aspect of the present invention is the projected image and moving image control system or the information processing and display system according to claim 19, wherein the dot pattern on the projection board is constituted out of a material having an infrared absorbing characteristic, and an infrared cut filter is provided at least on a projection unit-side surface of the projection board.

A twenty-first aspect of the present invention is a paper controller generation system for printing an icon image displayed on a display unit on a surface of a paper sheet along with a dot pattern corresponding to the icon image, the paper controller generation system being an icon image print control system and comprising: a display unit that generates and displays the icon image; a control that associates the icon image displayed on the display unit with each of or one of a coordinate value and a code value defined in advance, and that instructs the icon image and the dot pattern to be printed; and a print unit that prints the icon image and the dot pattern on a surface of a predetermined medium based on an instruction from the control unit.

A twenty-second aspect of the present invention is a printing method for an information processing device for printing a desktop screen displayed on a display unit on a surface of a paper sheet along with a dot pattern, comprising: mapping coordinate values corresponding to the desktop screen; generating a dot pattern signifying coordinate values on a screen when printing the desktop screen; generating a dot pattern including the coordinate values and a code value signifying a function of a functional image or the like onto the functional image such as the icon image on the desktop in one format; and printing the desktop screen together with the dot patterns.

A twenty-third aspect of the present invention is the projected image and moving image control system or the information processing and display system according to any one of claims 16 to 20, wherein the dot pattern formed on the projection board is defined in patterns identical in the coordinate value and the code value, and wherein predetermined matrix blocks are formed on the board, and an identical code value is assigned in same matrix block despite a change in the coordinate value.

A twenty-fourth aspect of the present invention is the projected image and moving image control system or the information processing and display system according to claim 23, wherein the icon image is arranged to spread over the one or plurality of matrix blocks, and control over an image corresponding to the icon image or start of a program corresponding to the icon image is instructed by causing the reading unit to read the dot pattern of the icon image.

A twenty-fifth aspect of the present invention is the input processing system for the information processing device, the Japanese input system, the information input device, the remote controller, the projected image and moving image control system, the information processing and display system or the icon image print control system according to any one of claims 2, 5 to 7, 10 to 13, and 16, 18, and 21, wherein the dot pattern is formed out of an infrared absorbing material, and the coordinate value and the code value are defined in one format in the dot pattern.

A twenty-sixth aspect of the present invention is an input processing system for an information processing device, wherein a dot pattern which is formed on a surface of a medium and in which a coordinate value and a code value are defined in one format is read using a scanner connected to the information processing device, transmitting an operation instruction for inputting each of or one of the coordinate value and the code value to a central processing unit of the information processing device defined by the dot pattern, the dot pattern being printed on the surface of the medium, the dot pattern on the surface of the medium is a set of predetermined dots obtained by superimposing the dot pattern on a pattern of a controller or a keyboard to arrange reference grid point dots at predetermined intervals in horizontal and vertical directions and arranging information dots having values defined based on how the information dots are shifted from a virtual grid point at a center surrounded by four reference grid point dots around the virtual grid point, the dot pattern including multiple information regions in which dot patterns including X coordinate values, Y coordinate values, and code values in a format of one dot pattern are printed, and wherein the dot pattern on the surface of the medium is read using the scanner reading the dot pattern, thereby inputting each of or one of the coordinate value and the code value corresponding to the dot pattern to the central processing unit of the information processing device.

EFFECT OF THE INVENTION

The present invention can realize new input system, that is, a paper icon, a paper controller, a paper keyboard, and a mouse pad in place of hardware devices such as a keyboard, a mouse and a tablet capable of inputting letters, characters or the like to a computer and performing operation on the computer with easy operation.

BRIEF DESCRIPTION OF DRAWINGS

Fig. 1 is a block diagram showing a system configuration of a scanner and a computer;
Fig. 2 is an explanatory diagram showing a dot pattern according to GRID 1;
Fig. 3 is an enlarged diagram showing an example of information dots on the dot pattern according to the GRID 1;
Fig. 4 is an explanatory diagram showing arrangement of the information dots according to the GRID 1;
Fig. 5 shows another example in which the information dots and data defined by the information dots are displayed in the form of bits according to the GRID 1;
Fig. 6 shows an example in which the information dots and the data defined by the information dots are displayed in the form of bits according to the GRID 1, wherein Fig. 6(a) shows that two dots are arranged, Fig. 6(b) shows that four dots are arranged, and Fig. 6(c) shows that five dots are arranged;
Fig. 7 shows modifications of the dot pattern according to the GRID 1, wherein Fig. 7(a) is a schematic diagram of arranging six information dots, Fig. 7(b) is a schematic diagram of arranging nine information dots, Fig. 7(c) is a schematic diagram of arranging 12 information dots, and Fig. 7(d) is a schematic diagram of arranging 36 information dots;

Fig. 8 is an explanatory diagram showing arrangement of dots according to the GRID 1;

Fig. 9 is an explanatory diagram explaining a format of dot patterns according to an embodiment of the present invention;

Fig. 10 is an explanatory diagram showing dot patterns according to GRID2;

Fig. 11 is a diagram showing a relation between dots and grid lines according to the GRID2;

Fig. 12 is a diagram a manner in which an information dot is shifted from a grid point according to the GRID2;

Fig. 13 is a dot pattern diagram for explaining information acquisition by difference according to the GRID2;

Fig. 14 is a diagram showing a relation among information bits, a security table, and true values according to the GRID2;

Fig. 15 is an explanatory diagram showing a state of using a paper keyboard according to an embodiment of the present invention;

Fig. 16 shows facing pages of the paper keyboard;

Fig. 17 shows facing pages of the paper keyboard;

Fig. 18 is an explanatory diagram showing a paper controller according to an embodiment of the present invention;

Fig. 19 shows another embodiment of a paper controller for registering URLs on the Internet as bookmarks;

Fig. 20 is an explanatory diagram showing a state of using the paper controller;

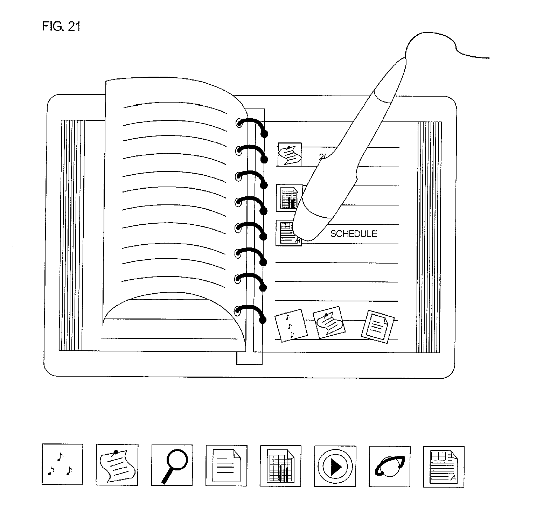

Fig. 21 is an explanatory diagram showing a state of using the paper controller;

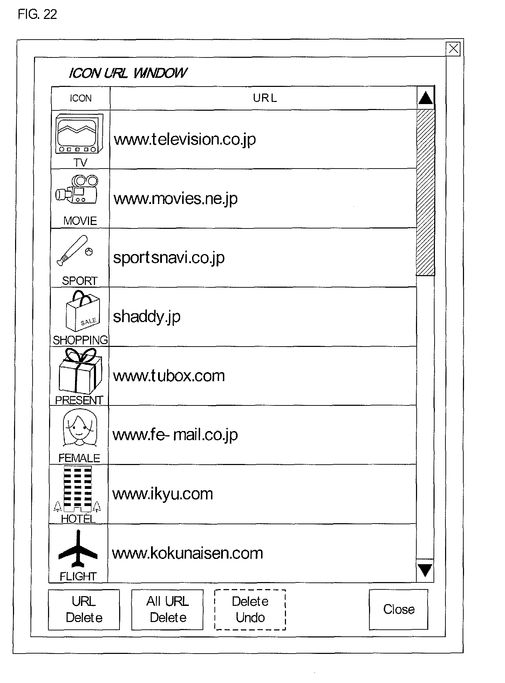

Fig. 22 is a diagram showing a screen displayed on a monitor if operation is performed using the paper controller;

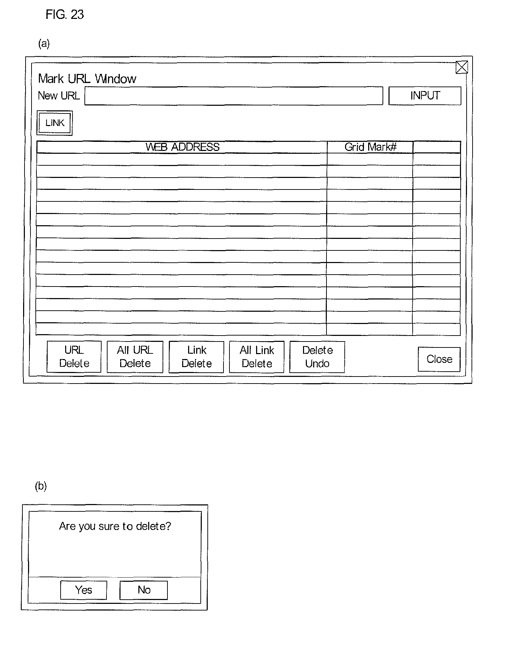

Fig. 23 is a diagram showing a screen displayed on a monitor if operation is performed using the paper controller;

Fig. 24 is a diagram explaining a table used in the embodiment, wherein Fig. 24(a) shows a local index table provided in a personal computer and Fig. 24 (b) shows a management server table provided in a management server;

Fig. 25 is a diagram explaining another embodiment of a paper controller and showing the paper controller including guide banks;

Fig. 26 is a diagram explaining another embodiment of a paper controller for bookmarks;

Fig. 27 is a cross-sectional view of the paper controller shown in Fig. 25;

Fig. 28 is an explanatory diagram showing a state in which the paper controller is separated from the guide banks;

Fig. 29 is a diagram showing another embodiment of a paper controller and showing the paper controller on which protrusions of raised dots are provided as well as dot patterns;

Fig. 30 is a diagram showing another embodiment of a paper controller and showing the paper controller on which protrusions of raised dots are provided as well as dot patterns;

Fig. 31 is a diagram explaining operation of the paper keyboard by causing the scanner to operate, wherein Fig. 31(a) is a diagram explaining a grid scratch operation, Fig. 31(b) is a diagram explaining a grid tapping operation, and Fig. 31(c) is a diagram explaining a grid sliding operation;

Fig. 32 is a diagram explaining operation of the paper keyboard by causing the scanner to operate, wherein Fig. 32(a) is a diagram explaining a grid grind right and Fig. 32(b) is a diagram explaining a grid grind left;

Fig. 33 is an explanatory diagram showing a state of using a mouse pad according to an embodiment of the present invention;

Fig. 34 is a diagram explaining the mouse pad, wherein each of Figs. 34(a) and 34(b) shows a circular mouse pad and each of Figs. 34(c) and 34(d) shows a rectangular mouse pad;

Fig. 35 is a diagram explaining a specific example of the mouse pad;

Fig. 36 is a diagram explaining a web page scrolling operation according to a browser program by a scanner operation using the mouse pad;

Fig. 37 is a diagram explaining a web page scrolling operation according to a browser program by a scanner operation using the mouse pad;

Fig. 38 is a diagram explaining another embodiment of a mouse pad and showing the mouse pad including annular grooves;

Fig. 39 is a diagram explaining another embodiment of a mouse pad and showing the mouse pad including radial grooves;

Fig. 40 is a diagram showing another embodiment of a paper keyboard and explaining the paper keyboard performing input by touch and release operation;

Fig. 41 is a diagram explaining a letter or character input method if a letter or character is input using the paper keyboard shown in Fig. 40;

Fig. 42 is a diagram explaining a specific example for inputting a letter or character using the paper keyboard shown in Fig. 40;

Fig. 43 is a diagram explaining a purpose of use as an assisting device for inputting a letter or character by voice recognition;

Fig. 44 is a diagram showing a scanner integral with an infrared remote controller;

Fig. 45 is a diagram explaining operation for transmitting an infrared signal to a television using a remote controller structured to be able to mount a scanner on a cradle;

Fig. 46 is a diagram explaining operation for transmitting an infrared signal to a settop box using a remote controller structured to be able to mount a scanner on a cradle;

Fig. 47 is a diagram explaining a paper controller including a function of a remote controller for a television and a function of controlling a settop box;

Fig. 48 is a diagram explaining a paper controller including a function of a remote controller for a television and a function of controlling a settop box;

Fig. 49 is a diagram explaining functions and operations of the paper controllers shown in Figs. 47 and 48;

Fig. 50 is a diagram explaining functions and operations of the paper controllers shown in Figs. 47 and 48;

Fig. 51 is a diagram explaining functions and operations of the paper controllers shown in Figs. 47 and 48;

Fig. 52 is a diagram explaining functions and operations of the paper controllers shown in Figs. 47 and 48;

Fig. 53 is a diagram explaining functions and operations of the paper controllers shown in Figs. 47 and 48;

Fig. 54 is a diagram explaining functions and operations of the paper controllers shown in Figs. 47 and 48;

Fig. 55 is a diagram explaining functions and operations of the paper controllers shown in Figs. 47 and 48;

Fig. 56 is a diagram explaining functions and operations of the paper controllers shown in Figs. 47 and 48;

Fig. 57 is a diagram explaining a paper controller for providing various services in a hotel;

Fig. 58 is a diagram explaining a paper controller for controlling a music or moving image player;

Fig. 59 is a diagram explaining a paper controller for controlling a music or moving image player;

Fig. 60 is a diagram explaining a method of using the paper controllers shown in Figs. 58 and 59;

Fig. 61 is a diagram showing a specific example displayed on a display if the paper controllers shown in Figs. 58 and 59 are used;

Fig. 62 is a diagram explaining functions and operations of the paper controllers shown in Figs. 58 and 59;

Fig. 63 is a diagram explaining functions and operations of the paper controllers shown in Figs. 58 and 59;

Fig. 64 is a diagram explaining functions and operations of the paper controllers shown in Figs. 58 and 59;

Fig. 65 is a diagram explaining functions and operations of the paper controllers shown in Figs. 58 and 59;

Fig. 66 is a diagram explaining functions and operations of the paper controllers shown in Figs. 58 and 59;

Fig. 67 is a diagram explaining functions and operations of the paper controllers shown in Figs. 58 and 59;

Fig. 68 is a diagram explaining a white board on which dot patterns are printed and showing a state in which a controller and images are displayed using a projector;

Fig. 69 is a longitudinal sectional view showing an enlarged sectional structure of the white board;

Fig. 70 is a diagram explaining a white board on which dot patterns are printed and showing a state in which icons are displayed using a projector;

Fig. 71 is a diagram explaining an acrylic board on which dot patterns are printed and showing a state in which an initial screen of icons is displayed using a rear projector;

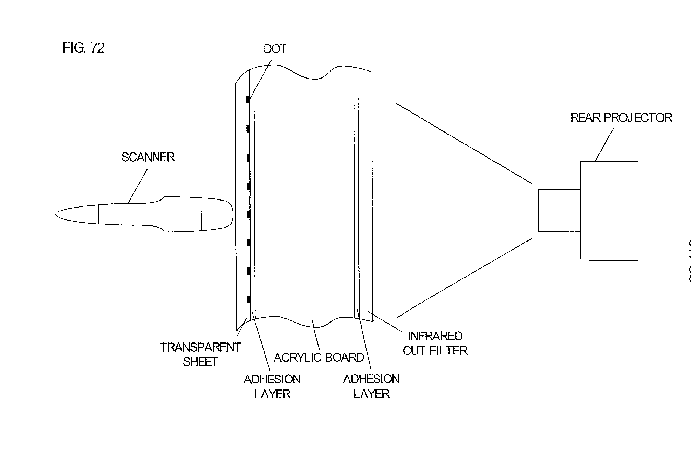

Fig. 72 is a longitudinal sectional view showing an enlarged sectional structure of the acrylic board;

Fig. 73 is a diagram explaining functions for creating the paper keyboard by a user himself or herself, wherein Fig. 73(a) shows images displayed on a display device and Fig. 73(b) shows a state in which the images are printed out to a sheet;

Fig. 74 is a diagram explaining GAM that is one embodiment of the present invention;

Fig. 75 is a diagram explaining GAM that is one embodiment of the present invention;

Fig. 76 is a diagram explaining an order system for a restaurant menu that is one embodiment of the present invention;

Fig. 77 is a diagram explaining an order system for a restaurant menu that is one embodiment of the present invention;

Fig. 78 is a diagram explaining a direction of a camera included in a scanner and inclination of the scanner;

Fig. 79 is a diagram (1) for explaining a method of measuring an inclination direction and an angle if performing a key input interrupt processing or a GUI operation by inclining the scanner;

Fig. 80 is a diagram (2) for explaining the method of measuring the inclination direction and the angle if performing the key input interrupt processing or the GUI operation by inclining the scanner;

Fig. 81 is a diagram for explaining a method of measuring an inclination direction if performing the key input interrupt processing or the GUI operation by inclining the scanner;

Fig. 82 is a diagram for explaining a method of measuring an inclination direction by using a Fourier function if performing the key input interrupt processing or the GUI operation by inclining the scanner;

Fig. 83 is a diagram for explaining a method of measuring an inclination direction by using an n-th degree equation if performing the key input interrupt processing or the GUI operation by inclining the scanner;

Fig. 84 is a diagram for explaining a paper keyboard in which XY coordinate values are used as a mouse pad;

Fig. 85 is a diagram for explaining a white board on which matrix blocks are formed;

Fig. 86 is a diagram for explaining a format of dot patterns used on the white board shown in Fig. 85;

Fig. 87 is a diagram showing a code value-to-command correspondence table of dot patterns used on the white board shown in Fig. 85;

Fig. 88 is a diagram for explaining functions of printing a desktop screen on a display and for creating a paper keyboard;

Fig. 89 is a diagram showing a code value-to-start program correspondence table generated if printing the desktop screen on the display and creating the paper keyboard; and

Fig. 90 is a diagram for explaining a format of dot patterns generated if printing the desktop screen on the display and creating the paper keyboard.

EXPLANATIONS OF LETTERS OR NUMERALS

| 1 | Dot pattern |
|---|---|
| 2 | Key dot |
| 3 | Information dot |
| 4 | Reference grid point dot |
| 5 | Virtual grid point |
| CPU | Central processing unit |
| MM | Main memory |
| USB I/F | USB interface |
| HD | Hard disk device |
| DISP | Display device (display unit) |
| KBD | Keyboard |
| NW I/F | Network interface |
| SCN | Scanner |

BEST MODE(S) FOR CARRYING OUT THE INVENTION

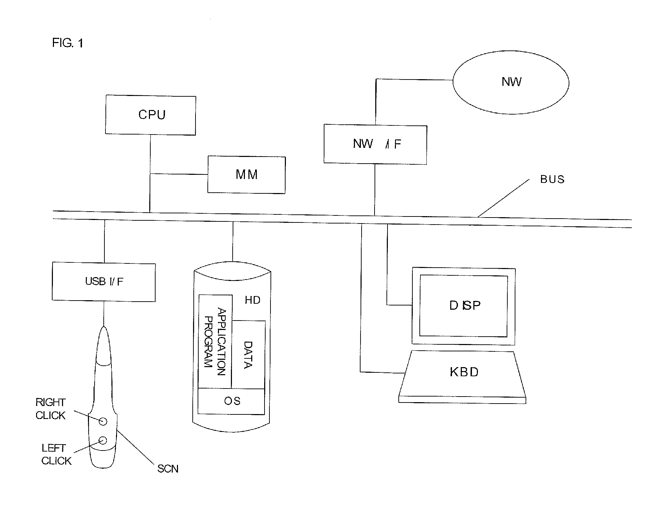

Fig. 1 is a hardware block diagram showing a configuration of a personal computer and a scanner.

As shown in Fig. 1, the personal computer includes a central processing unit (CPU) as a main constituent element, and also includes a main memory (MM), a hard disk device (HD) connected to a bus (BUS), a display device (DISP) serving as output means, and a keyboard (KBD) serving as input means.

The scanner (SCN) serving as imaging means is connected to the CPU via a USB interface (USB I/F).

Although an internal configuration of this scanner (SCN) is not shown in the drawings, the scanner (SCN) includes an infrared irradiation unit (LED), a filter cutting off predetermined wavelength components of a reflected light of an infrared light, and an imaging device (CCD or CMOS) imaging the reflected light. The scanner (SCN) is designed to be able to image the reflected light from a paper keyboard or a paper controller and to process dot patterns printed on a surface of a medium as image data.

A right click button and a left click button are provided on a side surface of the scanner (SCN). The right and left click buttons can realize a right click-on function and a left click-on function of a mouse, respectively. While Fig. 1 shows that the right click button is arranged in an upper position and the left click button is arranged in a lower position with a reader portion laid down, arrangement of the buttons is not limited to that shown in Fig. 1.

Although not shown, not only the display device (DISP) but also a printer, a loudspeaker and the like may be connected as output devices.

The bus (BUS) is connected to a general-purpose network (NW) such as the Internet via a network interface (NW I/F), whereby electronic map data, letter or character information, image information, voice information, moving image information, programs and the like can be downloaded from a server which is not shown.

Data such as application programs, e.g., a dot pattern analysis program used in an embodiment of the present invention, the electronic map data, the letter or character information, the image information, the voice information, the moving image information, and various tables as well as an operating system (OS) are registered in the hard disk (HD).

If the central processing unit (CPU) receives an input signal obtained by reading data on an imaged dot pattern on the surface of the medium from the scanner (SCN) and converting the imaged dot pattern data into a code or a coordinate value via the USB interface, the central processing unit (CPU) reads the electronic map data, the letter or character information, the image information, the voice information, the moving image information, the program or the like corresponding to the input signal from the hard disk (HD) and causes the read data to be output from the output device such as the display device (DSP) or a loudspeaker, etc. which is not shown.

The codes or coordinate value read by the scanner (SCN) will be described later in detail.

Although not shown in detail, the scanner (SCN) includes the infrared irradiation means (red LED), an IR filter, and an optical imaging deice such as a CMOS sensor or a CCD sensor, and functions to image the reflected light of the irradiated light irradiated on the surface of the medium. Dot patterns on the surface of the medium are printed in carbon ink and image and letter or character parts other than the dot patterns are printed in non-carbon ink.

Since this carbon ink has infrared light absorbing characteristics, only dot parts are imaged in black in the image picked up by the optical imaging device.

As can be seen, since only the dot patterns are printed in carbon ink, the dot patterns can be printed to be superimposed on an ordinary print without visually influencing the images and letters or characters printed in the other carbon ink.

While the carbon ink is mentioned as ink having the infrared absorbing characteristics, the type of ink used to print the dot patterns is not limited to the carbon ink but any other ink can be used as long as the ink reacts to a specific wavelength.

The image of the picked-up dot patterns thus read is analyzed by the central processing unit (CPU) in the scanner, converted into the coordinate values or code values, and transmitted to the personal computer via the USB cable and the USB interface (USB I/F).

The central processing unit (CPU) of the personal computer refers to a table showing the received coordinate values or code values and causes the electronic map data, the letter or character information, the image information, the voice information, or the moving image information corresponding to these coordinate values or code values to be output from the display device (DISP) or the loudspeaker which is not shown.

<Description of dot patterns GRID1>

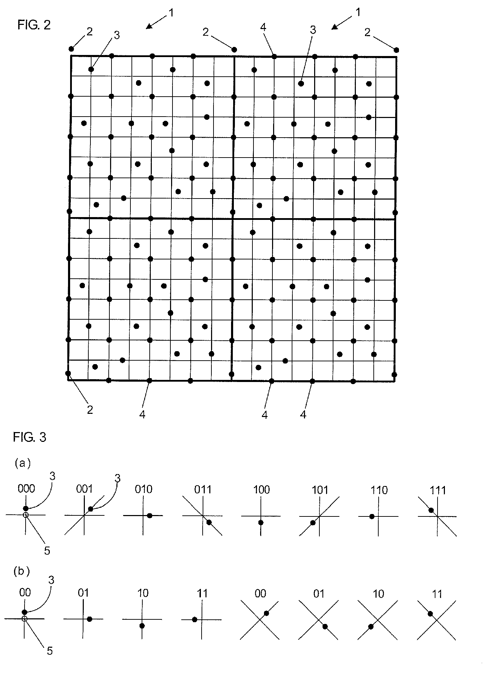

The dot patterns used in the present invention will next be described with reference to Figs. 2 to 7.

Fig. 2 is an explanatory view showing GRID1 that is one example of the dot patterns according to the present invention.

In these drawings, horizontal and vertical grid lines are given for the convenience of description and are not present on an actual printed surface. It is preferable that key dots 2, information dots 3, reference grid point dots 4 and the like constituting the dot patterns 1 are printed with carbon ink having infrared absorbing characteristics if the scanner serving as the imaging means includes the infrared irradiation means.

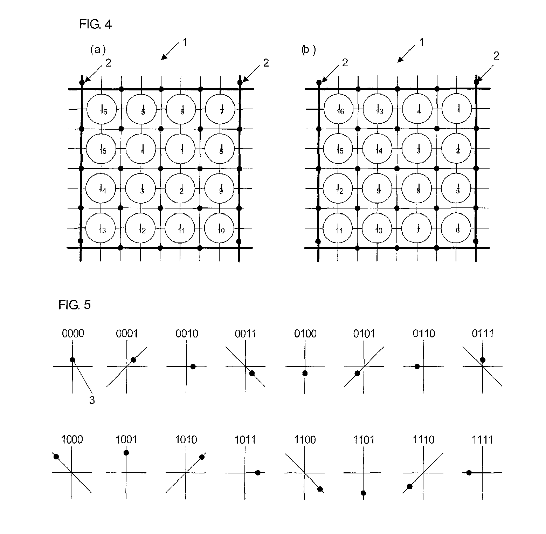

Fig. 3 is an enlarged view showing an example in which the information dots on the dot patterns and data bits defined by the information dots are displayed. Figs. 4(a) and 4(b) are explanatory views showing the information dots arranged to center around the key dots.

An information input and output method using the dot pattern according to the present invention includes generating the dot patterns 1, recognizing the dot patterns 1, and means for outputting information and a program from this dot pattern 1. Namely, the dot pattern 1 is fetched as image data by a camera, the reference grid point dots 4 are first extracted, the key dots 2 are next extracted based on the fact that no dots are given at positions where the reference grid point dots 4 are originally present, and the information dots 3 are then extracted. The dot pattern 1 is thereby digitized, an information area is extracted to convert information into numeric values, and the information and the program are output from this dot pattern 1 based on the numeric value information. For example, the information such as the voice information and the program from this dot pattern 1 are output to an information output device, a personal computer, a PDA, a portable telephone, or the like.

To generate each dot pattern 1 according to the present invention, very small dots for recognizing such information as the voice information, that is, the key dots 2, the information dots 3, and the reference grid point dots 4 are arranged according to a predetermined rule based on a dot code generation algorithm. As shown in Fig. 2, in a block of the dot patterns 1 representing information, 5×5 reference grid point dots 4 are arranged with reference to one of the key dots 2 and the information dots 3 are arranged around central virtual grid points 5 each surrounded by the four reference grid point dots 4. Arbitrary numeric value information is defined in this block. In the example of Fig. 2, it is shown that four blocks of the dot pattern 1 (indicated by thick lines) are arranged in parallel. Needless to say, the number of blocks of the dot pattern 1 is not limited to four.

One information and one program corresponding to one of the blocks can be output or one information and one program corresponding to a plurality of blocks can be output.

In relation to the reference grid point dots 4, if the camera fetches this dot pattern 1 as the image data, a distortion of a lens of the camera, aslant imaging, expansion or reduction of a sheet, the curved surface of the medium, and a distortion during printing can be corrected. Specifically, a correction function (Xn, Yn)=f(Xn', Yn') for transforming the four distorted reference grid point dots 4 to an original square is calculated, the information dots 3 are corrected using the same function, and vectors of correct information dots 3 are obtained.

If the reference grid point dots 4 are arranged on the dot pattern 1, a distortion deriving from the camera is corrected in the image data obtained by fetching the dot pattern 1 using the camera. Due to this, even if the image data on the dot pattern 1 is fetched by a popular camera with a high distortion factor lens, the dot pattern 1 can be accurately recognized. Furthermore, even if the dot pattern 1 is read with the camera inclined with respect to a surface of the dot pattern 1, the dot pattern 1 can be accurately recognized.

As shown in Fig. 2, the key dots 2 are dots obtained by arranging four reference grid point dots 4 present in four respective corners of each block to be shifted in a certain direction. The key dots 2 are representative points of the dot pattern 1 corresponding to one block representing the information dots 3. For example, the key dots 2 are obtained by shifting the reference grid point dots 4 present in four respective corners of each block of the dot pattern 1 by 0.1 mm upward. If the information dots 3 represent X and Y coordinate values, coordinate positions is at the points at which the key dots 2 are shifted downward by 0.1 mm. However, this numeric value is not limited to 0.1 mm and can be changed according to a magnitude of each block of the dot pattern 1.

The information dots 3 are dots for recognizing various pieces of information. The information dots 3 are arranged around each key dot 2 serving as a representative point and arranged at terminal points while the center surrounded by the four reference grid point dots 4 is set as the virtual grid point 5 and expressed by a vector starting at the virtual grid point 5 and terminating at the terminal points. For example, each of the information dots 3 is surrounded by the reference grid point dots 4. As shown in Fig. 3(a), the dot away from the virtual grid point 5 by 0.1 mm has a direction and a length expressed by a vector. Due to this, the dots are arranged in eight directions by rotating the dot at 45 degrees clockwise, whereby each dot expresses three bits. Accordingly, one block of the dot pattern 1 can express 3 bits$\times$16=48 bits.

Fig. 3(b) shows a method of defining the information dot 3 having two bits per grid on the dot pattern shown in Fig. 2, that is, defining two-bit information by shifting the information dot 3 in + direction or x direction. By doing so, one block can originally define 48-bit information. However, data can be given at intervals of 32 bits by dividing the block depending on purposes. Maximum $2^{16}$ (about 65,000) dot pattern formats can be realized by combinations of + direction and $\times$ direction.

In the example shown, one information dot 3 expresses three bits by arranging the information dot 3 in each of eight directions. However, the present invention is not limited to the example but each information dot 3 can express four bits by arranging the information dot 3 in each of 16 directions. Needless to say, arrangement can be variously changed.

A dot diameter of each of the key dots 2, the information dots 3, and the reference grid point dots 4 is preferably about 0.05 mm in view of aesthetic appearance, printing accuracy relative to paper quality, a resolution of the camera, and optimum digitalization.

It is also preferable that a distance between the reference grid point dots 4 is about 0.5 mm vertically or horizontally in view of an amount of necessary information relative to an imaging area and erroneous recognition of the various dots 2, 3, and 4. It is preferable that the key dot 2 is shifted from the information dot 3 by about 20 % of the grid distance in view of erroneous recognition of the reference grid point dots 4 and the information dots 3.

A distance between this information dot 3 and the virtual grid point 5 surrounded by the four reference grid point dots 4 is preferably about 15 % to 30 % of an interval between the adjacent virtual grid points 5. If the distance between the information dot 3 and the virtual grid point 5 is smaller than the interval, the dots are possibly recognized as a large bump to mar the aesthetic appearance of the dot pattern 1. Conversely, if the distance between the information dot 3 and the virtual grid point 5 is larger than the interval, it is difficult to recognize that the information dot 3 has a directivity of a vector centering around which of adjacent virtual grid points 5.

For example, as shown in Fig. 4(a), the interval between the adjacent grids where the information dots $I_1$ to $I_{16}$ are arranged clockwise to start at the center of the block is 0.5 mm, and 3 bits$\times$16=48 bits are expressed

in 2 mm$\times$2 mm.

In each block, sub blocks having independent information contents and free from influence of the other information contents can be further provided. Fig. 4(b) shows the sub blocks. The sub blocks [$I_1$, $I_2$, $I_3$, and $I_4$], [$I_5$, $I_6$, $I_7$, and $I_8$], [$I_9$, $I_{10}$, $I_{11}$, and $I_{12}$], and [$I_{13}$, $I_{14}$, $I_{15}$, and $I_{16}$] each constituted by four information dots 3 are designed so as to load independent data (3 bits$\times$4=12 bits) to the information dots 3. By thus providing the sub blocks, error check can be easily conducted for every sub block.

It is preferable that vector directions (rotational directions) of the information dots 3 are equally set at intervals of 30 degrees to 90 degrees.

Fig. 5 shows an example in which the information dots 3 and the data defined by the information dots 3 are displayed in the form of bits and shows another embodiment.

Furthermore, if two types of vectors, i.e., long and short vectors from the virtual grid point 5 surrounded by the reference grid point dots 4 are prepared for each information dot 3 and eight directions are set as each of the two vectors, the information dot 3 can express four bits. At this time, it is preferable that the long vector has a length about 25 % to 30 % of the distance between the adjacent virtual grid points 5 and that the short vector has a length about 15 % to 20 % thereof. However, a central distance between the long and short vectors of information dots 3 is preferably larger than a diameter of each of these dots.

The number of information dots 3 surrounded by the four reference grid points 4 is preferably one for aesthetic appearance. However, if the information amount is to be increased without considerations to the aesthetic appearance, then one bit is allocated to one vector and the information dots 3 are expressed as a plurality of dots, whereby more information can be expressed. For example, in case of a vector having eight directions of a concentric circle, the information dot 3 surrounded by the four grid dots 4 can express $2^8$ information and 16 information dots in one block can express $2^{128}$ information.

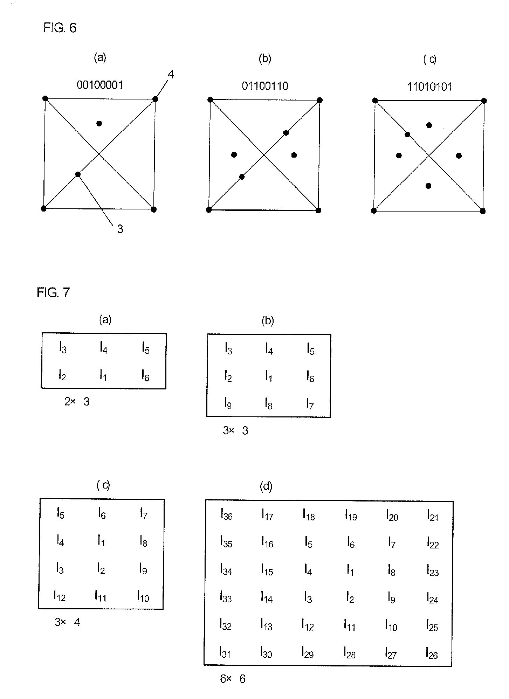

Fig. 6 shows an example in which the information dots and the data defined by the information dots are displayed in the form of bits. Fig. 6(a) shows that two dots are arranged, Fig. 6(b) shows that four dots are arranged, and Fig. 6(c) shows that five dots are arranged.

Fig. 7 shows modifications of the dot pattern. Fig. 7(a) is a schematic diagram of arranging six information dots, Fig. 7(b) is a schematic diagram of arranging nine information dots, Fig. 7(c) is a schematic diagram of arranging 12 information dots, and Fig. 7(d) is a schematic diagram of arranging 36 information dots.

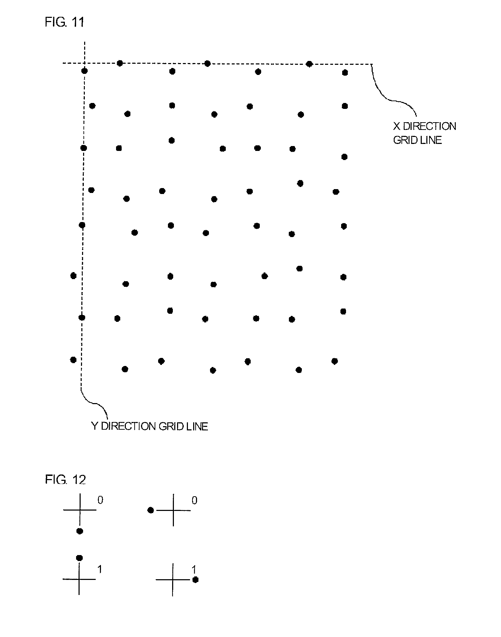

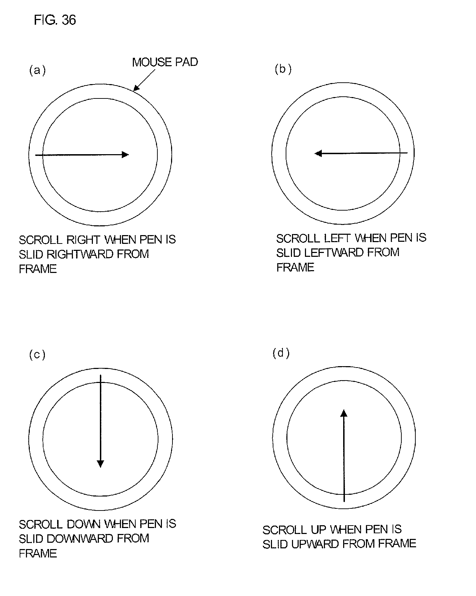

The dot pattern 1 shown in Figs. 2 and 4 shows an example of arranging 16 (4x4) information dots 3 in one block. However, the number of information dots 3 arranged in one block is not limited to 16 but can be variously changed. For example, according to the magnitude of an amount of necessary information or the resolution of the camera, six (2x3) information dots 3 are arranged in one block as shown in Fig. 7(a), nine (3x3) information dots 3 are arranged in one block as shown in Fig. 7(b), 12 (3x4) information dots 3 are arranged in one block as shown in Fig. 7(c), and 36 information dots 3 are arranged in one block as shown in Fig. 7(d).

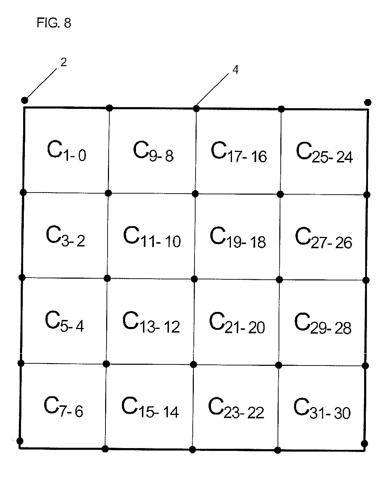

Figs. 8 to 9 are explanatory views showing the relation among dot patterns, code values, and identifiers.

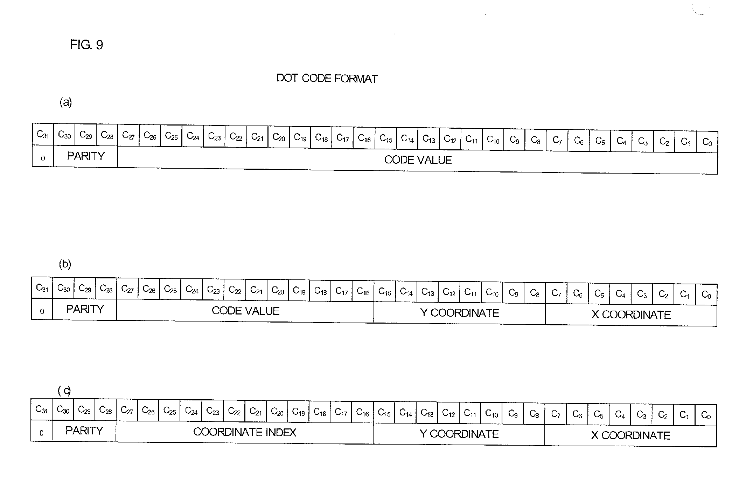

Each dot pattern is a dot pattern constituted by 4x4 block regions and each of the blocks is divided into $C_{1-0}$ to $C_{31-30}$ regions. Fig. 9 shows a dot code format of the respective regions.

Fig. 9(a) shows an instance in which the dot pattern is constituted only by code values, and the code values corresponding to the dots on the dot pattern in the regions shown in Fig. 8 are registered in $C_0$ to $C_{27}$, respectively. A parity is registered in $C_{28}$ to C30.

Fig. 9(b) shows an instance in which X and Y coordinates as well as code values are registered. Namely, in Fig. 8, X coordinates, Y coordinates, and code values are registered in $C_0$ to $C_7$, $C_8$ to $C_{15}$, and $C_{16}$ to $C_{27}$, respectively.

In this way, in the embodiment, the X and Y coordinates as well as the code values can be registered in the dot pattern.

Furthermore, Fig. 9(c) shows the format in which coordinate indexes as well as the X and Y coordinates are registered. The coordinate index is a region where a page number or the like of the paper sheet serving as the medium is registered and where an identifier or a page number for identifying the medium itself for which the X and Y coordinates are registered can be registered as the dot pattern.

As can be seen, flexible formats can be used for the dot patterns according to the present invention such as the format of registering only the code values, the format of registering the code values and the X and Y coordinates or the format of registering the X and Y coordinates as well as the coordinate indexes.

<Description of dot patterns GRID2>

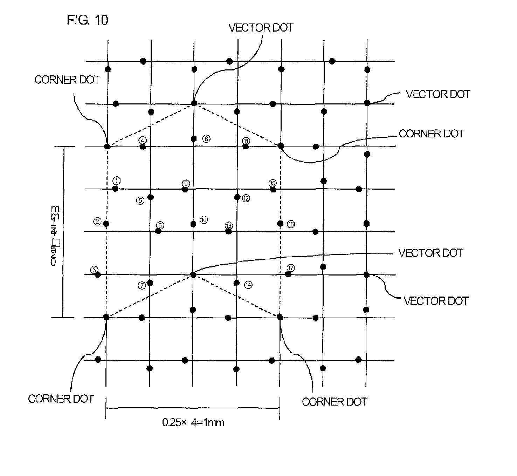

Basic principle of dot patterns according to GRID2 will next be described with reference to Figs. 10 to 14. The GRID2 is an algorithm for arranging dots using a difference method.

As shown in Fig. 10, grid lines (y1 to y7 and x1 to x5) are virtually sets at predetermined intervals in X and Y directions. Crosspoints between the grid lines are referred to as grid points. In the embodiment, four blocks (four grids), each of which is a minimum block (one grid) surrounded by the four grid points are arranged, are arranged in each of X and Y directions, that is, 4x4=16 blocks (16 grids) are arranged in X and Y directions and one information block is constituted by the 16 blocks (16 grids). The definition that the information block is constituted by a unit of 16 blocks is only one example, and it goes without saying that one information block can be constituted by an arbitrary number of blocks.

Four corner points constituting a rectangular region of this information block are assumed as corner dots (x1y1, x1y5, x5y1, and x5y5) (circled dots in Fig. 10). The four corner dots are made to coincide with the grid points, respectively.

By discovering the four corner dots coincident with the respective grid points, the information block can be recognized. Nevertheless, even if the information block can be recognized, a direction of the information block cannot be recognized only with the corner dots. If the direction of the information block cannot be recognized, the following problem occurs, for example. If the same information block is rotated by 90, -90 or 180 degrees and scanned, information on the information block completely differs from that on the scanned block even with the same information block.

Accordingly, vector dots (key dots) are arranged at grid points of a rectangular region inside or adjacent to the rectangular region of the information block. In Fig. 10, a dot (x0y3) surrounded by a triangle is the key dot (vector dot) and the key dot (vector dot) is arranged at a first grid point vertical to a midpoint of the grid line constituting a upper side of the information block. In the same way, the lower key dot of the information block is arranged at a first grid point (x4y3) vertical to a midpoint of the grid line constituting a lower side of the information block.

In the embodiment, an inter-grid distance is set to 0.25 mm. Therefore, one side of the information block is 0.25 mmx4 grids=1 mm. An area of the information block is 1 mm×1 mm=1 $mm^2$. 14-bit information can be stored in this range. If two bits out of the 14 bits are used for control data, 12-bit information can be stored therein. The setting of the inter-grid distance to 0.25 mm is only one example and can be freely changed in a range, for example, from 0.25 mm to 0.5 mm or more.

In the GRID2, information dots are arranged alternately to be shifted from a grid point in the x or y direction. A diameter of each information dot is preferably about 0.03 mm to 0.05 mm or more and a shift amount of each information dot from the grid point is preferably set to be about 15 % to 25 % of the inter-grid distance. Since this shift amount is also an example and is not always set to fall within this range, generally speaking, if the shift amount is larger than 25 %, the dot pattern tends to visually appear as a design.

Namely, since the way in which the information dot is shifted from the grid point vertically (in the y direction) alternates with the way in which the information dot is shifted from the grid point horizontally (in the x direction), uneven arrangement distribution of dots is eliminated and the whole dots do not appear like moiré or design. It is, therefore, possible to keep the aesthetic appearance of surface of the print sheet.

By using such principle of arrangement, the information dots are always arranged alternately on the grid lines in the y direction (see Fig. 11). This follows that it suffices to discover grid lines alternately arranged in the y direction or the x direction so as to read the dot patterns, thereby making it advantageously possible to simplify and accelerate a calculation algorithm for an information processing device during recognition.

Moreover, if the dot patterns are deformed by the curvature of the surface of the paper sheet or the like, the grid lines are often not accurately linear. However, the grid lines are gently curved to be approximate to lines and it is, therefore, relatively easy to discover grid lines. In this respect, the algorithm is robust over the deformation of the surface of the paper sheet and deviation and distortion of the reading optical system.

Fig. 12 explains the meaning of the information dot. In Fig. 12, symbol + denotes a grid point and symbol • denotes a dot (an information dot). It is assumed that the information dot arranged in -y direction with respect to the grid point signifies 0 and that the information dot arranged in +y direction signifies 1.

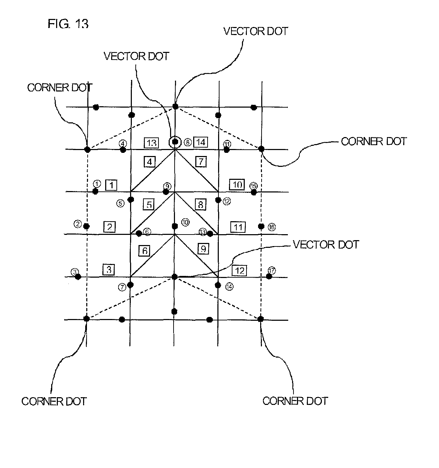

Referring to Fig. 13, a specific arrangement state of information dots and a read algorithm will be described.

In Fig. 13, an information dot denoted by encircled number 1 (hereinafter, "information dot (1)") is shifted in + direction with respect to a grid point (x2y1) and, therefore, signifies "1". An information dot (2) (denoted by encircled number 2 in Fig. 13) is shifted in +y direction with respect to a grid point (x3y1) and, therefore, signifies "1". An information dot (3) (denoted by encircled number 3 in Fig. 13) is shifted in -x direction with respect to a grid point (x4y1) and, therefore, signifies "0". An information dot (4) (denoted by encircled number 4 in Fig. 13) signifies "0" and an information dot (5) (denoted by encircled number 5 in Fig. 13) signifies "0"

In case of the dot patterns shown in Fig. 13, information dots (1) to (17) have the following values.

$$(1)=1$$

$$(2)=1$$

$$(3)=0$$

$$(4)=0$$

$$(5)=0$$

$$(6)=1$$

$$(7)=0$$

$$(8)=1$$

$$(9)=0$$

$$(10)=1$$

$$(11)=1$$

$$(12)=0$$

$$(13)=0$$

$$(14)=0$$

$$(15)=0$$

$$(16)=1$$

$$(17)=1$$

In the embodiment, the values of the information bits are calculated also using an information acquisition algorithm based on the difference method to be described later. Alternatively, the information dots can be output as information bits without processing them. In another alternative, a true value may be calculated for each of the information bits by calculating a value in a security table to be described later.

Referring to Fig. 13, an information acquisition method using the difference method based on the dot patterns according to the embodiment will next be described.

In the description of the embodiment, a parenthesized number means a number surrounded by a circle (an encircled number) in Fig. 13 and a bracketed number means a number surrounded by a box in Fig. 13.

In the embodiment, values of 14 bits in the information blocks are expressed by differences from adjacent information dots, respectively. For example, a first bit is obtained by calculating the difference between the information dot (1) and the information dot (5) located to be away from the information dot (1) by +1 grid in x direction. Namely, [1]=(5)-(1). In this case, the information dot (5) signifies "0" and the information dot (1) signifies "1", so that the first bit [1] signifies 0-1, that is, "1". Likewise, a second bit [2] is expressed as [2]=(6)-(2) and a third bit [3] is expressed as [3]=(7)-(3).

In the following difference formula, a value is assumed to be an absolute value.

$$[1]=(5)-(1)=0-1=1$$

$$[2]=(6)-(2)=1-1=0$$

$$[3]=(7)-(3)=0-0=0$$

Next, a fourth bit [4] is obtained by calculating the difference between the information dot (8) right under the vector dot and the information dot (5). Accordingly, the fourth bit [4] to a sixth bit [6] are obtained by calculating differences from the information dots located to be away by one grid in +x direction and one grid in +y direction, respectively.

By doing so, the fourth bit [4] to the sixth bit [6] can be calculated by the following equations, respectively.

$$[4]=(8)-(5)=1-0=1$$

$$[5]=(9)-(6)=0-1=1$$

$$[6]=(10)-(7)=1-0=1$$

Furthermore, a seventh bit [7] to a ninth bit [9] are obtained by calculating differences from the information bits located to be away by one grid in +x direction and one grid by -y direction, respectively.

By doing so, the seventh bit [7] to the ninth bit [9] can be calculated by the following equations, respectively.

$$[7]=(12)-(8)=0-1=1$$

$$[8]=(13)-(9)=0-0=0$$

$$[9]=(14)-(10)=0-1=1$$

A tenth bit [10] to a twelfth bit [12] are obtained by calculating differences from the information dots located to be away by 1 grid in +x direction and expressed by the following equations, respectively.

$$[10]=(15)-(12)=0-0=0$$

$$[11]=(16)-(13)=1-0=1$$

$$[12]=(17)-(14)=1-0=1$$

Finally, a thirteenth bit [13] and a fourteenth bit [14] are obtained by calculating differences between the information dot (8) and the information dots located to be away from the information dot (8) by +1 grid and -1 grid in x direction and expressed by the following equations, respectively.

$$[13]=(8)-(4)=1-0=1$$

$$[14]=(11)-(8)=1-1=0$$

While the first bit [1] to the fourteenth bit [14] may be used as read data, that is, as true values, the security table corresponding to the 14 bits may be provided to guarantee security and the true values may be obtained by defining key parameters corresponding to the 14 bits and making addition, multiplication or the like of the key parameters with respect to the read data, respectively.

In this case, a true value T can be calculated by Tn=[n]+Kn (n: 1 to 14, Tn: true value, [n]: read value, and Kn: key parameter). The security table storing therein such key parameters can be registered in a ROM included in the optical reading device.

For example, the following key parameters are set in the security table.

$$K_1=0$$

$$K_2=0$$

$$K_3=1$$

$$K_4=0$$

$$K_5=1$$

$$K_6=1$$

$$K_7=0$$

$$K_8=1$$

$$K_9=1$$

$$K_{10}=0$$

$$K_{11}=0$$

$$K_{12}=0$$

$$K_{13}=1$$

$$K_{14}=1$$

In this case, true values T1 to T14 can be calculated as follows, respectively.

$$T_1=[1]+K_1=1+0=1$$

$$T_2=[2]+K_2=0+0=0$$

$$T_3=[3]+K_3=0+1=1$$

$$T_4=[4]+K_4=1+0=1$$

$$T_5=[5]+K_5=1+1=0$$

$$T_6=[6]+K_6=1+1=0$$

$$T_7=[7]+K_7=1+0=1$$

$$T_8=[8]+K_8=0+1=1$$

$$T_9=[9]+K_9=1+1=0$$

$$T_{10}=[10]+K_{10}=0+0=0$$

$$T_{11}=[11]+K_{11}=1+0=1$$

$$T_{12}=[12]+K_{12}=1+0=1$$

$$T_{13}=[13]+K_{13}=1+1=0$$

$$T_{14}=[14]+K_{14}=0+1=1$$

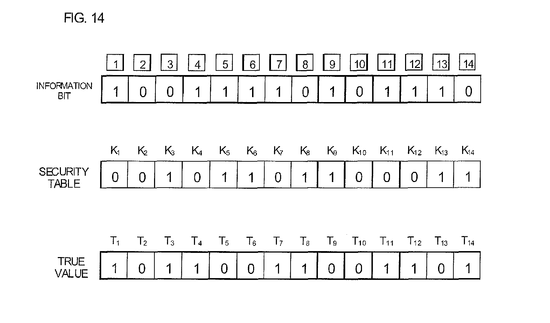

Fig. 14 shows the correspondence among the information bits, the security table, and the true values described above.

The instance of obtaining the information bits from the information dots and obtaining the true values while referring to the security table has been described. Conversely, if dot patterns are generated from true values, an n-th bit value [n] can be calculated by [n]=Tn-Kn.

By way of example, if T1=1, T2=0, and T3=1, the first bit [1] to the third bit [3] can be calculated by the following equations.

$$[1]=1-0=1$$

$$[2]=0-0=0$$

$$[3]=1-1=0$$

The first bit [1] to the third bit [3] are expressed by the following difference equations, respectively.

$$[1]=(5)-(1)$$

$$[2]=(6)-(2)$$

$$[3]=(7)-(3)$$

If initial values of (1)=1, (2)=1, and (3)=0 are given, the dots (5) to (7) can be calculated as follows.

$$(5)=(1)+[1]=1+1=0$$

$$(6)=(2)+[2]=1+0=1$$

$$(7)=(3)+[3]=0+0=0$$

Although not described, values of the dots (8) to (14) can be calculated similarly and the dots can be arranged based on the values, respectively.

It is to be noted that the initial values of the dots (1) to (3) are arbitrary random numbers (0 or 1).

Namely, by adding the values of the information bits [1] to [3] to the allocated initial dots (1) to (3), the values of the dots (5) to (7) arranged on next y direction grid lines can be calculated. Likewise, by adding the values of the information bits [4] to [6] to the values of the dots (5) to (7), the values of the dots (8) to (10) can be calculated. Furthermore, by adding the values of the information bits [7] to [9] to those values, the values of the dots (12) to (14) can be calculated. Furthermore, if the values of the information bits [10] to [12] are added to those values, the values of the dots (15) to (17) can be calculated.

The values of the dots (4) and (11) can be calculated by subtracting the information bit [13] from the calculated dot (8) and adding the information bit [14] to the dot (8), respectively.

In this way, according to the embodiment, the arrangement of dots on a grid line yn are decided based on the arrangement of dots on a grid line y(n-1) and the decisions are sequentially repeated, thereby deciding the arrangement of the entire information dots.

(Paper keyboard)

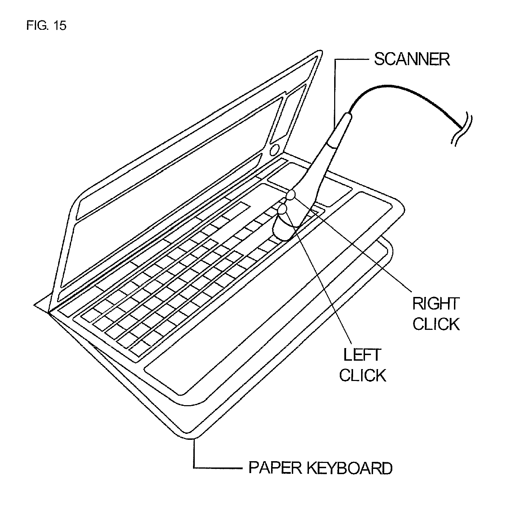

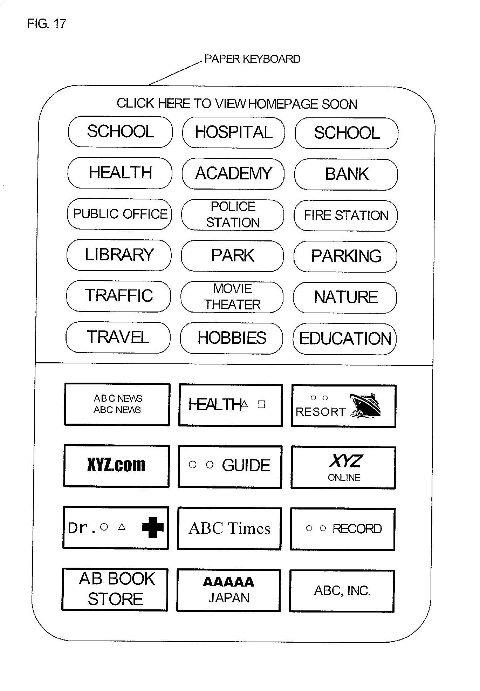

Figs. 15 to 17 are diagrams explaining a paper keyboard as an embodiment of the present invention.

Fig. 15 is an explanatory diagram showing the paper keyboard performing various inputs/operations performed by the personal computer by causing the scanner (SCN) to read the dot patterns printed on one surface of the paper keyboard serving as the medium (surface of the medium). This paper keyboard has a book form with one major side closed. A design of a keyboard (keytop) is printed on each page surface of the book.

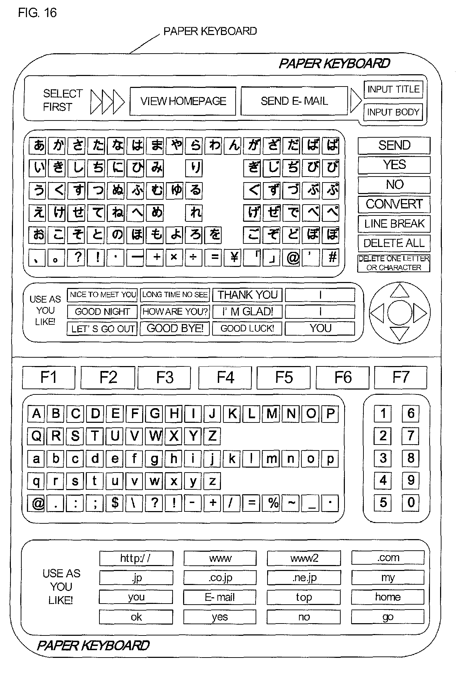

Specifically, as shown in Fig. 16, a plurality of rectangular image regions which imitate a keytop of the personal computer and in which Japanese syllabary characters (*hiraganas*) or alphabetical letters (e.g., "a in *hiragana*", "i in *hiragana*", "A", and "B") or words consisting of a plurality of letters or characters (e.g., "SEND" and "YES") are printed is provided.

Code values of interrupt keys corresponding to the respective letters or characters (in the rectangular image region for one letter or character) are registered as dot patterns in each of the rectangular image regions.

The code values of the interrupt keys are made to coincide with code values defined for the letters or characters on a keytop of an actual hardware keyboard, respectively.

Namely, if the scanner (SCN) reads the dot pattern of the rectangular image region in which the alphabetical letter "A" is printed, the code value of the interrupt key generated when a key "A" on the hardware keyboard is depressed is input to the personal computer (information processing device).

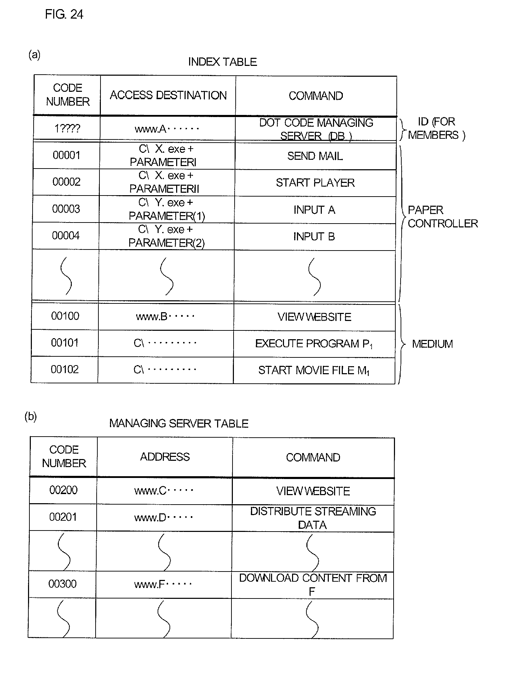

As a function that the hardware keyboard does not include, words such as greetings, e.g., "NICE TO MEET YOU", "LONG TIME NO SEE", and "THANK YOU" are printed as rectangular image regions and code value strings of character strings corresponding to the words are printed as dot patterns in the respective regions. While the character strings may be printed as the dot patterns of the code values allocated to the keytop as they are, an input instruction code value with predetermined digits may be printed as a dot pattern and corresponding character input information may be held, in advance, in an index table to be described later with reference to Fig. 24.

In Fig. 16, rectangular image regions in which such words as "VIEW WEBSITE" and "SEND E-MAIL" are printed are printed. A code value of a startup command of a browser program is printed in the former case whereas a code value of a startup command of a mailer program is printed in the latter case.

In Fig. 16, the keyboard arrangement is in the order of the Japanese syllabary or in alphabetical order. However, the keyboard arrangement is not limited to the arrangement shown in Fig. 16 but may be identical to a JIS arrangement keyboard.

In Fig. 16, in the respective rectangular image regions on the paper keyboard, the above-stated coordinate values as well as the code values are registered as dot patterns.

If a dot pattern on the surface of the paper keyboard (surface of the medium) is to be imaged, the code value can be used in place of keyboard input or the coordinate value can be used in place of mouse or tablet input. As for whether the code value or the coordinate value is to be used, a rectangular image region in which characters "CODE/COORDINATE SWITCH" are displayed may be provided on the paper keyboard, a code value for switching over between the use of the code value and the use of the coordinate value may be printed as a dot pattern in this region so that the input can be switched over between the input of the code value and the input of the coordinate value whenever this rectangular image region is scanned.

Moreover, the code values printed in the rectangular image regions as dot patterns can be used as code values having a different meaning from that of the code values depending on a reading procedure.

For example, if a coordinate value read image is changed such as an instance in which the dot pattern in the "A" rectangular image region is continuously read within predetermined time (the scanner is tapped on the "A" rectangular image region), that is, a tip end of the scanner is repeatedly moved vertically so as to continuously contact with and separate from the surface of the medium or an instance in which the scanner is subjected to a scratch operation, that is, the scanner is caused to rub the keytop image either longitudinally or transversely, the scanner can be turned into a state similar to a state of depressing a Shift Key on the hardware keyboard.

Specifically, if the scanner (SCN) images a lowercase "a", the code value of the interrupt key corresponding to the letter "A" is input to the personal computer, and then the scanner (SCN) is tapped, then the central processing unit (CPU) of the personal computer detects a change in the image picked up by the scanner based on a program, converts the interrupt code value corresponding to the lowercase "a" into the interrupt code value corresponding to the uppercase "A", and feeds the resultant interrupt code value to an application program such as a word processor.

Moreover, if the tapping operation is performed, it may be detected that the tapping operation is performed by reading the dot pattern only the first time and then detecting only intensities of light recognized by the CMOS sensor of the scanner (SCN).

Besides such a tapping operation, the central processing unit (CPU) of the personal computer may perform the following operation before feeding the code value to an application program: if the scanner is stopped on one rectangular image region for certain time or longer to read the dot pattern, the central processing unit (CPU) determines that the letter is the uppercase "A"; if the scanner is stopped thereon for the certain time or less, the central processing unit (CPU) determines that the letter is the lowercase "a"; the central processing unit (CPU) feed the code value to an application program.

Moreover, the input can be switched over between the input of the uppercase and the input of the lowercase and the code value can be fed to the application program in such an instance as that in which the coordinate value changes while reading the same code value on the rectangular image region (the scratch operation of the scanner) or in which the inclination of the scanner is detected by a change in the distribution of intensities of light in the range of the picked-up image.

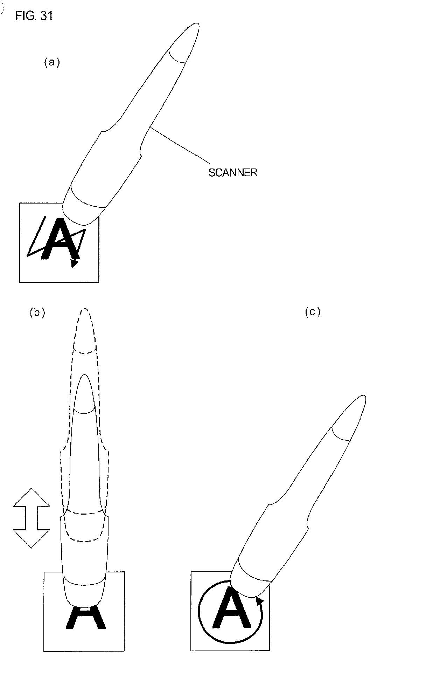

Fig. 31(b) is a diagram explaining this grid tapping operation.

Namely, the grid tapping operation of the scanner (SCN) is placing the scanner perpendicularly to the map, vertically moving the scanner, and tapping an icon (a keytop image of the alphabetical letter "A" in this example) on the surface of the medium.

Figs. 31(a) and 31(c) are explanatory diagrams showing the grid scratch operation of the scanner (SCN).

The grid scratch operation means an operation for moving the scanner on the map so that the scanner rubs the surface of the map a plurality of times. A user (an operator) performs the grid scratch operation on the icon (the keytop image of the alphabetical letter "A" in this example) on the surface of the medium. This operation enables the letter input to the application program to be switched over between the interrupt code of the uppercase "A" and that of the lowercase "a".

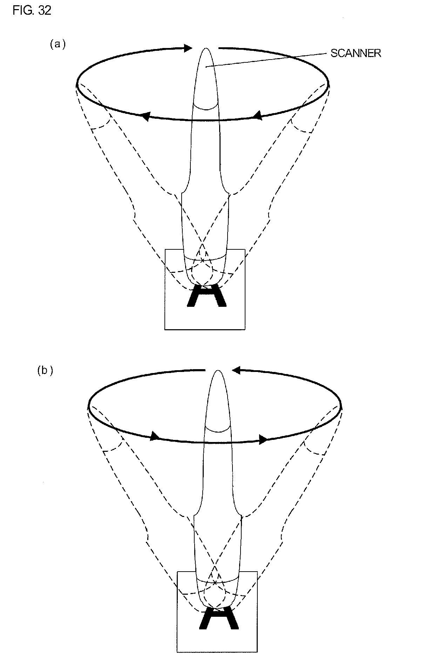

Fig. 32 is an explanatory diagram showing a grid grind operation of the scanner (SCN).

The grid grind operation means an operation for rotating a rear end of the scanner (an upper end of the scanner in Fig. 32) while the same icon (the keytop image of the alphabetical letter "A" in this example) on the surface of the medium is imaged. To perform grid grind in right direction with respect to the surface of the sheet (clockwise) may be referred to as "grid grind right", and to perform grid grind in left direction (counterclockwise) may be referred to as "grid grind left".

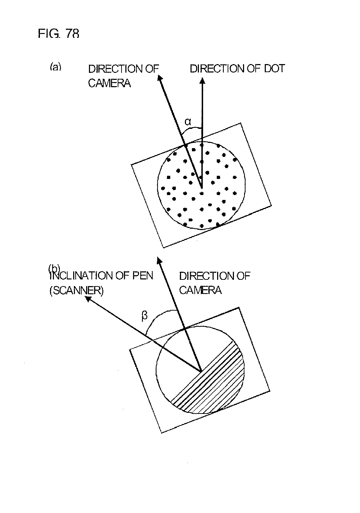

As shown in Fig. 78, if the central processing unit recognizes light and shade of the image picked up by the scanner and light and shade regions change with respect to an imaging center, the central processing unit can recognize that the scanner operates as shown in Fig. 32. Keyboard shift, control, conversion of the input letter and the like can be performed by such a scanner operation.

Further, another example of the operation in which the light and shade of the image picked up by the scanner change is a grid pump operation (not shown). The grid pump operation means an operation for repeatedly pushing the scanner forward or backward.

Fig. 78 is a diagram explaining the relation between inclination and angle of the scanner.

The dot patterns on keytop images are printed to be superimposed in the same direction as the longitudinal direction of the surface of the sheet. As shown in Fig. 78(a), an angle between the direction of the dot pattern and that of the camera within the scanner is assumed as $\alpha$. As shown in Fig. 78(b), an angle between the inclination of the scanner and the direction of the camera when the user inclines the scanner is assumed as $\beta$. In this case, an angle $\gamma$ between the direction of the dot pattern and the inclination of the scanner corresponds to an angle at which the scanner is inclined with respect to the keytop images. Namely, the angle $\gamma$ is expressed as follows.

$$\gamma = \alpha + \beta$$

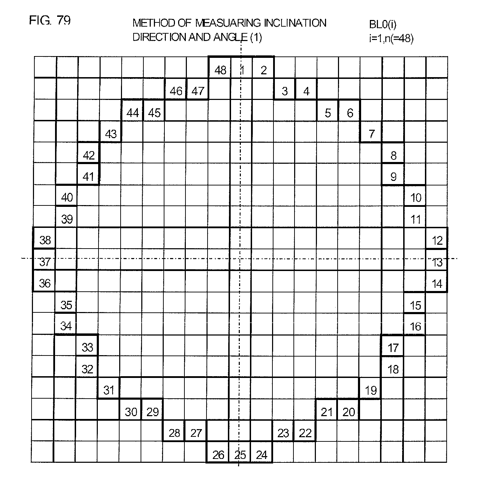

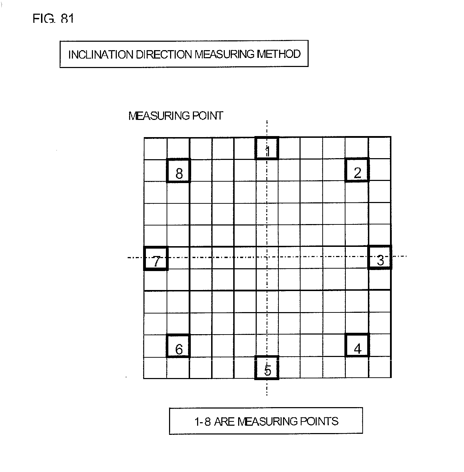

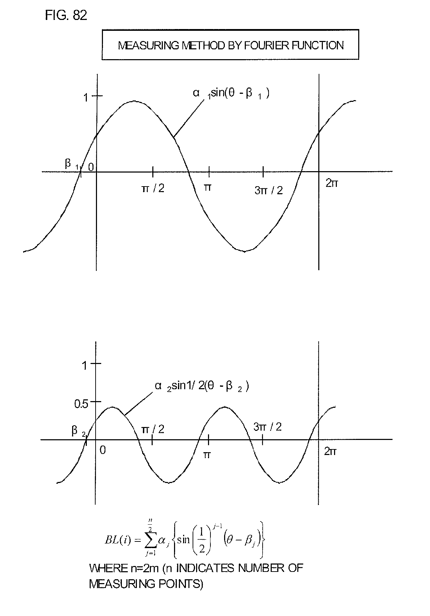

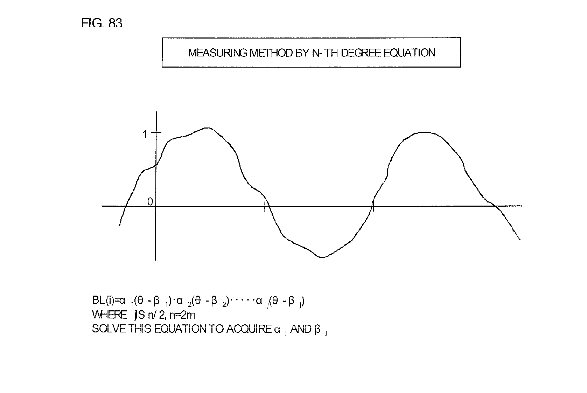

Figs. 79 to 83 are diagrams explaining calculation methods for the light and shade of the image picked up by the scanner and the inclination direction for the scanner operations stated above.

As shown in Fig. 78(b), the inclination of the scanner (imaging unit) with respect to the vertical direction of the surface of the medium (keytop images) can be recognized by brightness difference in an imaging field of view of the scanner.

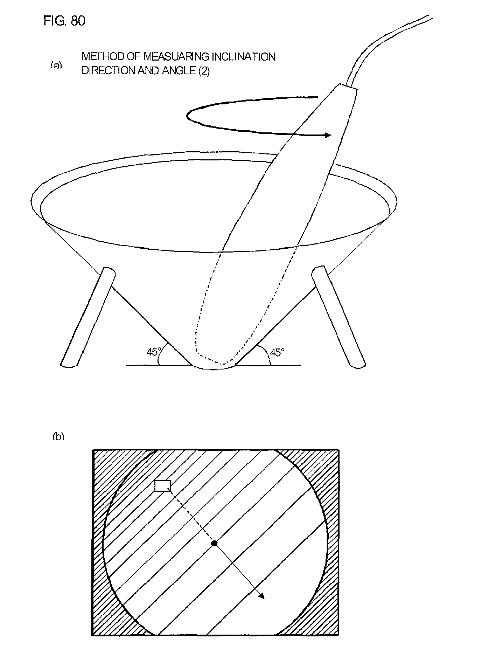

As shown in Fig. 80(a), the inclination direction of the scanner corresponds to an angle between the scanner and the map. The direction in which the user inclines the scanner can be obtained by the following method.

First, calibration is carried out. The scanner is placed to be perpendicular to the map, in which state brightness of cells 1 to 48 shown in Fig. 79 are measured. Fig. 79 shows a peripheral region of the scanner. The measured brightness is assumed as BL0(i), were i is a value of a cell the brightness of which is measured. For example, the brightness of the 24th cell is denoted by BL0(24).

Two LEDs are disposed in the scanner. Due to this, even if the scanner is placed to be perpendicular to the map, the cells near the LEDs and cells at positions away from the LEDs differ in brightness. That is why calibration is carried out.

Next, brightness is measured if the scanner is inclined. As shown in Fig. 80(a), brightness of the cells 1 to 48 are measured if the scanner is inclined in a certain direction and the brightness of a cell i is assumed as BL(i). The difference between BL(i) and BL0(i) is calculated for each of the cells. Further, the following calculation is made.

$$Max(BL0(i)-BL(i))$$

If the scanner is inclined, a region in an opposite direction to the inclination direction is dark. Since the LEDs are also inclined in the direction in which the scanner is inclined, the distance between the region in the opposite direction to the inclination direction and the LEDs is farther from that between the region in the inclination direction and the LEDs. Accordingly, as shown in Fig. 80(b), the scanner is inclined at a position opposite in direction from the cell having the maximum difference.

As a result, the direction in which the scanner is inclined is decided.

Referring to Figs. 79 to 80, another method of deciding the inclination direction and the angle by carrying out calibration will next be described.

First, calibration is carried out. The scanner is placed to be perpendicular to the map, brightness of the cells 1 to 48 shown in Fig. 79 are measured, and the brightness of the cell i is assumed as BL0(i).

The scanner is then inclined at 45 degrees and makes a revolution with a pen tip set as an axis as shown in Fig. 80. In this case, the brightness of the cell i if the scanner is located at the position of the cell i is assumed as BL45(i). The brightness BL45(i) of the cells 1 to 48 are measured. Through these operations, the calibration is finished.

Next, the brightness of the cells 1 to 48 if the user inclines the scanner are measured and the brightness of the cell i is assumed as BL(i), where i = 1 and n (= 48).

For example, as shown in Fig. 24(a), as the access destination, a set of a drive name, a startup file, and a parameter is registered. Specifically, if the dot pattern read from the paper controller is the code number 00001, then an email application program corresponds to the code number 00001 and a command signifying creation of a new email is set as a parameter. The email program is thereby started, thus turning into a state in which the new email can be created.

Further, if the dot pattern read from the paper controller is the code number 00002, it is designated to start a movie player and player software registered in the personal computer is started.

Moreover, a character string can be directly input from the paper controller similarly to a physical keyboard. For example, if the code number 00003 is read, then an alphabetic letter "A" or "B" is input for a specific application and the character code is fed to the application.

As an example of using the third region, if a dot pattern printed on a mail-order catalog or the like (medium) is read and the dot pattern is the code number 00100 or greater, an access to the URL corresponding to the code number (VIEW WEBSITE), program execution, and startup (play) of a movie file are performed.

In this case, if the scanner reads the dot pattern and converts the dot pattern into the code number and the code number is not present in the index table, the central processing unit (CPU) accesses the management server through the network.

The management server includes a user database for managing personal information and a server-side index table (see Fig. 24(b)). Personal information corresponding to the code number read from each tag is registered in the server-side personal information management table which is not shown. If personal information is not registered for the code number having 1 assigned to the first digit, a central processing unit (CPU) of the management server downloads an initial registration program to the personal computer according to the program. According to this initial registration program, personal information on the user such as an address, a name, and a telephone number is input. The user database of the management server is thereby generated based on the input personal information.

Namely, the personal information corresponding to a tag is registered in the user database of the management server, thereby making it possible to easily access the network and perform authentication processing such as settling.

A table similar to the local index table described with reference to Fig. 24(a) is also generated in the management server table of the management server.

This management server table is a table for complementing the code numbers registered in the local index table. If the code number obtained as a result of scanner reading is not present in the local index table, the management server table is accessed.

For example, if the result of the scanner reading indicates a code number 00200 that is not present in the local index table, the central processing unit (CPU) of the personal computer accesses the management server through the network according to the program and refers to the management server table.

In the management server table, the code number 00200 defines an access to a predetermined URL (VIEW WEBSITE), so that the personal computer executes access to the URL (VIEW WEBSITE).

If the code number is, for example, 00201 and means streaming distribution, the personal computer accesses to a distribution server to download streaming data to the index table.

In this case, the personal computer downloads not only the streaming data but also contents of this management server table to the index table of the personal computer.

Subsequently, therefore, even if the result of scanner reading indicates the code number 00201, the personal computer can perform processing only using the local index table without access to the management server table.

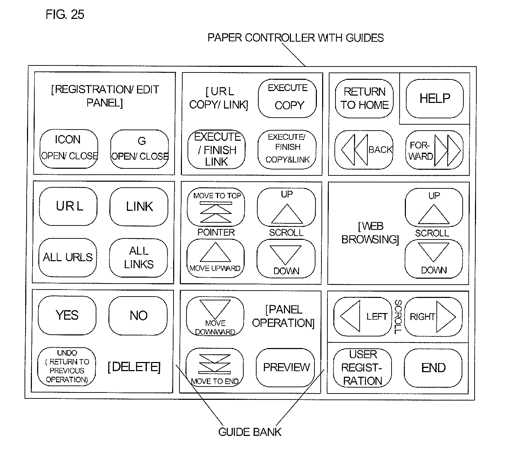

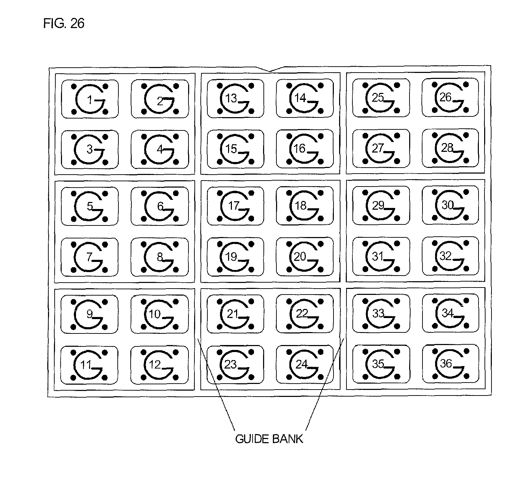

Figs. 25 to 28 are diagrams showing a paper controller according to another embodiment.

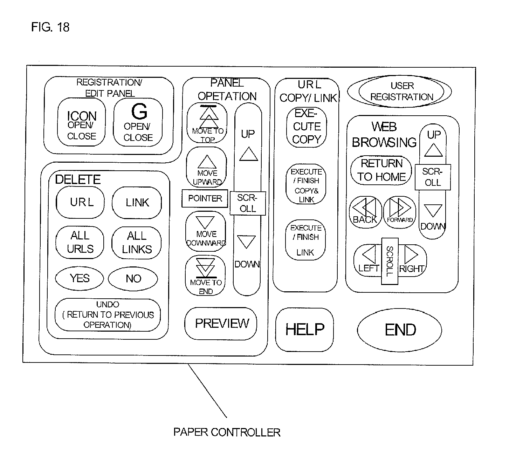

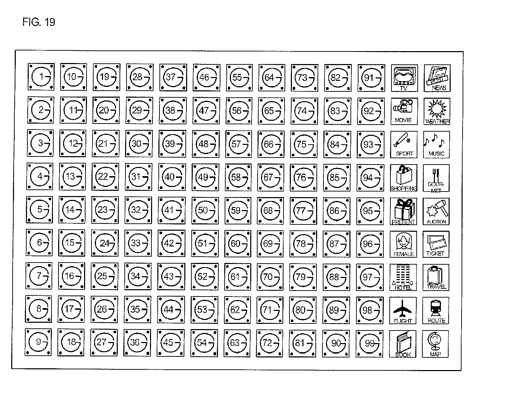

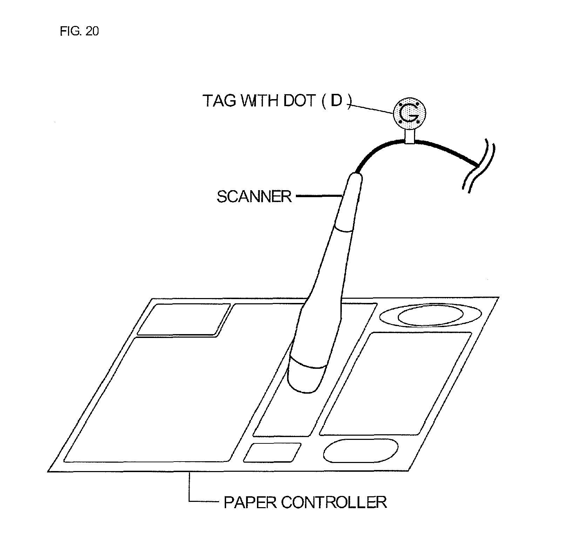

The paper controller shown therein is almost similar to the paper controller described with reference to Figs. 18 to 20 except that a guide bank is provided to correspond to each predetermined icon region.

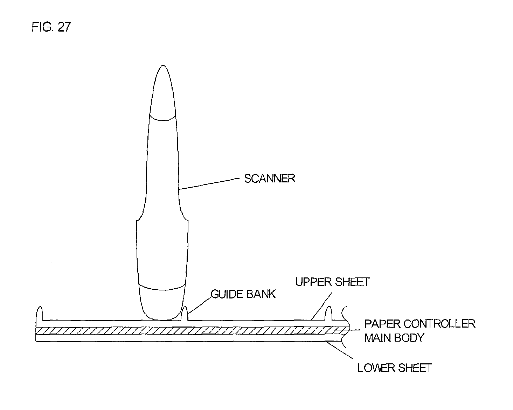

As shown in Fig. 27, a plastic plate is further provided on an upper surface of a paper controller main body, part of which plate protrudes to an exposed surface direction and forms a rib-shaped bank guide

Preferably, this bank guide has such a height as to cause the operator grasping the scanner to find the guide as a small obstacle against slide direction when the operator slides a tip end (lower end in Fig. 27) of the scanner on the surface of an upper sheet (moves the tip end of the scanner along the surface of the sheet). The operator can continuously slide the tip end of the scanner thereon by moving the scanner to intentionally climb over the guide.

By providing such bank guides, the operator can place the scanner on the intended icon region without depending on eyes as long as the operator learns the positional relation between the bank guides and the icon regions on the paper controller main body. For example, in Fig. 25, up to four icon regions (for example, "URL", "LINK", "ALL URL", and "ALL LINKS" in the middle region in a left column in Fig. 25) are provided in each of the rectangular regions surrounded by the bank guides. By sliding the scanner until the scanner cannot be moved in upper left, upper right, lower left, and lower right directions (sliding the scanner up to four corners of each guide bank) the user (operator) can accurately stop the scanner on each of the icon region to cause the scanner to read the code value of each icon region without paying attention to the print surface of the paper controller on hand.

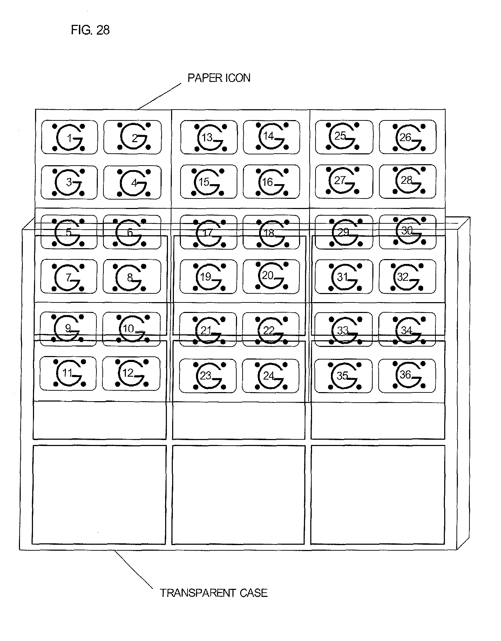

The guide units may be provided as protrusions on cards by subjecting the cards to embossing or the like. Alternatively, as shown in Fig. 28, the guides may be constituted as separate plastic guides so that only the cards are made replaceable with respect to the guides.

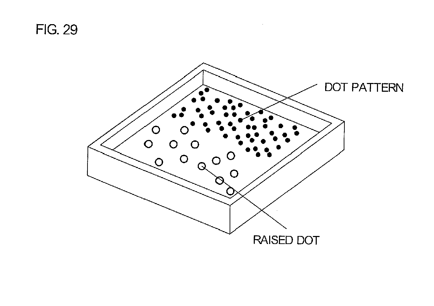

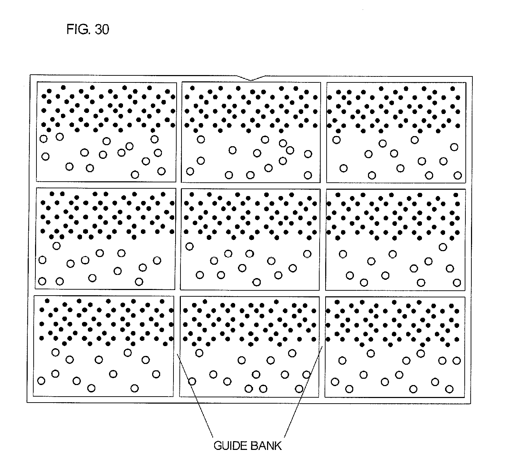

Figs. 29 and 30 shows that raised dots as well as the dot pattern are provided in each region surrounded by the bank guides of this paper controller. By thus providing the raised dots and the dot pattern in the same region, it is possible to maintain similar input efficiency to that for a person with a healthy body even if a visually disabled user (operator) uses the scanner.

Particularly in Fig. 30, a dot pattern is printed in an upper part of each of predetermined rectangular regions of a medium (e.g., a paper sheet or a synthetic resin plate) and raised dots are provided in a lower part thereof. Further, the rectangular regions are surrounded by walls (banks). Due to this, even a visually disabled user can sensuously grasp the scanner's scanning of different regions by causing the tip end of the scanner to climb over the banks.

In the embodiment, the regions in which dot patterns are printed and those in which raised dots are printed are provided separately. However, the present invention is not limited to this instance. Needless to say, dot patterns and raised dots can be printed to be superimposed in the same regions.

(Mouse pad)

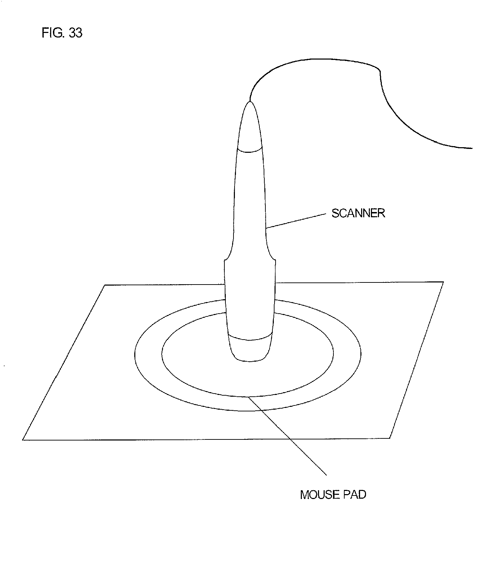

Figs. 33 to 39 are diagrams explaining a mouse pad according to an embodiment of the present invention.

Fig. 33 is an explanatory diagram showing a mouse pad system for performing various operations of a personal computer by causing the scanner (SCN) to read dot patterns printed on one surface of the mouse pad serving as a medium (surface of the medium).

Similarly to the paper controller and the paper keyboard described above, this mouse pad is made of a paper sheet or synthetic resin, and has a laminate structure in which a print surface including dot patterns is formed on an upper surface of the paper sheet and in which a transparent protection sheet is stacked on the print surface. Needless to say, such a protection sheet is not always essential and the print surface may be exposed.

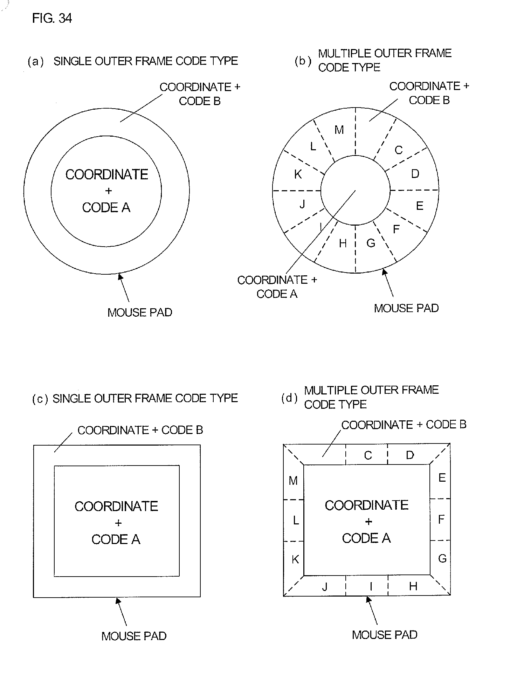

As shown in Fig. 34(a), the print surface is configured to include an inner circumferential region and an annular outer circumferential region.

A coordinate value and a code A are printed as a dot pattern in the inner circumferential region. A coordinate value and a code B are printed as a dot pattern in the outer circumferential region. If the mouse pad is used to input coordinates, the mouse pad can input coordinates using all regions in the circle similarly to a tablet.

Fig. 34(b) shows that image regions in which alphabetical code values are registered are provided in the outer circumferential region.

Such a mouse pad is not always circular but may be rectangular as shown in Figs. 34(c) and 34(d).

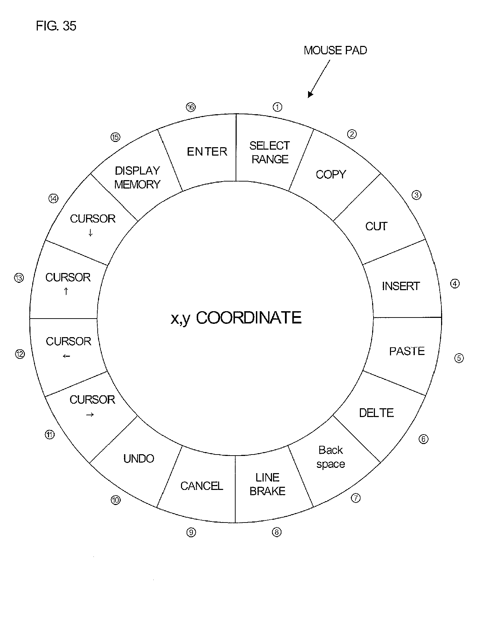

Fig. 35 shows that personal computer input instruction regions are arranged in the annular outer circumferential region. A code value for computer operation is printed as a dot pattern in each of the input instruction regions. The mouse pad includes functions of a mouse pad and those of the paper controller stated above.

In Fig. 35, each functional region (region denoted by encircled number in Fig. 35) functions as follows. In the Detailed Description part, parenthesized numbers are used in place of the respective encircled numbers.

(1) SELECT RANGE

The user touches the icon (functional region) by the scanner and moves a cursor by scanner operation within an inner frame. When deciding a start point, the user releases the scanner (SCN) from the icon. If the user touches the icon again to move the cursor, decides an end point, and releases the scanner (SCN) from the icon, text during that time is displayed in blue and turns active.

(2) COPY

If the user touches the icon (functional region) by the scanner, range-selected text is stored in a memory. The text copied right now is listed at the head of a memory list.

(3) CUT

When the user touches the icon (functional region) by the scanner, then range-selected text is deleted and stored in the memory. The text cut right now is listed at the head of the memory list.

(4) INSERT

For such an instance as that in which the cursor is not in an input mode, the user touches the icon (functional region) by the scanner, moves the cursor either using cursor keys →←↑↓ or by the scanner operation within the inner frame, and releases the scanner, thereby defining an insertion position.

(5) PASTE

When the user touches the icon (functional region) by the scanner, the text stored in the memory and turned active is inserted from a position of the cursor in the input mode.

(6) DELETE

When the user touches the icon (functional region) by the scanner, previously range-selected text is deleted. If the text is not previously range-selected, text in rear of the position of the cursor in the input mode is deleted by one letter or character. If the scanner is depressed for long time equal to or longer than two seconds, letters or characters are continuously deleted before the user releases the scanner from the icon.

(7) Back Space

When the user touches the icon (functional region) by the scanner, text in front of the position of the cursor in the input mode is deleted by one letter or character. If the scanner is depressed for long time equal to or longer than two seconds, letters or characters are continuously deleted before the user releases the scanner from the icon.

(8) LINE BREAK

When the user touches the icon (functional region) by the scanner, line breaking is executed and the position of the cursor in the input mode is moved to a top of a new line.

(9) CANCEL

When the user touches the icon (functional region) by the scanner, the mode is cancelled and the personal computer turns into a standby state if the user operates nothing after clicking on the icon (functional region) (1), (4) or (15).

(10) UNDO

When the user touches the icon (functional region) by the scanner, previously performed operation is canceled and the state returns to the previous state. The state can be repeatedly returned.

(11) CURSOR →
(12) CURSOR ←
(13) CURSOR ↑
(14) CURSOR ↓

When the user touches one of the icons (functional regions) by the scanner, the position of the cursor in the input mode is moved in a direction of the cursor by one letter or character. If the scanner is depressed for long time equal to or longer than two seconds, the position of the cursor is moved continuously to the direction. If a pulldown menu is displayed, an active icon among displayed items is moved up or down by touching the icon (functional region) (13) or (14), respectively.

(15) DISPLAY MEMORY

By clicking on the icon, a list of range-selected and copied or cut texts is displayed from above in new order. By touching the icon (functional region) (11) or (12), the active item can be moved up or down, respectively. As long as the active item is not deleted (6), all the texts are stored.

(16) ENTER

If the position of the cursor is moved to a predetermined position and an instruction is present at that position, the instruction is executed by touching the icon (functional region). *Kana-kanji* conversion or the like can be decided. This icon (functional region) is equal in function to an ordinary ENTER key.

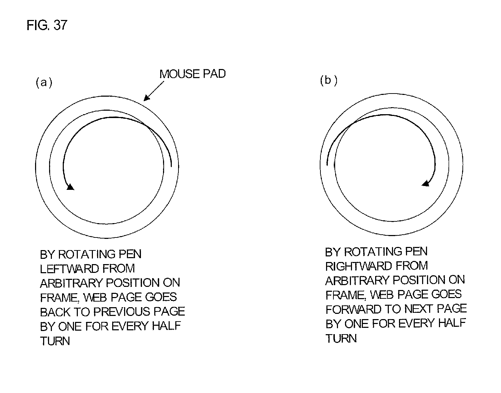

Figs. 36(a) to 36(d) and Figs. 37(a) to 37(b) show an operation for scrolling a web page according to the Internet browser program by a scanner operation using such a mouse pad.

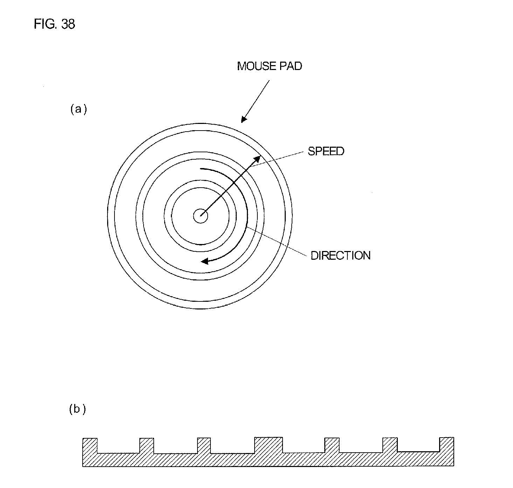

Fig. 38(a) is a plan view of a three-dimensional mouse pad and Fig. 38(b) is a cross-sectional view of the three-dimensional mouse.

Annular grooves are provided in the mouse pad so that the operator who grasps the scanner can sensuously recognizes difference of regions through the scanner.

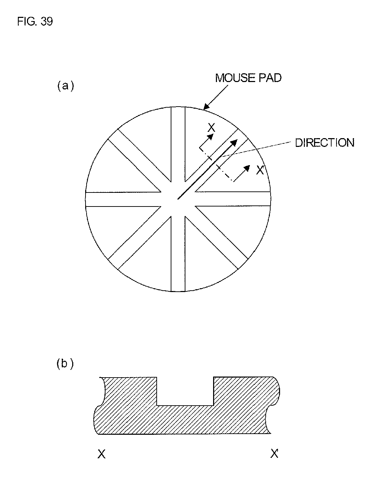

Such grooves may be not only annular grooves as shown in Fig. 38 but also radial grooves as shown in Fig. 39.

(Other paper controller)

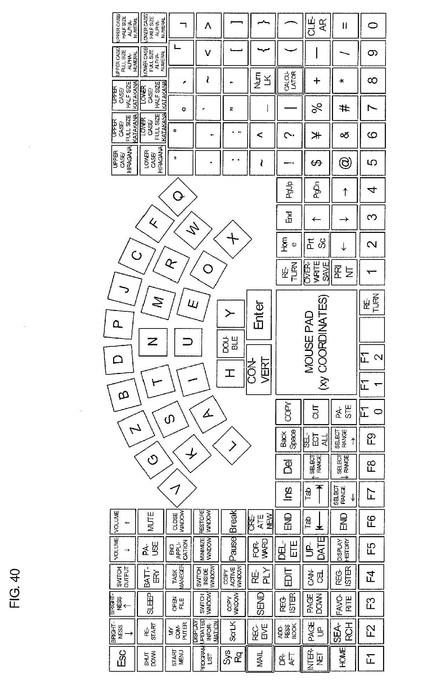

Fig. 40 shows that a new keyboard is proposed by providing this input reading unit.

On the keyboard, images of respective keytops are arranged in a fan-like fashion around "H", "DOUBLY", "Y", "CONVERT", and "ENTER". The images of the respective keytops are located at shifted positions so as not to be linearly arranged.

As the images of the respective keytops, vowels ("A", "I", "U", "E", and "O") are arranged inward of "H", "DOUBLE", "Y", "CONVERT", and "ENTER" and consonants ("K", "S", "T", "N", "M", "Y", "R", and "W") are arranged outward thereof.

Dot patterns each having a code value and XY coordinates as shown in Fig. 9(b) registered in the same format are printed to be superimposed on the images of these keytops, respectively.

The XY coordinates may be defined independently of icons or may be defined for the entire surface of the medium.

By using this keyboard, letters or characters can be input by touch on and release from the surface of the medium by the scanner (SCN). For example, to input "KASA (in *kanji meaning UMBRELLA*)", the image part of the keytop of "K" is read by the scanner. The scanner (SCN) is subsequently rubbed (slid) on the paper keyboard in order of "A"→"S"→"A". Operation among the keytops can be recognized by changes in coordinate values of the dot patterns printed on the medium to be superimposed. Thereafter, the scanner is released (pulled up) from the image of the keytop of "A". The central processing unit (CPU) of the personal computer recognizes "conversion command" by input of Roman letters "KASA" and the release operation according to a recognition program and feeds the conversion command to the application program (Japanese input program) for the personal computer or the like. As a result, "KASA" in *kanji* is displayed at a cursor position on the display device. If input letters are to be converted into a Japanese character, "CONVERT" may be read by the scanner.

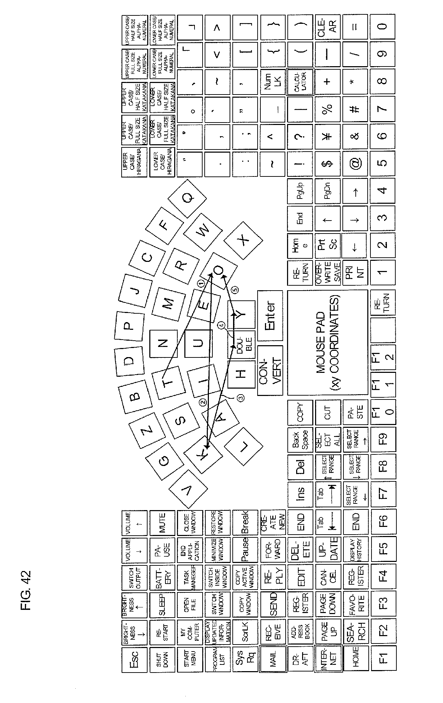

Furthermore, to input "TOKKYO" (see Figs. 42 (1) to 42(5)), the image part of the keytop of "T" is read by the scanner. The scanner is subsequently slid to "O"→"K"→"DOUBLE"→"Y"→"O", and either released (pulled up) from the image of the keytop of last "O" or further slid to "CONVERT". In this case, "DOUBLE" is a region read if the previous letter is input two consecutive times.

The central processing unit (CPU) of the personal computer recognizes "conversion command" by input of Roman letters "TOK(DOUBLE)YO" and the release operation or subsequent reading of "CONVERT" according to the recognition program and feeds the conversion command to the application program (Japanese input program) for the personal computer or the like. As a result, "TOKKYO" in *kanji meaning PATENT* is displayed at a cursor position on the display device.

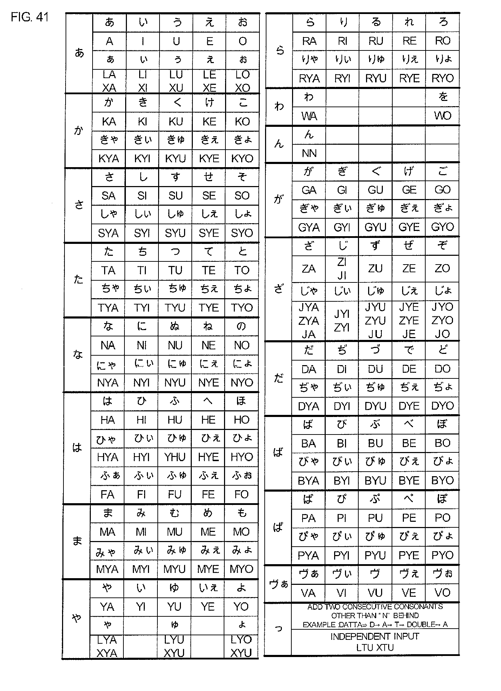

Fig. 41 shows a list of rules for conversion into the Japanese. However, the rules are not limited to the list shown therein.

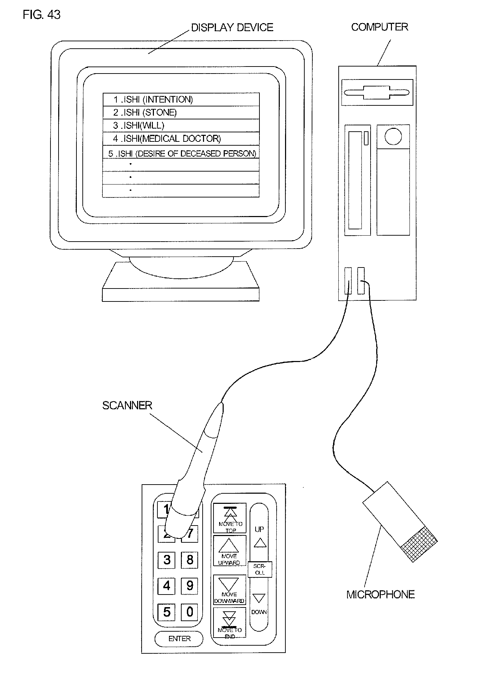

Fig. 43 shows a purpose of use as a voice reader assisting device.

Fig. 43 shows a system assisting in voice input of the Japanese. If the user (operator) produces a vocal sound through a microphone, the central processing unit (CPU) of the personal computer analyzes sound information input from the microphone and displays conversion candidates on the display device. Fig. 43 shows an instance in which the user (operator) produces a sound "ISHI". On the display device, conversion candidates corresponding to the vocal sound "ISHI", i.e., "1 ISHI (in *kanji* meaning INTENTION)", "2 ISHI (in *kanji* meaning STONE)", "3 ISHI (in *kanji* meaning WILL)", "4 ISHI (in *kanji* meaning MEDICAL DOCTOR)", and "5 ISHI (in *kanji* meaning DESIRE OF DECEASED PERSON)" are displayed.

At this time, the user (operator) selects a candidate number from the candidates displayed on the display device and causes the scanner to scan the icon region of that number (e.g., "2") on the paper controller (paper keyboard). Dot patterns of coded numbers are printed in the icon regions of these numbers, respectively. By operation of the scanner, the coded number is input to the personal computer. The central processing unit (CPU) of the personal computer reads a number associated with the input candidate from the input code and feeds the conversion character (e.g., "ISHI (in *kanji* meaning STONE)") corresponding to the number to the application program.

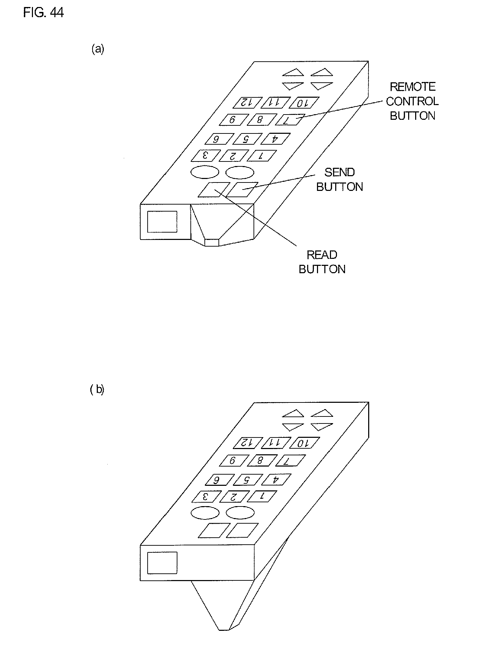

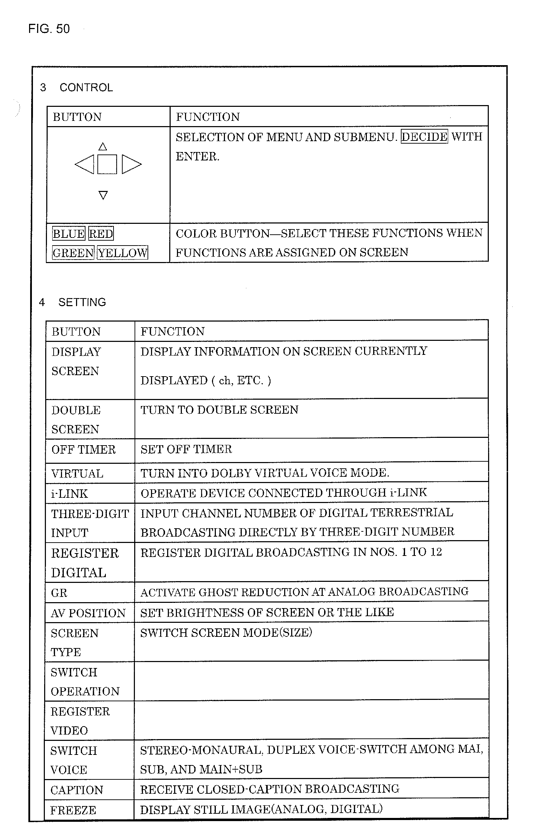

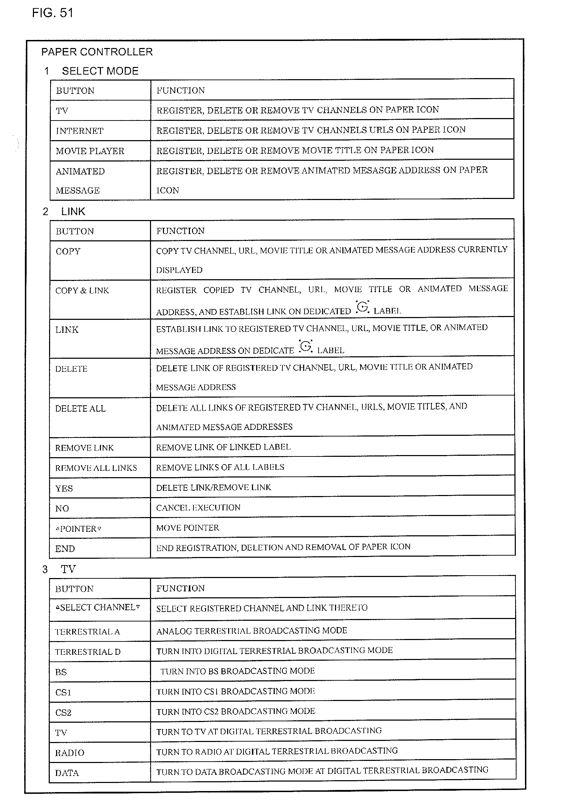

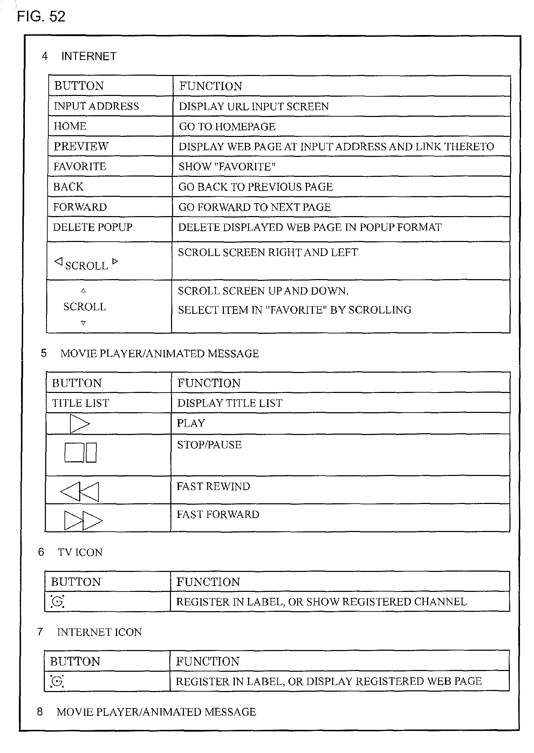

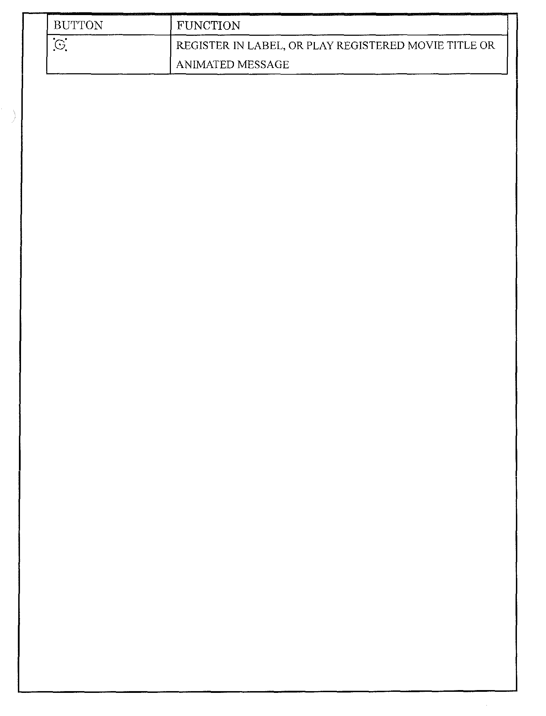

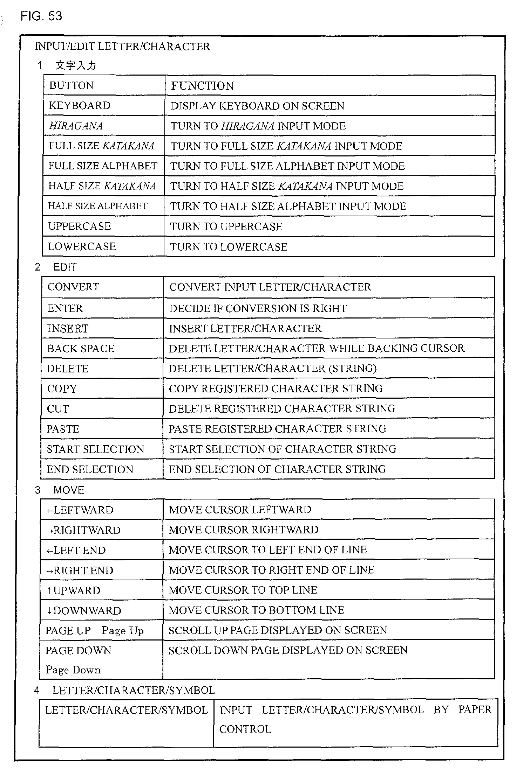

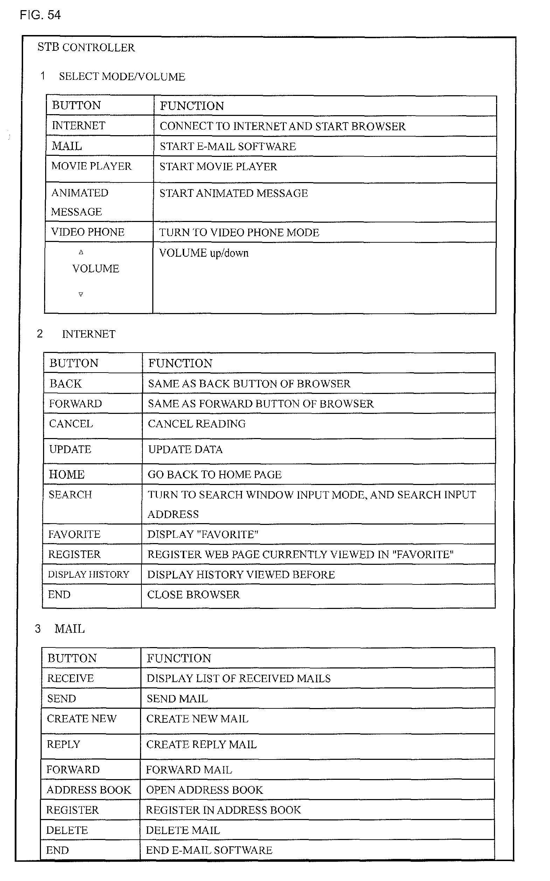

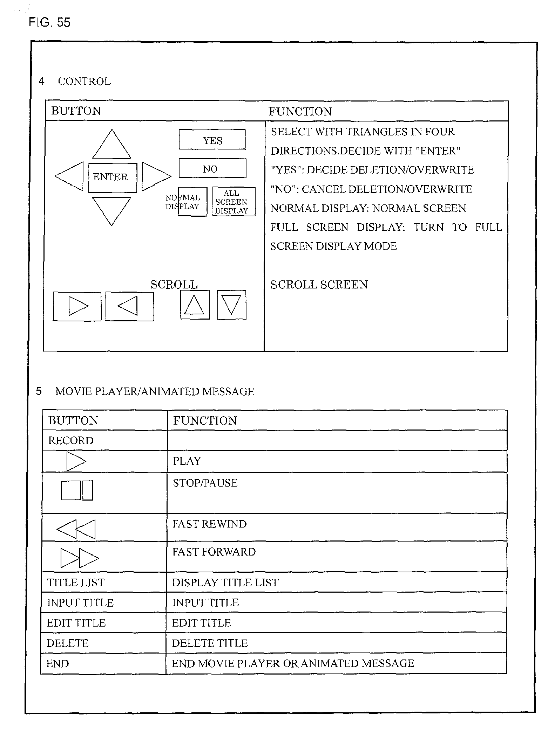

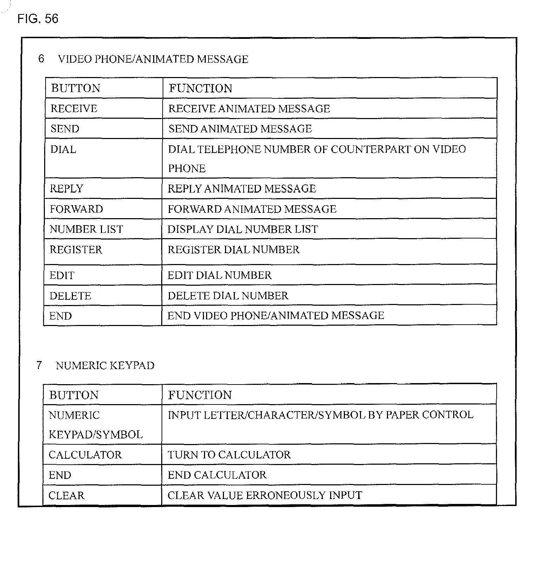

Figs. 44 to 56 show examples of using a paper keyboard as input means for an infrared remote controller.

In these examples, the canner is integrated with the remote controller. Fig. 44(a) shows a structure in which the scanner is provided on a tip end of the remote controller and Fig. 44(b) shows a structure in which the scanner is provided on an opposite surface of the remote controller to a surface on which an operation panel is provided.

The user (operator) is supposed to scan a radio/television listing field on a newspaper using the scanner of the remote controller. In the radio/television listing field on the newspaper, channels and broadcasting stations are displayed in XY direction and program names, performers, and contents are printed as letter or character information. In the radio/television listing field, viewing/recording reservation codes are printed as dot patterns. By scanning one of these dot patterns using the scanner, the remote controller reads a reservation code assigned to each program and transmits the reservation code to a settop box (STB) or an infrared receiver of a television main body.

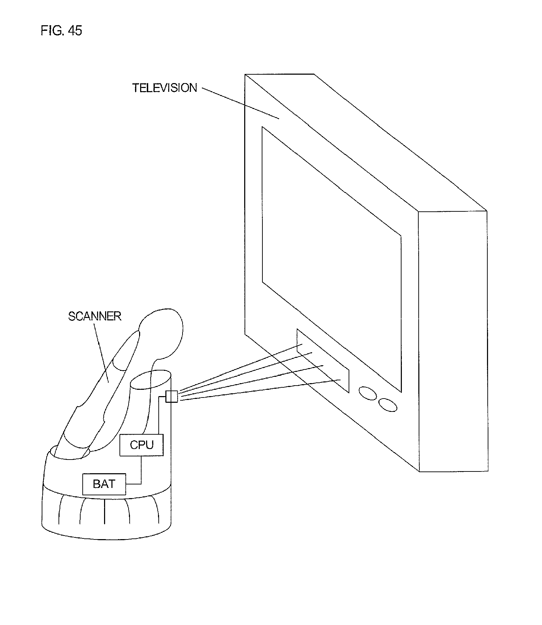

Fig. 45 shows the remote controller structured to be able to mount the scanner on a cradle (platform). The cradle includes therein a central processing unit (CPU) analyzing a read signal from the scanner and generating an infrared signal, a battery (BAT), and the like.

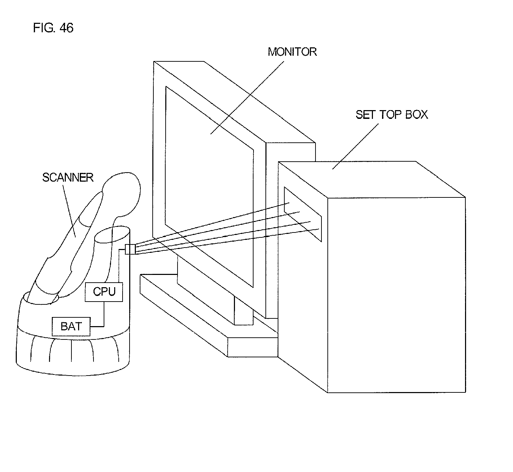

Fig. 46 is an explanatory diagram for an instance of making a program reservation or recording for a settop box for CS broadcasting or Internet broadcasting using the scanner (SCN) and the cradle shown in Fig. 45.

The scanner (SCN) may be connected to the cradle not only by wired communication as shown in Figs. 45 and 46 but also by wireless communication.

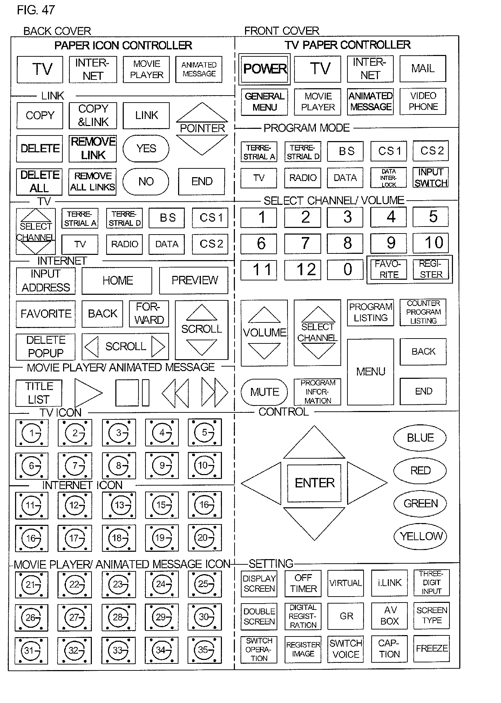

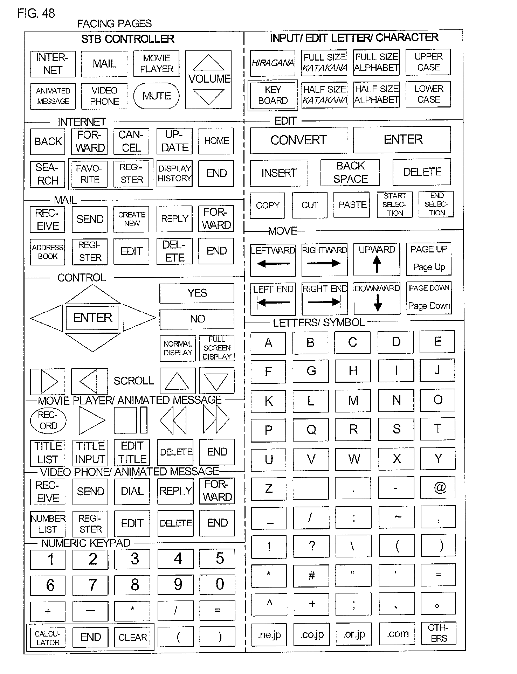

Fig. 47 shows an example of a paper controller used for the remote controller shown in Figs. 45 and 46. Fig. 48 shows an example of a paper controller used for the remote controller controlling the settop box.

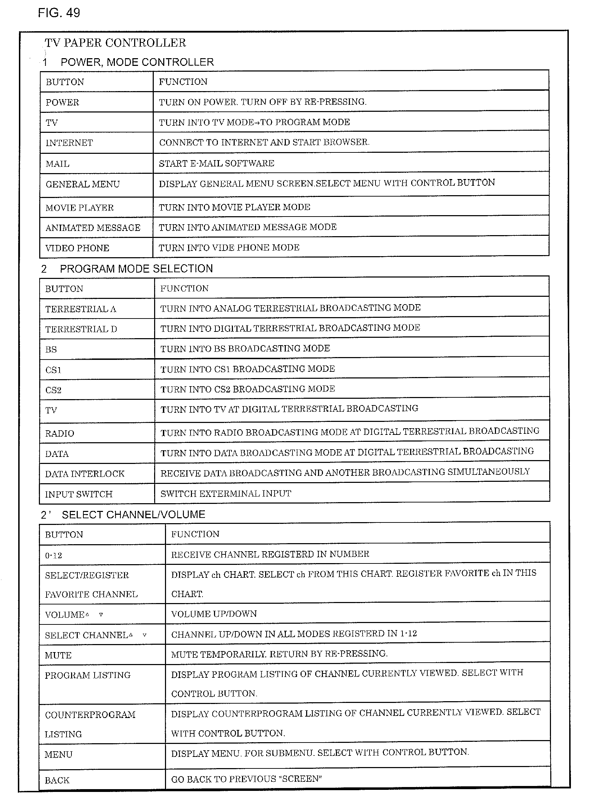

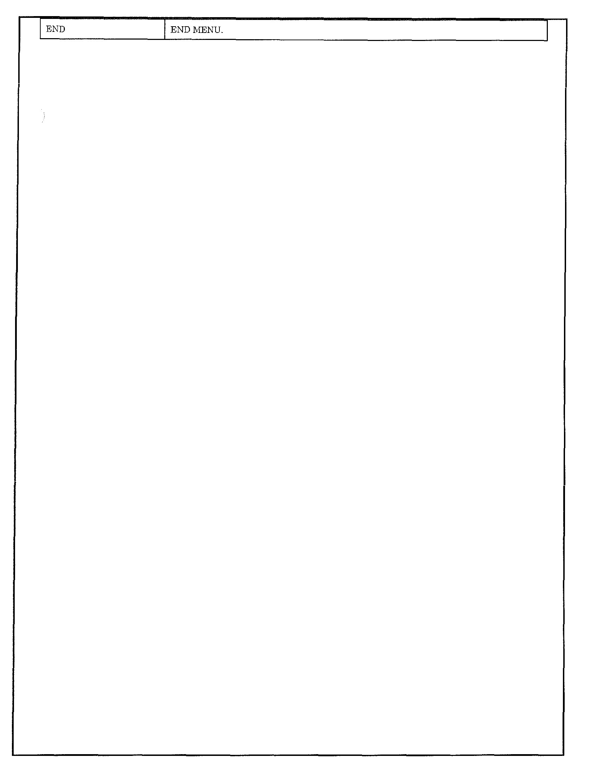

Figs. 49 to 56 show correspondence of the code values of the respective functional regions (regions or icons in which dot patterns are printed) of the paper controller shown in Fig. 47 to execution commands for televisions (TV) and settop boxes signified by the codes.

For example, if the region of "POWER" printed on a front cover shown in Fig. 47 is read by the scanner, then the dot pattern printed in the region is read and converted into a code value, a turn-on-power signal is transmitted to the television or the settop box.

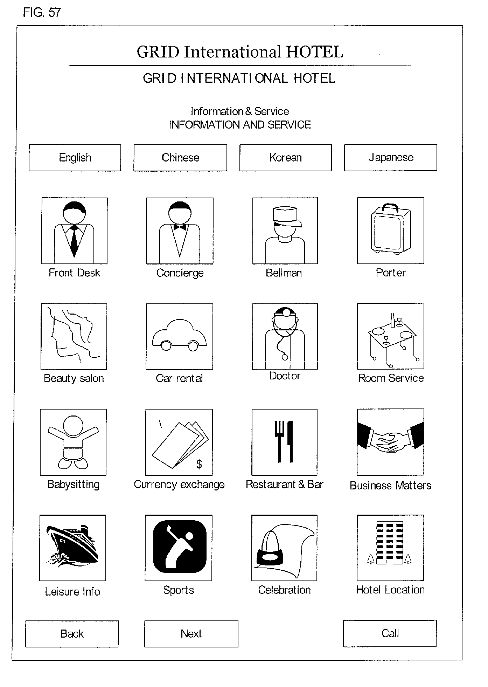

Fig. 57 shows that the paper controller according to the embodiment is realized as a medium controlling a settop box disposed in a guest room in a hotel.

Symbols signifying English, Chinese, Korean, and Japanese are printed on the paper controller and dot patterns are printed on the respective symbols. Control signals are output from the remote controller as wireless communication or optical communication so that the settop box can perform operations signified by the respective symbols.

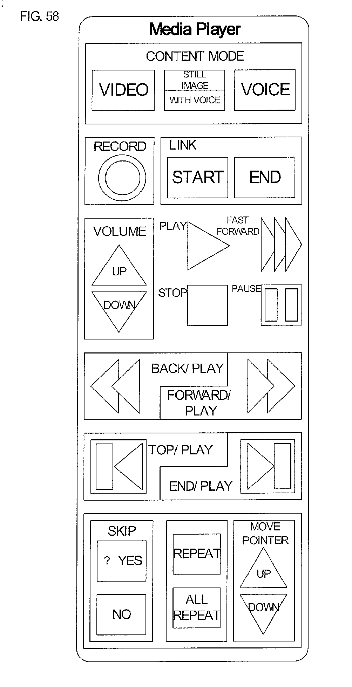

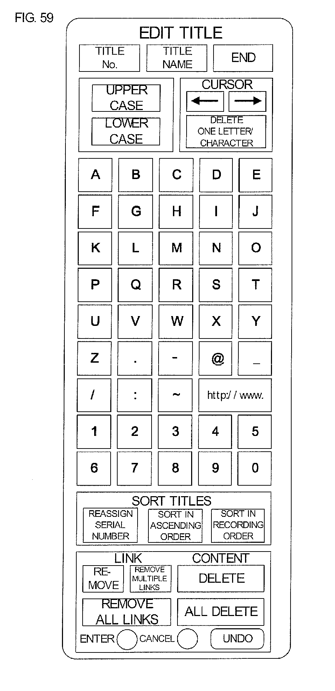

Figs. 58 and 59 show examples of the paper controller (paper keyboard) controlling a music or moving image player. While the music or moving image player will not be described in detail, video and voice can be recorded or played using the scanner (SCN) and the paper controller (paper keyboard) for operation of the music or moving image player. Dot patterns are also input to respective command regions of the paper controller (paper keyboard). As shown in Fig. 59, the paper controller (paper keyboard) capable inputting letters or characters may be prepared.

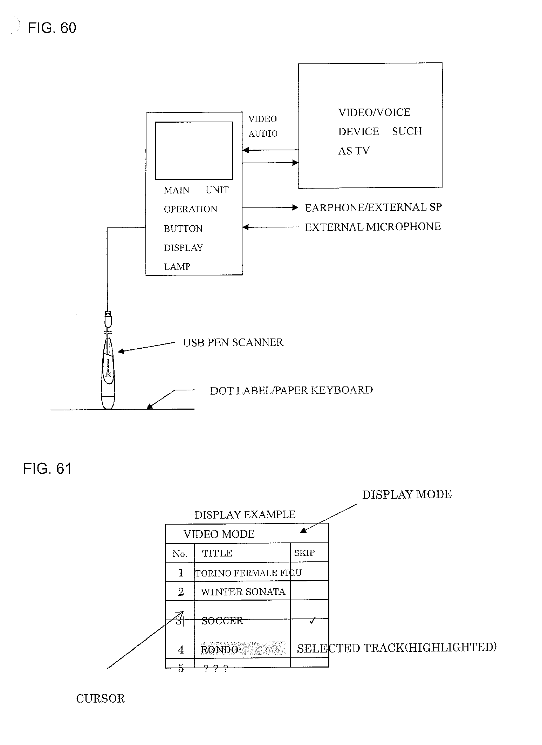

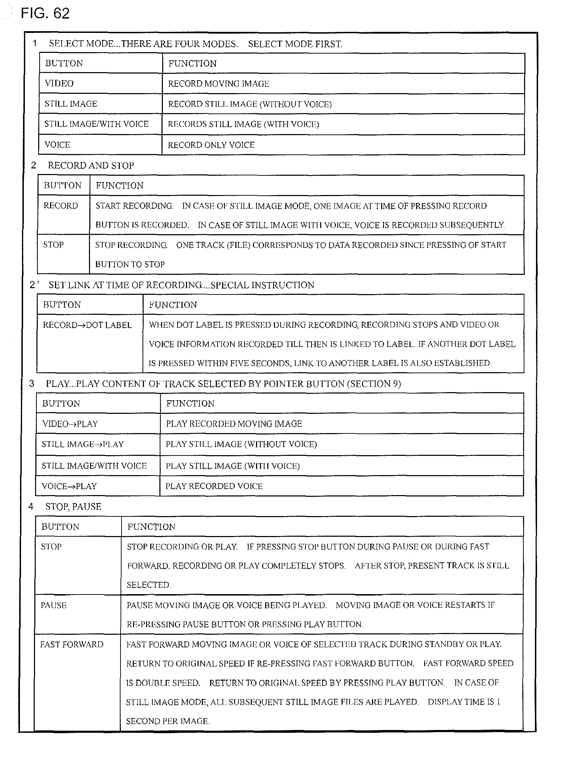

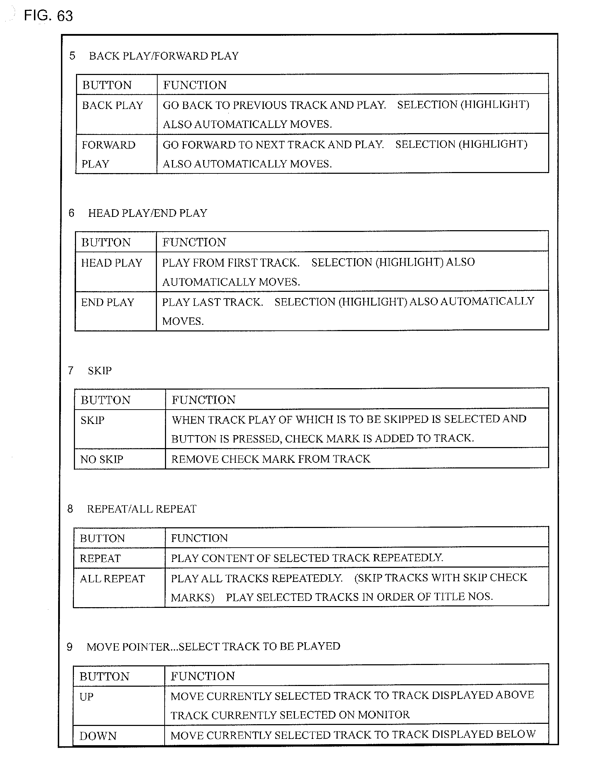

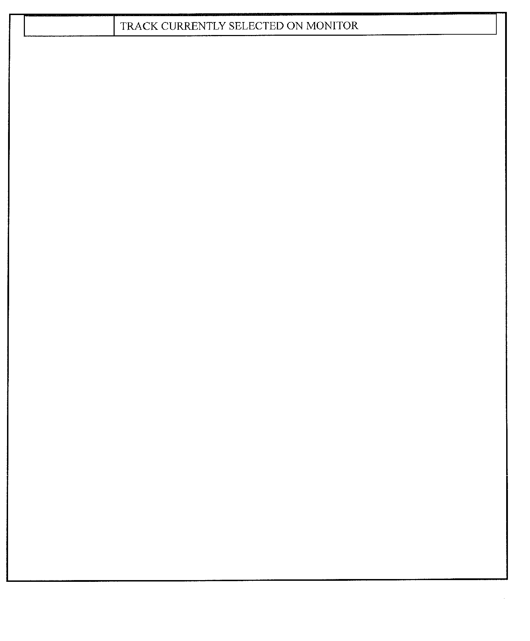

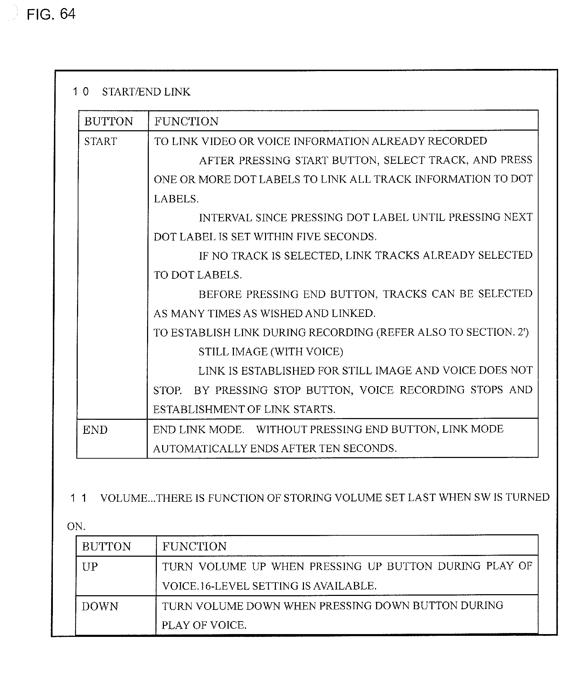

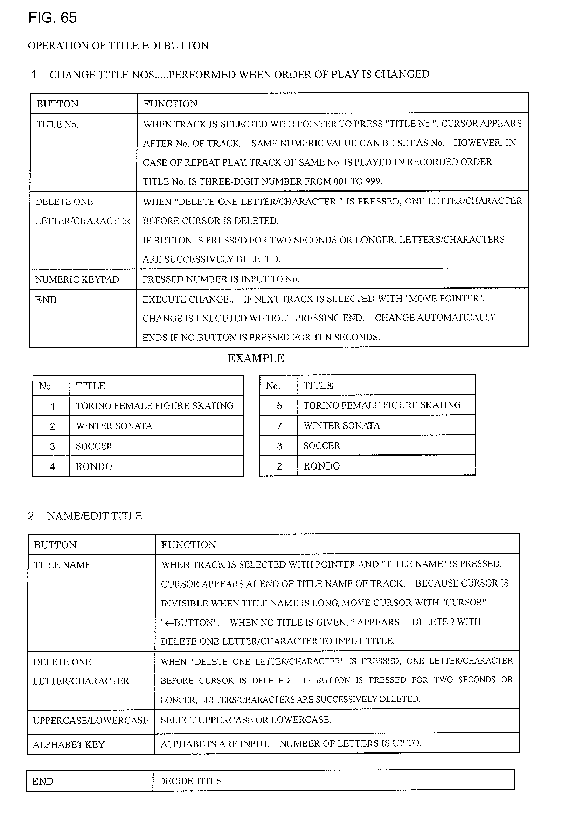

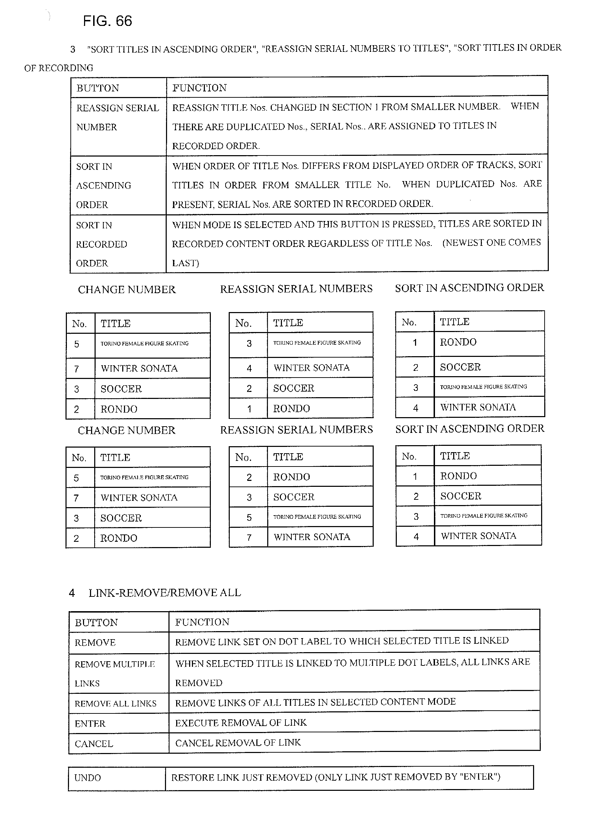

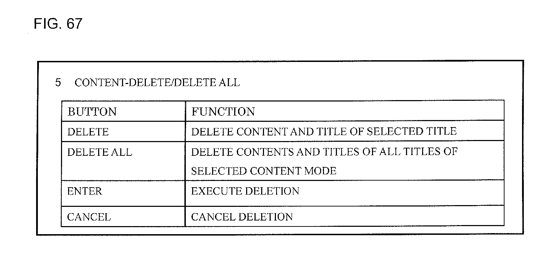

Figs. 60 to 67 show correspondence of the code values of the respective functional regions (regions or icons in which dot patterns are printed) of the paper controller shown in Figs. 58 and 59 to execution commands for music or moving image players signified by the codes.

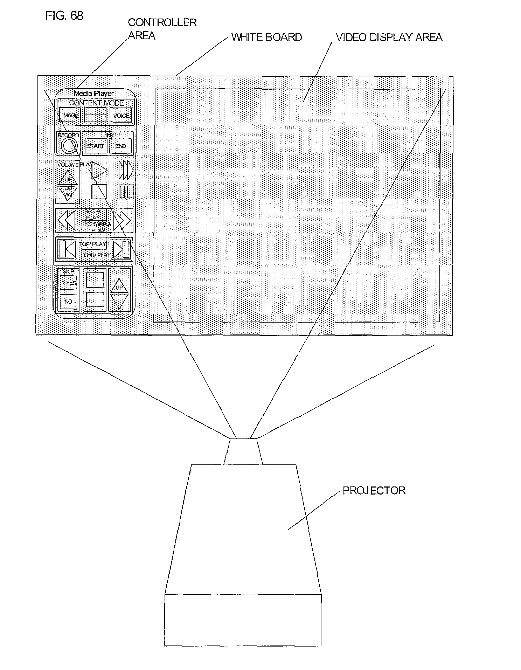

Figs. 68 to 70 show an instance of using a white board as the surface of the medium. Dot patterns are similarly printed on this white board. It is assumed that dot codes (see Fig. 9) signifying coordinate values are printed on the dot patterns on the white board.

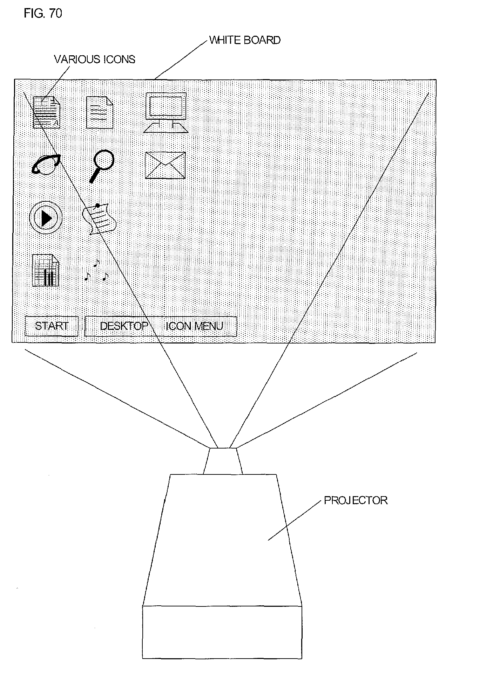

As shown in Fig. 70, a projector projects a predetermined image onto the white board on which the dot patterns signifying the coordinate values are printed. The projector is connected to a personal computer which is not shown. If an arbitrary position of the white board is manipulated using the scanner (see Fig. 1) according to the present invention and connected to this personal computer, the dot pattern at the position is read by the scanner (SCN) and converted into a coordinate value within the personal computer. In the hard disk device within the personal computer, the index table (see Fig. 24) in which coordinate values are made to correspond to commands, addresses or the like, respectively is provided. While referring to the index table, information or a command specified by each corresponding address is displayed or executed.

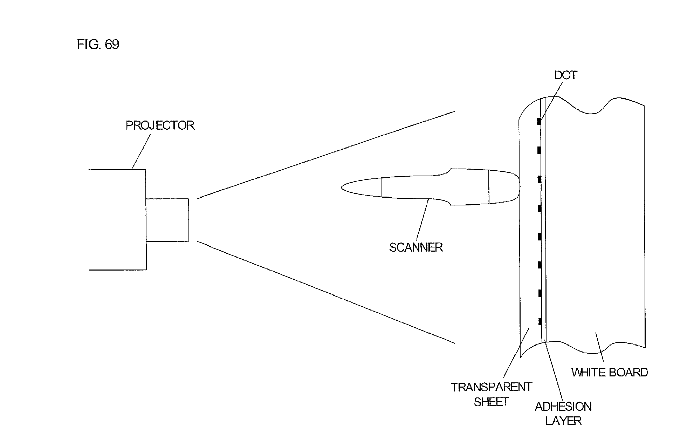

As shown in Fig. 69, an adhesion layer is provided on a surface of the white board and a transparent sheet having dot patterns printed on one surface is bonded onto the adhesion layer with the printed dot patterns faced on the adhesion layer-side.

Accordingly, the dot patterns are protected by the transparent sheet per se. Due to this, even if the tip end of the scanner or a pen point for the white board contacts with the dot patterns, the dot patterns are not deteriorated.

In the example of Fig. 70, if the scanner reads a dot pattern on the region displayed as an icon on the white board, then the dot pattern is converted into a coordinate value in the personal computer and an application program registered in advance is started to correspond to the coordinate value.

Alternatively, as shown in Fig. 68, an image of the remote controller may be projected on a left side of the white board and a moving image controlled by the remote controller may be played on the right side thereof.

In this case, if a portion corresponding to a projected image of each button of the remote controller is read by the scanner, the coordinate value corresponding to the projected image is read by the personal computer, and operation corresponding to the coordinate value, e.g., play, fast forward, rewind, pause or the like of the moving image is performed, thereby making it possible to control the projected moving image (image).

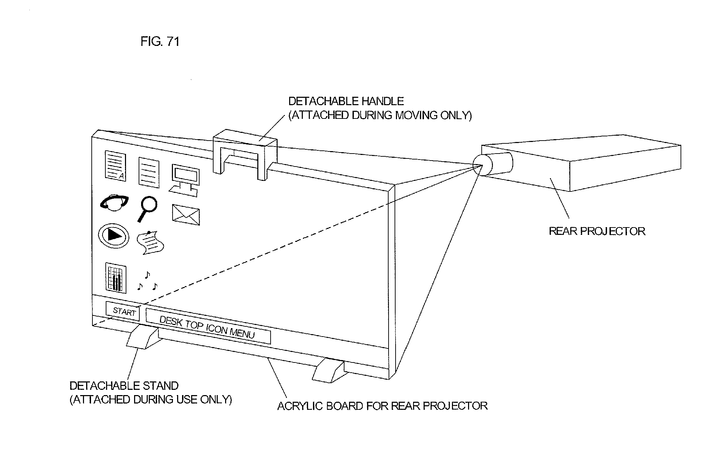

Fig. 71 shows an example of using a translucent acrylic board (screen board) in place of the white board. A rear projector arranged in rear of the acrylic board projects a desktop screen of the personal computer or a moving image (image).

On this screen board, an infrared cut filter sheet is bonded on a rear projector-side surface of the acrylic board via an adhesion layer and a transparent sheet is bonded onto an opposite surface thereof via an adhesion layer. Dot patterns signifying coordinate values are printed on an adhesion layer-side surface of the transparent sheet.

By thus bonding the infrared cut filter sheet onto the rear projector-side surface of the screen board, an infrared component in a light irradiated from the rear projector is cut and a noise light of the infrared component does not arrive at the scanner side from the rear projector. Due to this, it is possible to keep high dot pattern reading accuracy.

In Fig. 71, if the scanner picks up an image of an icon part of a browser program, the central processing unit (CPU) of the personal computer recognizes that the icon part is at the position at which the icon of the browser program is arranged by referring to a correspondence table (not shown) of pairs of coordinates and processing commands, and executes a processing command corresponding to the coordinate (starts the browser program in this example).

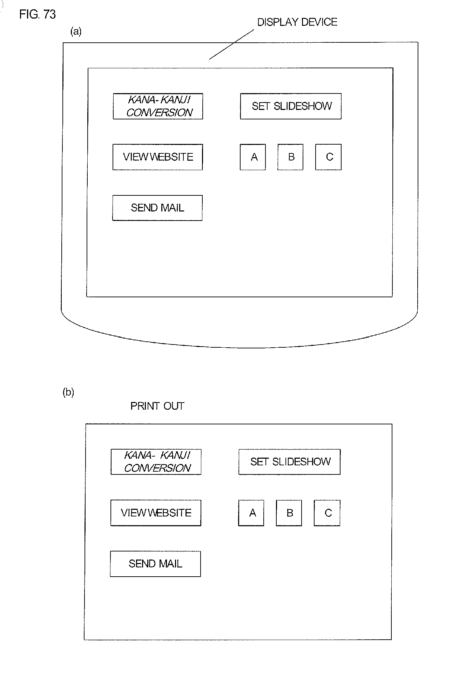

Fig. 73 shows an example of creating the above-stated paper keyboard by the user (operator) himself or herself. To create the paper keyboard, image information on the paper keyboard is edited on the screen, a mask is formed by, for example, cutting a part of a region, and codes of dot patterns are arranged on the mask so that the user (operator) can use the keyboard at free arrangement.

A program enabling the user (operator) to freely delete, add, and arrange functional icons using an application on the screen is prepared and an image of the screen is printed together with dot patterns or printed on a sheet on which dot patterns are printed. It is thereby possible to realize the paper keyboard on which all execution commands for functions of application programs for a word processor, spreadsheet software and the like are customized for the user (operator) and printed.

This can decrease the number of functional buttons arranged on the screen and make screen interfaces for the word processor, the spreadsheet, and the application programs quite simple.

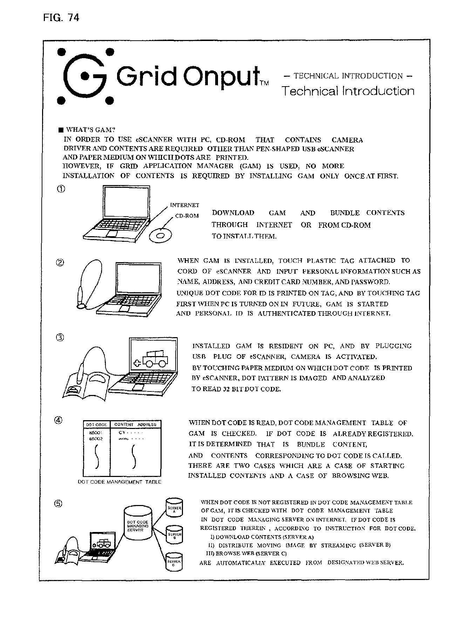

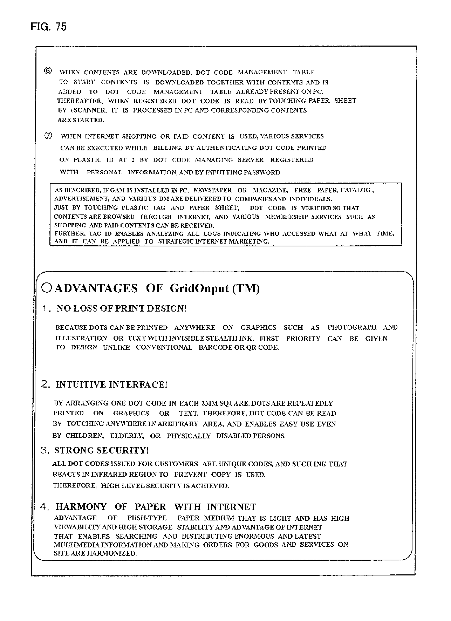

Figs. 74 and 75 show that one embodiment in which the dot pattern reading device, the index table, the server management table and the like described so far are applied to the embodiment is formed into a distributed document as a technical introduction.

As shown in this distributed document (Figs. 74 and 75), the present technique can be realized as Grid Onput (trade name).

Figs. 74 and 75 show an instance in which the scanner is used for the personal computer (PC) as hardware, that is, as GAM (Grid Application Manager that is the name of an application program installed in the hard disk device of the PC).

In Figs. 74 and 75, (1) to (5) and (7) show examples of actual operations. Namely, as shown in (1) of Fig. 74, the user executes an installation program in a CD-ROM or downloaded by accessing an Internet distribution server on the personal computer (PC) and registers the GAM and the driver program as resident programs on an OS (operating system). The user also installs an application program bundled by the GAM and content data such as images and moving images into the hard disk device (HD).

Next, when the scanner is connected to a USB terminal, the resident driver program recognizes the scanner.

When the scanner reads a surface of a tag, a picked-up image (a dot pattern) of the surface of the tag is read by the personal computer (PC) via a USB cable and loaded to a video memory (VRAM). The GAM read by the central processing unit (CPU) decodes the picked-up image (dot pattern) to a code (code number) according to the above-stated algorithm (GRID1 or GRID2).

At this time, if the scanner scans the tag for the first time, then a screen for prompting the user to input personal information corresponding to the tag is displayed on the display device (DISP) of the personal computer (PC), and the user registers the personal information such as a name, an address, and a credit card number according to this displayed screen. The personal information input in this way is registered in the management server table shown in Fig. 24 described above and used for subsequent authentication.

Namely, subsequently, when the personal computer (PC) is started, the tag is scanned by the scanner, whereby the management server performs authentication and the GAM is started upon completion of this authentication.

Next, the paper medium or the paper controller (paper keyboard) on which dot patterns are printed is scanned (read) by the scanner, whereby picked-up image data on the dot patterns is input to the personal computer and dot codes (code numbers) each consisting of 32-bit number string are decoded.

The dot code management table (index table) of the GAM is referred based on the dot codes (code numbers).

If the dot codes (code numbers) are already registered in the index table, then it is recognized that content data corresponding to the dot codes is already installed in the personal computer (PC) and the content data is read and played. If the content data is moving images or images, a movie or images are displayed on the display device (DISP) by a moving image play application program or an image display program corresponding to the content data.

If an address (URL) on the Internet is registered in each dot code (code number) in the index table, a browser program (such as the Internet Explorer of Microsoft Corporation) is started and the address is accessed.

Meanwhile, as shown in (5) of Fig. 74, if the dot code (dot number) obtained as a result of reading each dot pattern is not registered in the local dot code management table (index table) (in the personal computer), the dot code management server on the Internet is referred. If the dot code (code number) is registered in the management server table of the dot code management server, then (1) content download from a designated Web server or, to be specific, a server A, (2) moving image streaming distribution or, to be specific, data distribution from a server B serving as a streaming distribution server, and (3) Web browsing or, to be specific, download of Web files designated by the address (URL) of a server C are automatically started.

Next, when the content data is downloaded to the personal computer (PC), additional data (pairs of code numbers and addresses) of the dot code management table (index table) for starting the content data is also downloaded thereto. Subsequently, the data is managed by the dot code management table (index table) within the personal computer.

Subsequently, therefore, if the same code number is read, the content data downloaded into the hard disk device (HD) of the personal computer is played based on the dot code management table (index table) including the newly added data without re-access to the server A, B or C on the Internet.

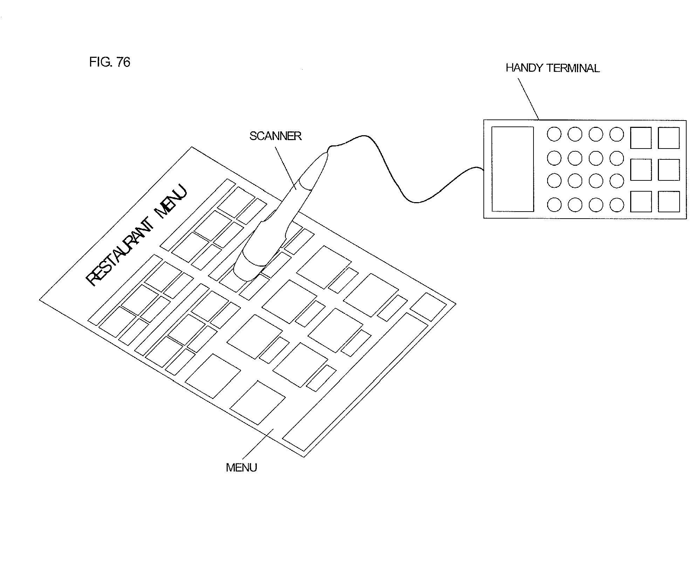

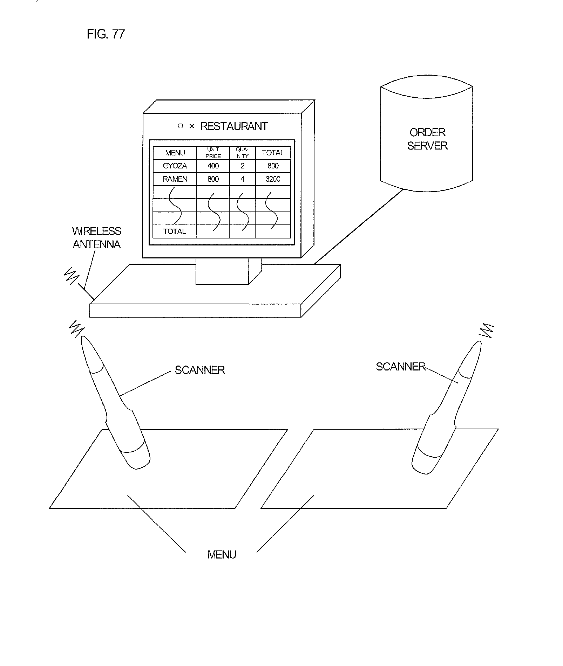

Figs. 76 and 77 explain an example of using the paper controller for an order system of an eating and drinking place such as a restaurant.

As shown therein, a menu on which dot patterns of different code numbers according to items of the menu are printed is put on each table in the restaurant and a computer terminal including the display device (DISP) is disposed on one end of the table.

A short-distance wireless communication system such as Bluetooth is incorporated in the scanner, whereby code numbers and number-of-items information read from the menu can be transmitted between the scanner and the computer terminal.

The code numbers corresponding to the items of the menu and the number-of-items information read by the scanner are transmitted to the computer terminal. The central processing unit (CPU) of the computer terminal generates an order signal in which a table number is added to the code numbers and the number-of-items information and transmits the order signal to an order server.

The order server extracts the table number, the code numbers corresponding to the items of the menu, and the number-of-items information from the order signal and sets an order for a kitchen. Specifically, the order server displays the table number, the items of menu corresponding to the code numbers, and the number of items on the display device displayed at the kitchen so that chefs can start preparing cooking.

The instance in which the table number is added within the computer terminal at the time of generating the order signal has been described. However, a seal or the like on which a dot pattern meaning the table number is printed is attached onto a surface of a stand of the computer terminal or a surface of each table in advance. By reading the surface of the seal using the scanner when distributing the scanner on the table, the table number is associated with the computer terminal.

Therefore, a plurality of scanners may be distributed onto the table so that a plurality of persons can simultaneously place orders.

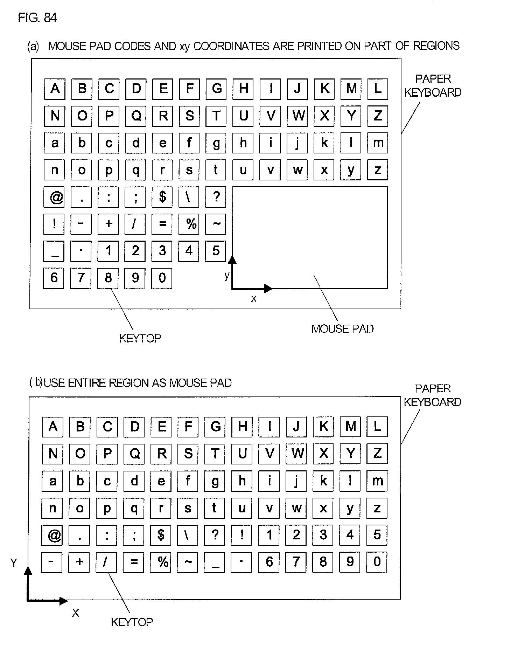

Fig. 84 shows an example of the paper keyboard in which XY coordinate values are used as the mouse pad.

Fig. 84(a) shows that a mouse pad region is provided on a part of the paper keyboard.

In the embodiment, only code values are registered in dot patterns printed on images of keytops, respectively and code values and XY coordinate values are registered in dot patterns printed on the mouse pad region. If the user slides the scanner upward in the mouse pad region, the screen is scrolled up. Likewise, if the user slides the scanner downward, the screen is scrolled down. The same thing is true for right sliding and left sliding.

Fig. 84(b) shows that the entire paper keyboard is used as the mouse pad region.

In the embodiment, both the code value corresponding to the content of the keytop and the coordinate value are registered in each of all keytop images. If the user taps the scanner twice or more at an arbitrary position on the paper keyboard and then slides the scanner upward, the screen is scrolled up. Likewise, if the user taps the scanner twice or more and the slides the scanner downward, the screen is scrolled down. The same thing is true for right slighting and left sliding.

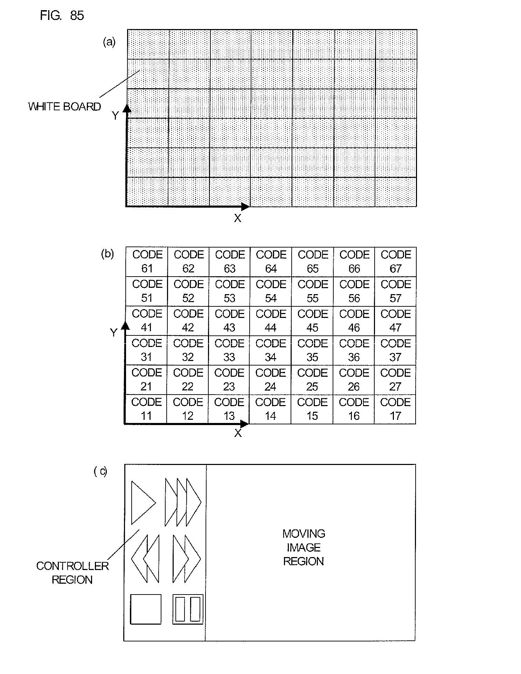

In Fig. 85 showing dot patterns formed on a projection board, coordinate values and code values are defined in one dot pattern format. Predetermined matrix blocks are formed on the board, and the same code value is assigned in the same matrix block despite change in the coordinate value.

In the embodiment, an icon image is arranged to spread over one or a plurality of matrix blocks. By causing the reading unit to read a dot pattern of the icon image, an image corresponding to the icon image is characteristically controlled or a program for the image corresponding to the icon image is characteristically started.

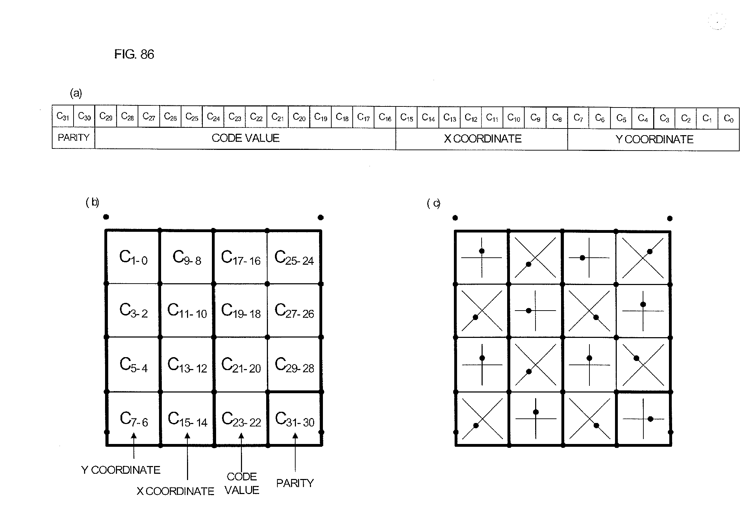

Fig. 86 shows the relation between code values and XY coordinate values of dot patterns in each matrix on the white board.

Fig. 86(a) is a table showing values defined in 32 bits from $C_0$ to $C_{31}$ of the dot patterns. As shown in Fig. 86(a), $C_0$ to $C_7$ signify Y coordinates, $C_8$ to $C_{15}$ signify X coordinates, $C_{16}$ to $C_{29}$ signify code values, and $C_{30}$ to $C_{31}$ signify parities.

These numeric values are arranged in grid regions shown in Fig. 86(b), and Fig. 86(c) shows specific dot patterns.

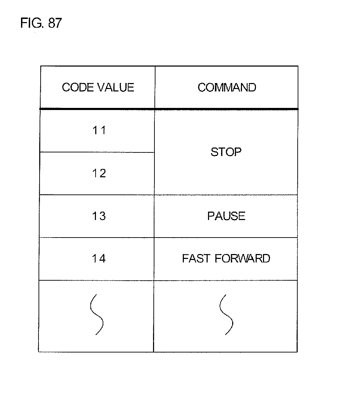

Fig. 87 shows a code value-to-command correspondence table provided in the hard disk device (HD) of the personal computer. If the dot code corresponding to the dot pattern read by the scanner is, for example, 11 or 12, play of video is stopped. If the dot code is 13, the play of video is paused.

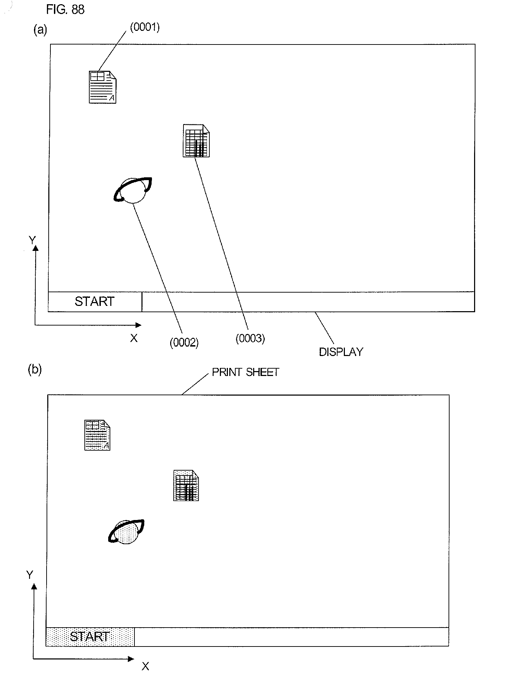

Figs. 88 to 90 are diagrams explaining the technique of creating the paper keyboard on which icons on a desktop screen are printed by capturing and printing the desktop screen.

In the embodiment, a program of outputting the paper keyboard on which icons as well as dot patterns are printed on a paper space as a print medium is prepared if the desktop screen is captured by depression of a "PRINT SCREEN" button (prt sc) on the keyboard (KBD) or the like.

Fig. 88(a) shows the desktop screen of the display (display unit). On the desktop screen, icon images of a word processor, the Internet, and a spreadsheet and a START button, for example, are displayed.

If the desktop screen is captured, the hard disk device (HD) of the personal computer recognizes each icon is displayed at which position on the desktop screen and calculates a coordinate value of the position at which each icon is displayed. The hard disk device (HD) makes the XY coordinates on the desktop correspond to those on a print sheet and generates dot patterns corresponding to the icons. The dot pattern includes dot patterns signifying coordinate values on the screen and code values signifying functions of the respective icons in one format. The hard disk device (HD) performs a superimposition and printing processing for superimposing the generated dot patterns on images on the desktop screen.

Fig. 88(b) shows a paper keyboard on which the desktop screen and dot patterns are printed.

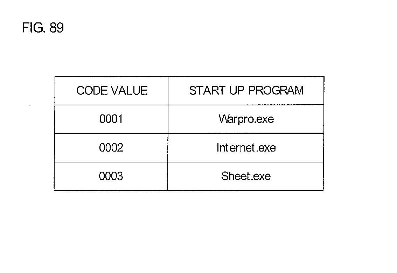

Fig. 89 is a diagram explaining a table showing correspondence between code values and start programs. If the dot patterns are generated by the above-stated processing, a table in which code values of dot patterns are made to correspond to startup programs which the respective icons signify (icons' functions) is created in the hard disk device (HD). For example, if a dot pattern corresponding to an icon indicating a word processor is generated and a code value 0001 is assigned to the dot pattern, a table in which the code value 0001 corresponds to a startup program Warpro.exe is created. The same thing is true for icons indicating the Internet and the spreadsheet. By creating such a table, a spreadsheet program is started if the user clicks on, for example, a picture of a graph on the paper keyboard shown in Fig. 88(b) using the scanner.

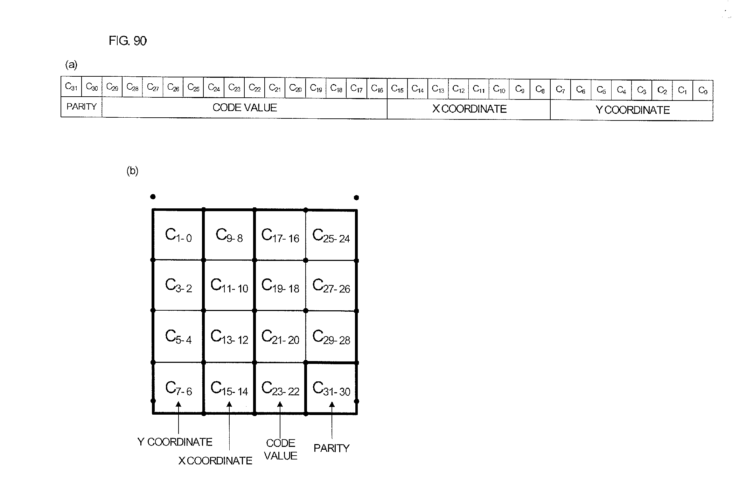

Fig. 90 is a diagram showing the format of the above-stated dot patterns. Since the format of the dot patterns is similar to that describe above, it will not be described herein.

In this way, by printing icons on the desktop screen in advance, the icons can be easily designated. Even if the icons on the desktop are invisible on the screen because, for example, already starting a plurality of programs, the user can easily boot up each program by clicking on the icon image on the printed paper keyboard using the scanner.

INDUSTRIAL APPLICABILITY

The present invention can be used in an input system for an information processing device such as a personal computer, a television or a music player.

**Claims**

1. An input processing system for an information processing device, wherein
a dot pattern which is formed on a surface of a medium and in which each of or one of a coordinate value and a code value is defined in one format is read using a scanner connected to the information processing device, thereby transmitting an operation instruction for inputting each of or one of the coordinate value and the code value to a central processing unit of the information processing device defined by the dot pattern, the dot pattern being printed on the surface of the medium, and
the dot pattern on the surface of the medium is read using the scanner reading the dot pattern, and each of or one of the coordinate value and the code value is input to the central processing unit of the information processing device.

2. An input processing system for an information processing device, wherein
a dot pattern which is formed on a surface of a medium is read using a scanner connected to the information processing device, and is converted into a code value of an interrupt key on a hardware keyboard defined by the dot pattern, thereby generating a key input interrupt processing in a central processing unit of the information processing device, the dot pattern being formed for each icon printed on the surface of the medium, and
if the icon for which the dot pattern is formed on the surface of the medium is to be scanned using the scanner reading the dot pattern, then it is recognized that the scanner is inclined with respect to the surface of the medium before or after reading the dot pattern according to a difference in light and shade of an image picked up by the scanner, and the key input interrupt processing defined according to a direction in which the scanner is inclined with respect to the surface of the medium is generated.

3. The input processing system for the information processing device according to claim 2, wherein
a scanner operation is recognized by a change in the difference in the light and the shade of the image picked up by the scanner, and the key input interrupt processing is generated according to the scanner operation.

4. The input processing system for the information processing device according to claim 2 or 3, wherein the key input interrupt processing is a change in a type of an input letter or character, an instruction to convert the letter or character, and a cursor movement.

5. A Japanese input system, wherein
a dot pattern formed on a surface of a medium is read using a scanner connected to an information processing device and converted into a code of an interrupt key on a hardware keyboard defined by the dot pattern, thereby generating a key input interrupt processing in a central processing unit of the information processing device, the dot pattern being formed for each icon printed on the surface of the medium,
if the icon for which the dot pattern is formed on the surface of the medium is to be scanned using the scanner reading the dot pattern and a word including only a vowel is input, the dot pattern on the icon is read by contacting a tip end of the scanner with the icon for which a code value corresponding to the vowel is defined as the dot pattern, and
if the icon for which the dot pattern is formed on the surface of the medium is to be scanned using the scanner reading the dot pattern and a word including a consonant and the vowel is input, then the dot pattern corresponding to the consonant is read by contacting and stopping a reader provided on the tip end of the scanner with and on the icon for which a code value corresponding to the consonant is defined as the dot pattern, the reader of the scanner is slid up to the icon for which the code value corresponding to the vowel next to the consonant is defined as the dot pattern on the surface of the medium and temporarily stopped on the icon corresponding to the vowel to read the dot pattern, and the reader provided on the tip end of the scanner is separated from the surface of the medium so as not to be able to recognize the dot pattern, thereby inputting a single letter or character, a series of words or a phrase.

6. An information input device comprising:

   a voice input unit that inputs voice information of an operator;
   a conversion unit that analyzes the input voice information and that converts the input voice information into one or more than one word candidate constituted by letters or characters corresponding to the input voice information;
   a display unit that displays the one or more than one word candidate obtained by conversion;
   a scanner that reads a dot pattern that is formed on a surface of a medium and in which each of or one of a coordinate value and a code value for arbitrarily moving a cursor is patterned so as to select one of the word candidate displayed on the display unit; and
   a deciding unit that converts the dot pattern read by the scanner into the code value, and that inputs the word candidate corresponding to the code value as a decided word.

7. An input processing system for an information processing device, wherein
a dot pattern which is formed on a surface of a medium and in which each of or one of a coordinate value and a code value is patterned is read using a scanner connected to the information processing device, thereby transmitting an operation instruction to a central processing unit of the information processing device defined by the dot pattern, the dot pattern being printed on the surface of the medium, and
if the dot pattern on the surface of the medium is to be read using the scanner reading the dot pattern, then it is recognized that the scanner is inclined with respect to the surface of the medium by a difference in light and shade of an image picked up by the scanner, and a GUI operation on a screen is performed according to a direction in which the scanner is inclined with respect to the surface of the medium.

8. The input processing system for the information processing device according to claim 7, wherein
a scanner operation is recognized by a change in the difference in the light and the shade of the image picked up by the scanner, and the GUI operation on the screen is performed according to the scanner operation.

9. The input processing system for the information processing device according to claim 7 or 8, wherein
the GUI operation on the screen is a mouse-manipulated operation such as screen scrolling, a cursor movement, designation of an icon on the screen, a drag and drop operation, a menu selection or an operation for instructing a letter or character input position.

10. An input processing system for an information processing device, wherein
a dot pattern formed on a surface of a medium is read using a scanner connected to the information processing device, and is converted into a code of an interrupt key on a hardware keyboard defined by the dot pattern, thereby generating a key input interrupt processing in a central processing unit of the information processing device, the dot pattern being printed, along with concave and convex portions of raised dots, on the surface of the medium as an icon.

11. The input processing system for the information processing device according to claim 10, wherein
the dot pattern and the raised dots meaning the dot pattern are formed in a predetermined region as a pair on the surface of the medium, and a bank separating and defining the region is provided for each region.

**12.** A remote controller for making a reservation of viewing and listening or recording or for accessing a site based on program information or site information printed on a surface of a medium, the remote controller comprising:

an imaging unit that optically reads a dot pattern formed by patterning a predetermined code value based on a predetermined algorithm for each region of the program information or the site information printed on the surface of the medium;
a control unit that analyzes the dot pattern from an image picked up by the imaging unit and transmitted from the imaging unit, and that decodes the dot pattern to a code value signified by the dot pattern; and
a transmission unit that transmits the decoded code value to a program broadcasting receiver, a tuner, a recorder and player, a player or network access device, a settop box for broadcasting reception and network access or a personal computer.

**13.** A remote controller having a dot pattern obtained by patterning a predetermined code value based on a predetermined algorithm and formed on an icon on a surface of a medium signifying a control button for a program broadcasting receiver, a tuner, a recorder and player, a player or network access device, a settop box for broadcasting reception and network access or a personal computer, the remote controller comprising:

an imaging unit that optically reads the dot pattern;
a control unit that analyzes the dot pattern from an image picked up by the imaging unit and transmitted from the imaging unit, and that decodes the dot pattern to a code value signified by the dot pattern; and
a transmission unit that transmits the decoded code value to the program broadcasting receiver, the tuner, the recorder and player, the player or network access device, the settop box for the broadcasting reception and network access or the personal computer.

**14.** The remote controller according to claim 12 or 13, wherein
the imaging unit is a reader provided integrally with the remote controller.

**15.** The remote controller according to claim 12 or 13, further comprising:

a cradle constituting a remote controller main body, the cradle including therein the control unit and the transmission unit; and

a scanner connected to the cradle wiredly or wirelessly, the scanner including imaging unit communicable with the control unit.

**16.** A projected image and moving image control system comprising:

a projection board on which a dot pattern obtained by patterning each of or one of a predetermined coordinate value and a predetermined code value based on a predetermined algorithm is formed;
the projection board having one surface constituted by an image display area for projecting a moving image or an image and a controller area for displaying an icon image for controlling the moving image or the image projected on the image display area, a projection unit being for projecting the moving image or the image at least on the image display area;
a reading unit that reads the dot pattern formed in the controller area; and
a control unit that analyzes the dot pattern on the icon image formed in the controller area and read by the reading unit, that converts the dot pattern into a coordinate value or a code value signified by the dot pattern, that outputs a control signal corresponding to the coordinate value or the code value to the projection unit, and that controls output of the moving image or the image displayed in the image display area.

**17.** The projected image and moving image control system according to claim 16, wherein
the projection board is configured so that a transparent sheet is bonded onto a surface of a white board via an adhesion layer, and the dot pattern is formed between the transparent sheet and the adhesion layer.

**18.** An information processing and display system comprising:

a projection board on which a dot pattern obtained by patterning each of or one of a predetermined coordinate value and a predetermined code value based on a predetermined algorithm is formed;
a projection unit that projects an icon image signifying at least start of a program on the projection board, and that projects an image or a moving image for displaying a program installed in a storage device corresponding to the icon image;
a reading unit that reads the dot pattern formed on the icon image projected by the projection unit; and
a control unit that analyzes the dot pattern formed on the icon image and read by the reading unit, that converts the dot pattern into a coordinate value or a code value signified by the dot pattern, and that starts the program from the storage device based on a startup signal corresponding to the coordinate value or the code value.

19. The projected image and moving image control system or the information processing and display system according to claim 16 or 18, wherein
a surface of the projection board on which the dot pattern is formed differs from a surface onto which the image, the moving image or the icon image is projected, and the projection unit is arranged as a rear projector with respect to the projection board.

20. The projected image and moving image control system or the information processing and display system according to claim 19, wherein
the dot pattern on the projection board is constituted out of a material having an infrared absorbing characteristic, and an infrared cut filter is provided at least on a projection unit-side surface of the projection board.

21. A paper controller generation system for printing an icon image displayed on a display unit on a surface of a paper sheet along with a dot pattern corresponding to the icon image, the paper controller generation system being an icon image print control system and comprising:

   a display unit that generates and displays the icon image;
   a control unit that associates the icon image displayed on the display unit with each of or one of a coordinate value and a code value defined in advance, and that instructs the icon image and the dot pattern to be printed; and
   a print unit that prints the icon image and the dot pattern on a surface of a predetermined medium based on an instruction from the control unit.

22. A printing method for an information processing device for printing a desktop screen displayed on a display unit on a surface of a paper sheet along with a dot pattern, comprising:

   mapping coordinate values corresponding to the desktop screen;
   generating a dot pattern signifying coordinate values on a screen when printing the desktop screen;
   generating a dot pattern including the coordinate values and a code value signifying a function of an icon image or the like in a functional image such as the icon image on the desktop in one format; and
printing the desktop screen together with the dot patterns.

23. The projected image and moving image control system or the information processing and display system according to any one of claims 16 to 20, wherein
the dot pattern formed on the projection board is defined in patterns identical in the coordinate value and the code value, and
predetermined matrix blocks are formed on the board, and an identical code value is assigned in same matrix block despite a change in the coordinate value.

24. The projected image and moving image control system or the information processing and display system according to claim 23, wherein
the icon image is arranged to spread over the one or plurality of matrix blocks, and control over an image corresponding to the icon image or start of a program corresponding to the icon image is instructed by causing the reading unit to read the dot pattern of the icon image.

25. The input processing system for the information processing device, the Japanese input system, the information input device, the remote controller, the projected image and moving image control system, the information processing and display system or the icon image print control system according to any one of claims 2, 5 to 7, 10 to 13, and 16, 18, and 21, wherein
the dot pattern is formed out of an infrared absorbing material, and the coordinate value and the code value are defined in one format in the dot pattern.

26. An input processing system for an information processing device, wherein
a dot pattern which is formed on a surface of a medium and in which a coordinate value and a code value are defined in one format is read using a scanner connected to the information processing device, transmitting an operation instruction for inputting each of or one of the coordinate value and the code value to a central processing unit of the information processing device defined by the dot pattern, the dot pattern being printed on the surface of the medium, the dot pattern on the surface of the medium is a set of predetermined dots obtained by superimposing the dot pattern on a pattern of a controller or a keyboard to arrange reference grid point dots at predetermined intervals in horizontal and vertical directions and arranging information dots having values defined based on how the information dots are shifted from a virtual grid point at a center surrounded by four reference grid point dots around the virtual grid point, the dot pattern including multiple information regions in which dot patterns including X coordinate values, Y coordinate values, and code values in a format of one dot pattern are printed, and
the dot pattern on the surface of the medium is read using the scanner reading the dot pattern, thereby inputting each of or one of the coordinate value and the code value corresponding to the dot pattern to the central processing unit of the information processing device.

FIG. 1

EP 2 026 177 A1

FIG. 2

FIG. 3

(a)

000  001  010  011  100  101  110  111

(b)

00  01  10  11  00  01  10  11

FIG. 4

FIG. 5

FIG. 6

| (a) | (b) | (c) |

00100001      4

01100110

11010101

3

FIG. 7

(a)

| $I_3$ | $I_4$ | $I_5$ |
|---|---|---|
| $I_2$ | $I_1$ | $I_6$ |

2× 3

(b)

| $I_3$ | $I_4$ | $I_5$ |
|---|---|---|
| $I_2$ | $I_1$ | $I_6$ |
| $I_9$ | $I_8$ | $I_7$ |

3× 3

( c)

| $I_5$ | $I_6$ | $I_7$ |
|---|---|---|
| $I_4$ | $I_1$ | $I_8$ |
| $I_3$ | $I_2$ | $I_9$ |
| $I_{12}$ | $I_{11}$ | $I_{10}$ |

3× 4

(d)

| $I_{36}$ | $I_{17}$ | $I_{18}$ | $I_{19}$ | $I_{20}$ | $I_{21}$ |
|---|---|---|---|---|---|
| $I_{35}$ | $I_{16}$ | $I_5$ | $I_6$ | $I_7$ | $I_{22}$ |
| $I_{34}$ | $I_{15}$ | $I_4$ | $I_1$ | $I_8$ | $I_{23}$ |
| $I_{33}$ | $I_{14}$ | $I_3$ | $I_2$ | $I_9$ | $I_{24}$ |
| $I_{32}$ | $I_{13}$ | $I_{12}$ | $I_{11}$ | $I_{10}$ | $I_{25}$ |
| $I_{31}$ | $I_{30}$ | $I_{29}$ | $I_{28}$ | $I_{27}$ | $I_{26}$ |

6× 6

FIG. 8

FIG. 9

DOT CODE FORMAT

(a)

| C31 | C30 | C29 | C28 | C27 | C26 | C25 | C24 | C23 | C22 | C21 | C20 | C19 | C18 | C17 | C16 | C15 | C14 | C13 | C12 | C11 | C10 | C9 | C8 | C7 | C6 | C5 | C4 | C3 | C2 | C1 | C0 |
|---|---|---|---|---|---|---|---|---|---|---|---|---|---|---|---|---|---|---|---|---|---|---|---|---|---|---|---|---|---|---|---|
| 0 | PARITY | | | CODE VALUE | | | | | | | | | | | | | | | | | | | | | | | | | | | |

(b)

| C31 | C30 | C29 | C28 | C27 | C25 | C25 | C24 | C23 | C22 | C21 | C20 | C19 | C18 | C17 | C16 | C15 | C14 | C13 | C12 | C11 | C10 | C9 | C8 | C7 | C6 | C5 | C4 | C3 | C2 | C1 | C0 |
|---|---|---|---|---|---|---|---|---|---|---|---|---|---|---|---|---|---|---|---|---|---|---|---|---|---|---|---|---|---|---|---|
| 0 | PARITY | | | CODE VALUE | | | | | | | | | | | | Y COORDINATE | | | | | | | | X COORDINATE | | | | | | | |

(c)

| C31 | C30 | C29 | C28 | C27 | C26 | C25 | C24 | C23 | C22 | C21 | C20 | C19 | C18 | C17 | C16 | C15 | C14 | C13 | C12 | C11 | C10 | C9 | C8 | C7 | C6 | C5 | C4 | C3 | C2 | C1 | C0 |
|---|---|---|---|---|---|---|---|---|---|---|---|---|---|---|---|---|---|---|---|---|---|---|---|---|---|---|---|---|---|---|---|
| 0 | PARITY | | | COORDINATE INDEX | | | | | | | | | | | | Y COORDINATE | | | | | | | | X COORDINATE | | | | | | | |

FIG. 10

VECTOR DOT

CORNER DOT

VECTOR DOT

CORNER DOT

VECTOR DOT

VECTOR DOT

CORNER DOT

CORNER DOT

0.25× 4=1mm

FIG. 11

X DIRECTION
GRID LINE

Y DIRECTION GRID LINE

FIG. 12

0

0

1

1

FIG. 13

VECTOR DOT

VECTOR DOT

CORNER DOT

CORNER DOT

VECTOR DOT

CORNER DOT

CORNER DOT

FIG. 14

|  | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| INFORMATION BIT | 1 | 0 | 0 | 1 | 1 | 1 | 1 | 0 | 1 | 0 | 1 | 1 | 1 | 0 |

|  | $K_1$ | $K_2$ | $K_3$ | $K_4$ | $K_5$ | $K_6$ | $K_7$ | $K_8$ | $K_9$ | $K_{10}$ | $K_{11}$ | $K_{12}$ | $K_{13}$ | $K_{14}$ |
|---|---|---|---|---|---|---|---|---|---|---|---|---|---|---|
| SECURITY TABLE | 0 | 0 | 1 | 0 | 1 | 1 | 0 | 1 | 1 | 0 | 0 | 0 | 1 | 1 |

|  | $T_1$ | $T_2$ | $T_3$ | $T_4$ | $T_5$ | $T_6$ | $T_7$ | $T_8$ | $T_9$ | $T_{10}$ | $T_{11}$ | $T_{12}$ | $T_{13}$ | $T_{14}$ |
|---|---|---|---|---|---|---|---|---|---|---|---|---|---|---|
| TRUE VALUE | 1 | 0 | 1 | 1 | 0 | 0 | 1 | 1 | 0 | 0 | 1 | 1 | 0 | 1 |

FIG. 15

SCANNER

RIGHT CLICK

LEFT CLICK

PAPER KEYBOARD

FIG. 16

PAPER KEYBOARD

FIG. 17

PAPER KEYBOARD

CLICK HERE TO VIEW HOMEPAGE SOON

| | | |
|---|---|---|
| SCHOOL | HOSPITAL | SCHOOL |
| HEALTH | ACADEMY | BANK |
| PUBLIC OFFICE | POLICE STATION | FIRE STATION |
| LIBRARY | PARK | PARKING |
| TRAFFIC | MOVIE THEATER | NATURE |
| TRAVEL | HOBBIES | EDUCATION |

| | | |
|---|---|---|
| ABC NEWS ABC NEWS | HEALTH △ ▢ | RESORT |
| XYZ.com | ○ ○ GUIDE | XYZ ONLINE |
| Dr. ○ △ | ABC Times | ○ ○ RECORD |
| AB BOOK STORE | AAAAA JAPAN | ABC, INC. |

FIG. 18

PAPER CONTROLLER

FIG. 19

FIG. 20

TAG WITH DOT ( **D** )

SCANNER

PAPER CONTROLLER

EP 2 026 177 A1

FIG. 21

45

FIG. 22

| ICON | URL |
|---|---|
| TV | www.television.co.jp |
| MOVIE | www.movies.ne.jp |
| SPORT | sportsnavi.co.jp |
| SHOPPING | shaddy.jp |
| PRESENT | www.tubox.com |
| FEMALE | www.fe-mail.co.jp |
| HOTEL | www.ikyu.com |
| FLIGHT | www.kokunaisen.com |

ICON URL WINDOW

URL
Delete

All URL
Delete

Delete
Undo

Close

FIG. 23

(a)

| WEB ADDRESS | Grid Mark# | |
|---|---|---|
| | | |

Mark URL Window

New URL [                                    ] [ INPUT ]

[ LINK ]

| URL Delete | All URL Delete | Link Delete | All Link Delete | Delete Undo | | Close |

(b)

Are you sure to delete?

[ Yes ] [ No ]

47

FIG. 24

(a)

INDEX TABLE

| CODE NUMBER | ACCESS DESTINATION | COMMAND | |
|---|---|---|---|
| 1???? | www.A······ | DOT CODE MANAGING SERVER (DB ) | ID (FOR MEMBERS ) |
| 00001 | C\ X. exe + PARAMETERI | SEND MAIL | PAPER CONTROLLER |
| 00002 | C\ X. exe + PARAMETERII | START PLAYER | |
| 00003 | C\ Y. exe + PARAMETER(1) | INPUT A | |
| 00004 | C\ Y. exe + PARAMETER(2) | INPUT B | |
| ⟩ | ⟩ | ⟩ | |
| 00100 | www.B····· | VIEW WEBSITE | |
| 00101 | C\········· | EXECUTE PROGRAM $P_1$ | MEDIUM |
| 00102 | C\········· | START MOVIE FILE $M_1$ | |

(b)

MANAGING SERVER TABLE

| CODE NUMBER | ADDRESS | COMMAND |
|---|---|---|
| 00200 | www.C····· | VIEW WEBSITE |
| 00201 | www.D····· | DISTRIBUTE STREAMING DATA |
| ⟩ | ⟩ | ⟩ |
| 00300 | www.F····· | DOWNLOAD CONTENT FROM F |
| ⟩ | ⟩ | ⟩ |

EP 2 026 177 A1

FIG. 25

PAPER CONTROLLER WITH GUIDES

| [REGISTRATION/ EDIT PANEL] | | [URL COPY/ LINK] | EXECUTE COPY | RETURN TO HOME | HELP |
| ICON OPEN/ CLOSE | G OPEN/ CLOSE | EXECUTE / FINISH LINK | EXECUTE/ FINISH COPY&LINK | BACK | FOR-WARD |
| URL | LINK | MOVE TO TOP POINTER | UP SCROLL | [WEB BROWSING] | UP SCROLL |
| ALL URLS | ALL LINKS | MOVE UPWARD | DOWN | | DOWN |
| YES | NO | MOVE DOWNWARD | [PANEL OPERATION] | LEFT SCROLL RIGHT | |
| UNDO ( RETURN TO PREVIOUS OPERATION) | [DELETE] | MOVE TO END | PREVIEW | USER REGIST-RATION | END |

GUIDE BANK

49

FIG. 26

GUIDE BANK

FIG. 27

SCANNER

UPPER SHEET

GUIDE BANK

PAPER CONTROLLER
MAIN BODY

LOWER SHEET

FIG. 28

PAPER ICON

TRANSPARENT CASE

FIG. 29

FIG. 30

GUIDE BANK

FIG. 31

(a)

SCANNER

(b)

(c)

EP 2 026 177 A1

FIG. 32

(a)

SCANNER

(b)

56

FIG. 33

SCANNER

MOUSE PAD

FIG. 34

(a) SINGLE OUTER FRAME CODE TYPE

(b) MULTIPLE OUTER FRAME CODE TYPE

COORDINATE + CODE B

COORDINATE + CODE A

MOUSE PAD

COORDINATE + CODE B

COORDINATE + CODE A

MOUSE PAD

(c) SINGLE OUTER FRAME CODE TYPE

(d) MULTIPLE OUTER FRAME CODE TYPE

COORDINATE + CODE B

COORDINATE + CODE A

MOUSE PAD

COORDINATE + CODE B

COORDINATE + CODE A

MOUSE PAD

58

FIG. 35

MOUSE PAD

x,y COORDINATE

SELECT RANGE

COPY

CUT

INSERT

PASTE

DELTE

Back space

LINE BRAKE

CANCEL

UNDO

CURSOR →

CURSOR ←

CURSOR ↑

CURSOR ↓

DISPLAY MEMORY

ENTER

FIG. 36

(a)

MOUSE PAD

SCROLL RIGHT WHEN PEN IS
SLID RIGHTWARD FROM
FRAME

(b)

SCROLL LEFT WHEN PEN IS
SLID LEFTWARD FROM
FRAME

(c)

SCROLL DOWN WHEN PEN IS
SLID DOWNWARD FROM
FRAME

(d)

SCROLL UP WHEN PEN IS
SLID UPWARD FROM FRAME

FIG. 37

(a)

MOUSE PAD

(b)

BY ROTATING PEN
LEFTWARD FROM
ARBITRARY POSITION ON
FRAME, WEB PAGE GOES
BACK TO PREVIOUS PAGE
BY ONE FOR EVERY HALF
TURN

BY ROTATING PEN
RIGHTWARD FROM
ARBITRARY POSITION ON
FRAME, WEB PAGE GOES
FORWARD TO NEXT PAGE
BY ONE FOR EVERY HALF
TURN

FIG. 38

(a)

MOUSE PAD

SPEED

DIRECTION

(b)

FIG. 39

(a)

MOUSE PAD

X

DIRECTION

X'

(b)

X                    X'

FIG. 40

FIG. 41

| | あ | い | う | え | お |
|---|---|---|---|---|---|
| あ | A | I | U | E | O |
| | あ | い | う | え | お |
| | LA XA | LI XI | LU XU | LE XE | LO XO |
| か | か | き | く | け | こ |
| | KA | KI | KU | KE | KO |
| | きゃ | きぃ | きゅ | きぇ | きょ |
| | KYA | KYI | KYU | KYE | KYO |
| さ | さ | し | す | せ | そ |
| | SA | SI | SU | SE | SO |
| | しゃ | しぃ | しゅ | しぇ | しょ |
| | SYA | SYI | SYU | SYE | SYO |
| た | た | ち | つ | て | と |
| | TA | TI | TU | TE | TO |
| | ちゃ | ちぃ | ちゅ | ちぇ | ちょ |
| | TYA | TYI | TYU | TYE | TYO |
| な | な | に | ぬ | ね | の |
| | NA | NI | NU | NE | NO |
| | にゃ | にぃ | にゅ | にぇ | にょ |
| | NYA | NYI | NYU | NYE | NYO |
| は | は | ひ | ふ | へ | ほ |
| | HA | HI | HU | HE | HO |
| | ひゃ | ひぃ | ひゅ | ひぇ | ひょ |
| | HYA | HYI | YHU | HYE | HYO |
| | ふぁ | ふぃ | ふゅ | ふぇ | ふぉ |
| | FA | FI | FU | FE | FO |
| ま | ま | み | む | め | も |
| | MA | MI | MU | ME | MO |
| | みゃ | みぃ | みゅ | みぇ | みょ |
| | MYA | MYI | MYU | MYE | MYO |
| や | や | い | ゆ | いぇ | よ |
| | YA | YI | YU | YE | YO |
| | ゃ | | ゅ | | ょ |
| | LYA XYA | | LYU XYU | | LYO XYU |

| | ら | り | る | れ | ろ |
|---|---|---|---|---|---|
| ら | RA | RI | RU | RE | RO |
| | りゃ | りぃ | りゅ | りぇ | りょ |
| | RYA | RYI | RYU | RYE | RYO |
| わ | わ | | | | を |
| | WA | | | | WO |
| ん | ん | | | | |
| | NN | | | | |
| が | が | ぎ | ぐ | げ | ご |
| | GA | GI | GU | GE | GO |
| | ぎゃ | ぎぃ | ぎゅ | ぎぇ | ぎょ |
| | GYA | GYI | GYU | GYE | GYO |
| ざ | ざ | じ | ず | ぜ | ぞ |
| | ZA | ZI JI | ZU | ZE | ZO |
| | じゃ | じぃ | じゅ | じぇ | じょ |
| | JYA ZYA JA | JYI ZYI | JYU ZYU JU | JYE ZYE JE | JYO ZYO JO |
| だ | だ | ぢ | づ | で | ど |
| | DA | DI | DU | DE | DO |
| | ぢゃ | ぢぃ | ぢゅ | ぢぇ | ぢょ |
| | DYA | DYI | DYU | DYE | DYO |
| ば | ば | び | ぶ | べ | ぼ |
| | BA | BI | BU | BE | BO |
| | びゃ | びぃ | びゅ | びぇ | びょ |
| | BYA | BYI | BYU | BYE | BYO |
| ぱ | ぱ | ぴ | ぷ | ぺ | ぽ |
| | PA | PI | PU | PE | PO |
| | ぴゃ | ぴぃ | ぴゅ | ぴぇ | ぴょ |
| | PYA | PYI | PYU | PYE | PYO |
| ヴぁ | ヴぁ | ヴぃ | ヴ | ヴぇ | ヴぉ |
| | VA | VI | VU | VE | VO |
| っ | ADD TWO CONSECUTIVE CONSONANTS OTHER THAN "N" BEHIND EXAMPLE :DATTA⇒ D→ A→ T→ DOUBLE→ A INDEPENDENT INPUT LTU XTU | | | | |

FIG. 42

FIG. 43

DISPLAY DEVICE

COMPUTER

1 .ISHI (INTENTION)
2 .ISHI (STONE)
3 .ISHI(WILL)
4 .ISHI(MEDICAL DOCTOR)
5 .ISHI (DESIRE OF DECEASED PERSON)

SCANNER

MOVE TO TOP
MOVE UPWARD
MOVE DOWNWARD
MOVE TO END

UP
SCR-OLL
DOWN

ENTER

MICROPHONE

FIG. 44

(a)

REMOTE
CONTROL
BUTTON

SEND
BUTTON

READ
BUTTON

( b)

FIG. 45

TELEVISION

SCANNER

CPU

BAT

FIG. 46

FIG. 47

BACK COVER      FRONT COVER

# EP 2 026 177 A1

FIG. 48

FACING PAGES

| STB CONTROLLER | INPUT/ EDIT LETTER/ CHARACTER |

**STB CONTROLLER**

| INTER-NET | MAIL | MOVIE PLAYER | △ VOLUME ▽ |
| ANIMATED MESSAGE | VIDEO PHONE | MUTE | |

**INTERNET**

| BACK | FOR-WARD | CAN-CEL | UP-DATE | HOME |
| SEA-RCH | FAVO-RITE | REGI-STER | DISPLAY HISTORY | END |

**MAIL**

| REC-EIVE | SEND | CREATE NEW | REPLY | FOR-WARD |
| ADDRESS BOOK | REGI-STER | EDIT | DEL-ETE | END |

**CONTROL**

◁ ENTER ▷  YES / NO

| NORMAL DISPLAY | FULL SCREEN DISPLAY |

▷ ◁ SCROLL △ ▽

**MOVIE PLAYER/ ANIMATED MESSAGE**

REC-ORD  ▷  ❚❚  ◁◁  ▷▷

| TITLE LIST | TITLE INPUT | EDIT TITLE | DELETE | END |

**VIDEO PHONE/ ANIMATED MESSAGE**

| REC-EIVE | SEND | DIAL | REPLY | FOR-WARD |
| NUMBER LIST | REGI-STER | EDIT | DELETE | END |

**NUMERIC KEYPAD**

| 1 | 2 | 3 | 4 | 5 |
| 6 | 7 | 8 | 9 | 0 |
| + | — | * | / | = |
| CALCU-LATOR | END | CLEAR | ( | ) |

**INPUT/ EDIT LETTER/ CHARACTER**

| HIRAGANA | FULL SIZE KATAKANA | FULL SIZE ALPHABET | UPPER CASE |
| KEY BOARD | HALF SIZE KATAKANA | HALF SIZE ALPHABET | LOWER CASE |

**EDIT**

| CONVERT | ENTER |
| INSERT | BACK SPACE | DELETE |
| COPY | CUT | PASTE | START SELEC-TION | END SELEC-TION |

**MOVE**

| LEFTWARD ← | RIGHTWARD → | UPWARD ↑ | PAGE UP / Page Up |
| LEFT END ← | RIGHT END → | DOWNWARD ↓ | PAGE DOWN / Page Down |

**LETTERS/ SYMBOL**

| A | B | C | D | E |
| F | G | H | I | J |
| K | L | M | N | O |
| P | Q | R | S | T |
| U | V | W | X | Y |
| Z | | . | - | @ |
| _ | / | : | ~ | , |
| ! | ? | \ | ( | ) |
| * | # | " | ' | = |
| ^ | + | ; | 、 | ° |
| .ne.jp | .co.jp | .or.jp | .com | OTH-ERS |

72

FIG. 49

## TV PAPER CONTROLLER

### 1 POWER, MODE CONTROLLER

| BUTTON | FUNCTION |
|---|---|
| POWER | TURN ON POWER. TURN OFF BY RE-PRESSING. |
| TV | TURN INTO TV MODE→TO PROGRAM MODE |
| INTERNET | CONNECT TO INTERNET AND START BROWSER. |
| MAIL | START E-MAIL SOFTWARE |
| GENERAL MENU | DISPLAY GENERAL MENU SCREEN.SELECT MENU WITH CONTROL BUTTON |
| MOVIE PLAYER | TURN INTO MOVIE PLAYER MODE |
| ANIMATED MESSAGE | TURN INTO ANIMATED MESSAGE MODE |
| VIDEO PHONE | TURN INTO VIDE PHONE MODE |

### 2 PROGRAM MODE SELECTION

| BUTTON | FUNCTION |
|---|---|
| TERRESTRIAL A | TURN INTO ANALOG TERRESTRIAL BROADCASTING MODE |
| TERRESTRIAL D | TURN INTO DIGITAL TERRESTRIAL BROADCASTING MODE |
| BS | TURN INTO BS BROADCASTING MODE |
| CS1 | TURN INTO CS1 BROADCASTING MODE |
| CS2 | TURN INTO CS2 BROADCASTING MODE |
| TV | TURN INTO TV AT DIGITAL TERRESTRIAL BROADCASTING |
| RADIO | TURN INTO RADIO BROADCASTING MODE AT DIGITAL TERRESTRIAL BROADCASTING |
| DATA | TURN INTO DATA BROADCASTING MODE AT DIGITAL TERRESTRIAL BROADCASTING |
| DATA INTERLOCK | RECEIVE DATA BROADCASTING AND ANOTHER BROADCASTING SIMULTANEOUSLY |
| INPUT SWITCH | SWITCH EXTERMINAL INPUT |

### 2' SELECT CHANNEL/VOLUME

| BUTTON | FUNCTION |
|---|---|
| 0-12 | RECEIVE CHANNEL REGISTERD IN NUMBER |
| SELECT/REGISTER FAVORITE CHANNEL | DISPLAY ch CHART. SELECT ch FROM THIS CHART. REGISTER FAVORITE ch IN THIS CHART. |
| VOLUME△ ▽ | VOLUME UP/DOWN |
| SELECT CHANNEL△ ▽ | CHANNEL UP/DOWN IN ALL MODES REGISTERD IN 1-12 |
| MUTE | MUTE TEMPORARILY. RETURN BY RE-PRESSING. |
| PROGRAM LISTING | DISPLAY PROGRAM LISTING OF CHANNEL CURRENTLY VIEWED. SELECT WITH CONTROL BUTTON. |
| COUNTERPROGRAM LISTING | DISPLAY COUNTERPROGRAM LISTING OF CHANNEL CURRENTLY VIEWED. SELECT WITH CONTROL BUTTON. |
| MENU | DISPLAY MENU. FOR SUBMENU. SELECT WITH CONTROL BUTTON. |
| BACK | GO BACK TO PREVIOUS "SCREEN" |

| END | END MENU. |

FIG. 50

3 CONTROL

| BUTTON | FUNCTION |
|---|---|
| △ ◁ □ ▷ ▽ | SELECTION OF MENU AND SUBMENU. DECIDE WITH ENTER. |
| BLUE RED GREEN YELLOW | COLOR BUTTON—SELECT THESE FUNCTIONS WHEN FUNCTIONS ARE ASSIGNED ON SCREEN |

4 SETTING

| BUTTON | FUNCTION |
|---|---|
| DISPLAY SCREEN | DISPLAY INFORMATION ON SCREEN CURRENTLY DISPLAYED ( ch, ETC. ) |
| DOUBLE SCREEN | TURN TO DOUBLE SCREEN |
| OFF TIMER | SET OFF TIMER |
| VIRTUAL | TURN INTO DOLBY VIRTUAL VOICE MODE. |
| i-LINK | OPERATE DEVICE CONNECTED THROUGH i-LINK |
| THREE-DIGIT INPUT | INPUT CHANNEL NUMBER OF DIGITAL TERRESTRIAL BROADCASTING DIRECTLY BY THREE-DIGIT NUMBER |
| REGISTER DIGITAL | REGISTER DIGITAL BROADCASTING IN NOS. 1 TO 12 |
| GR | ACTIVATE GHOST REDUCTION AT ANALOG BROADCASTING |
| AV POSITION | SET BRIGHTNESS OF SCREEN OR THE LIKE |
| SCREEN TYPE | SWITCH SCREEN MODE(SIZE) |
| SWITCH OPERATION | |
| REGISTER VIDEO | |
| SWITCH VOICE | STEREO-MONAURAL, DUPLEX VOICE-SWITCH AMONG MAI, SUB, AND MAIN+SUB |
| CAPTION | RECEIVE CLOSED-CAPTION BROADCASTING |
| FREEZE | DISPLAY STILL IMAGE(ANALOG, DIGITAL) |

FIG. 51

PAPER CONTROLLER

### 1 SELECT MODE

| BUTTON | FUNCTION |
|---|---|
| TV | REGISTER, DELETE OR REMOVE TV CHANNELS ON PAPER ICON |
| INTERNET | REGISTER, DELETE OR REMOVE TV CHANNELS URLS ON PAPER ICON |
| MOVIE PLAYER | REGISTER, DELETE OR REMOVE MOVIE TITLE ON PAPER ICON |
| ANIMATED MESSAGE | REGISTER, DELETE OR REMOVE ANIMATED MESASGE ADDRESS ON PAPER ICON |

### 2 LINK

| BUTTON | FUNCTION |
|---|---|
| COPY | COPY TV CHANNEL, URL, MOVIE TITLE OR ANIMATED MESSAGE ADDRESS CURRENTLY DISPLAYED |
| COPY & LINK | REGISTER COPIED TV CHANNEL, URL, MOVIE TITLE OR ANIMATED MESSAGE ADDRESS, AND ESTABLISH LINK ON DEDICATED :G: LABEL |
| LINK | ESTABLISH LINK TO REGISTERED TV CHANNEL, URL, MOVIE TITLE, OR ANIMATED MESSAGE ADDRESS ON DEDICATE :G: LABEL |
| DELETE | DELETE LINK OF REGISTERED TV CHANNEL, URL, MOVIE TITLE OR ANIMATED MESSAGE ADDRESS |
| DELETE ALL | DELETE ALL LINKS OF REGISTERED TV CHANNEL, URLS, MOVIE TITLES, AND ANIMATED MESSAGE ADDRESSES |
| REMOVE LINK | REMOVE LINK OF LINKED LABEL |
| REMOVE ALL LINKS | REMOVE LINKS OF ALL LABELS |
| YES | DELETE LINK/REMOVE LINK |
| NO | CANCEL EXECUTION |
| ▵POINTER▿ | MOVE POINTER |
| END | END REGISTRATION, DELETION AND REMOVAL OF PAPER ICON |

### 3 TV

| BUTTON | FUNCTION |
|---|---|
| ▵SELECT CHANNEL▿ | SELECT REGISTERED CHANNEL AND LINK THERETO |
| TERRESTRIAL A | ANALOG TERRESTRIAL BROADCASTING MODE |
| TERRESTRIAL D | TURN INTO DIGITAL TERRESTRIAL BROADCASTING MODE |
| BS | TURN INTO BS BROADCASTING MODE |
| CS1 | TURN INTO CS1 BROADCASTING MODE |
| CS2 | TURN INTO CS2 BROADCASTING MODE |
| TV | TURN TO TV AT DIGITAL TERRESTRIAL BROADCASTING |
| RADIO | TURN TO RADIO AT DIGITAL TERRESTRIAL BROADCASTING |
| DATA | TURN TO DATA BROADCASTING MODE AT DIGITAL TERRESTRIAL BROADCASTING |

FIG. 52

4   INTERNET

| BUTTON | FUNCTION |
|---|---|
| INPUT ADDRESS | DISPLAY URL INPUT SCREEN |
| HOME | GO TO HOMEPAGE |
| PREVIEW | DISPLAY WEB PAGE AT INPUT ADDRESS AND LINK THERETO |
| FAVORITE | SHOW "FAVORITE" |
| BACK | GO BACK TO PREVIOUS PAGE |
| FORWARD | GO FORWARD TO NEXT PAGE |
| DELETE POPUP | DELETE DISPLAYED WEB PAGE IN POPUP FORMAT |
| ◁ SCROLL ▷ | SCROLL SCREEN RIGHT AND LEFT |
| △ SCROLL ▽ | SCROLL SCREEN UP AND DOWN. SELECT ITEM IN "FAVORITE" BY SCROLLING |

5   MOVIE PLAYER/ANIMATED MESSAGE

| BUTTON | FUNCTION |
|---|---|
| TITLE LIST | DISPLAY TITLE LIST |
| ▷ | PLAY |
| ☐▯ | STOP/PAUSE |
| ◁◁ | FAST REWIND |
| ▷▷ | FAST FORWARD |

6   TV ICON

| BUTTON | FUNCTION |
|---|---|
| ⊙ | REGISTER IN LABEL, OR SHOW REGISTERED CHANNEL |

7   INTERNET ICON

| BUTTON | FUNCTION |
|---|---|
| ⊙ | REGISTER IN LABEL, OR DISPLAY REGISTERED WEB PAGE |

8   MOVIE PLAYER/ANIMATED MESSAGE

| BUTTON | FUNCTION |
|--------|----------|
| ☺ | REGISTER IN LABEL, OR PLAY REGISTERED MOVIE TITLE OR ANIMATED MESSAGE |

FIG. 53

INPUT/EDIT LETTER/CHARACTER

1 文字入力

| BUTTON | FUNCTION |
|---|---|
| KEYBOARD | DISPLAY KEYBOARD ON SCREEN |
| *HIRAGANA* | TURN TO *HIRAGANA* INPUT MODE |
| FULL SIZE *KATAKANA* | TURN TO FULL SIZE *KATAKANA* INPUT MODE |
| FULL SIZE ALPHABET | TURN TO FULL SIZE ALPHABET INPUT MODE |
| HALF SIZE *KATAKANA* | TURN TO HALF SIZE *KATAKANA* INPUT MODE |
| HALF SIZE ALPHABET | TURN TO HALF SIZE ALPHABET INPUT MODE |
| UPPERCASE | TURN TO UPPERCASE |
| LOWERCASE | TURN TO LOWERCASE |

2 EDIT

| CONVERT | CONVERT INPUT LETTER/CHARACTER |
|---|---|
| ENTER | DECIDE IF CONVERSION IS RIGHT |
| INSERT | INSERT LETTER/CHARACTER |
| BACK SPACE | DELETE LETTER/CHARACTER WHILE BACKING CURSOR |
| DELETE | DELETE LETTER/CHARACTER (STRING) |
| COPY | COPY REGISTERED CHARACTER STRING |
| CUT | DELETE REGISTERED CHARACTER STRING |
| PASTE | PASTE REGISTERED CHARACTER STRING |
| START SELECTION | START SELECTION OF CHARACTER STRING |
| END SELECTION | END SELECTION OF CHARACTER STRING |

3 MOVE

| ←LEFTWARD | MOVE CURSOR LEFTWARD |
|---|---|
| →RIGHTWARD | MOVE CURSOR RIGHTWARD |
| ←LEFT END | MOVE CURSOR TO LEFT END OF LINE |
| →RIGHT END | MOVE CURSOR TO RIGHT END OF LINE |
| ↑UPWARD | MOVE CURSOR TO TOP LINE |
| ↓DOWNWARD | MOVE CURSOR TO BOTTOM LINE |
| PAGE UP  Page Up | SCROLL UP PAGE DISPLAYED ON SCREEN |
| PAGE DOWN Page Down | SCROLL DOWN PAGE DISPLAYED ON SCREEN |

4 LETTER/CHARACTER/SYMBOL

| LETTER/CHARACTER/SYMBOL | INPUT LETTER/CHARACTER/SYMBOL BY PAPER CONTROL |
|---|---|

79

FIG. 54

STB CONTROLLER

1  SELECT MODE/VOLUME

| BUTTON | FUNCTION |
|---|---|
| INTERNET | CONNECT TO INTERNET AND START BROWSER |
| MAIL | START E-MAIL SOFTWARE |
| MOVIE PLAYER | START MOVIE PLAYER |
| ANIMATED MESSAGE | START ANIMATED MESSAGE |
| VIDEO PHONE | TURN TO VIDEO PHONE MODE |
| △ VOLUME ▽ | VOLUME up/down |

2  INTERNET

| BUTTON | FUNCTION |
|---|---|
| BACK | SAME AS BACK BUTTON OF BROWSER |
| FORWARD | SAME AS FORWARD BUTTON OF BROWSER |
| CANCEL | CANCEL READING |
| UPDATE | UPDATE DATA |
| HOME | GO BACK TO HOME PAGE |
| SEARCH | TURN TO SEARCH WINDOW INPUT MODE, AND SEARCH INPUT ADDRESS |
| FAVORITE | DISPLAY "FAVORITE" |
| REGISTER | REGISTER WEB PAGE CURRENTLY VIEWED IN "FAVORITE" |
| DISPLAY HISTORY | DISPLAY HISTORY VIEWED BEFORE |
| END | CLOSE BROWSER |

3  MAIL

| BUTTON | FUNCTION |
|---|---|
| RECEIVE | DISPLAY LIST OF RECEIVED MAILS |
| SEND | SEND MAIL |
| CREATE NEW | CREATE NEW MAIL |
| REPLY | CREATE REPLY MAIL |
| FORWARD | FORWARD MAIL |
| ADDRESS BOOK | OPEN ADDRESS BOOK |
| REGISTER | REGISTER IN ADDRESS BOOK |
| DELETE | DELETE MAIL |
| END | END E-MAIL SOFTWARE |

FIG. 55

4   CONTROL

| BUTTON | FUNCTION |
|---|---|
| | SELECT WITH TRIANGLES IN FOUR DIRECTIONS.DECIDE WITH "ENTER" "YES": DECIDE DELETION/OVERWRITE "NO": CANCEL DELETION/OVERWRITE NORMAL DISPLAY: NORMAL SCREEN FULL SCREEN DISPLAY: TURN TO FULL SCREEN DISPLAY MODE |
| SCROLL | SCROLL SCREEN |

5   MOVIE PLAYER/ANIMATED MESSAGE

| BUTTON | FUNCTION |
|---|---|
| RECORD | |
| ▷ | PLAY |
| ☐▯ | STOP/PAUSE |
| ◁◁ | FAST REWIND |
| ▷▷ | FAST FORWARD |
| TITLE LIST | DISPLAY TITLE LIST |
| INPUT TITLE | INPUT TITLE |
| EDIT TITLE | EDIT TITLE |
| DELETE | DELETE TITLE |
| END | END MOVIE PLAYER OR ANIMATED MESSAGE |

FIG. 56

6    VIDEO PHONE/ANIMATED MESSAGE

| BUTTON | FUNCTION |
|---|---|
| RECEIVE | RECEIVE ANIMATED MESSAGE |
| SEND | SEND ANIMATED MESSAGE |
| DIAL | DIAL TELEPHONE NUMBER OF COUNTERPART ON VIDEO PHONE |
| REPLY | REPLY ANIMATED MESSAGE |
| FORWARD | FORWARD ANIMATED MESSAGE |
| NUMBER LIST | DISPLAY DIAL NUMBER LIST |
| REGISTER | REGISTER DIAL NUMBER |
| EDIT | EDIT DIAL NUMBER |
| DELETE | DELETE DIAL NUMBER |
| END | END VIDEO PHONE/ANIMATED MESSAGE |

7    NUMERIC KEYPAD

| BUTTON | FUNCTION |
|---|---|
| NUMERIC KEYPAD/SYMBOL | INPUT LETTER/CHARACTER/SYMBOL BY PAPER CONTROL |
| CALCULATOR | TURN TO CALCULATOR |
| END | END CALCULATOR |
| CLEAR | CLEAR VALUE ERRONEOUSLY INPUT |

FIG. 57

# GRID International HOTEL

GRID INTERNATIONAL HOTEL

Information & Service
INFORMATION AND SERVICE

| English | Chinese | Korean | Japanese |

Front Desk | Concierge | Bellman | Porter

Beauty salon | Car rental | Doctor | Room Service

Babysitting | Currency exchange | Restaurant & Bar | Business Matters

Leisure Info | Sports | Celebration | Hotel Location

| Back | Next | | Call |

FIG. 58

**Media Player**

CONTENT MODE

VIDEO | STILL IMAGE WITH VOICE | VOICE

RECORD

LINK

START | END

VOLUME

UP

DOWN

PLAY

FAST FORWARD

STOP

PAUSE

BACK/ PLAY

FORWARD/ PLAY

TOP/ PLAY

END/ PLAY

SKIP

? YES

NO

REPEAT

ALL REPEAT

MOVE POINTER

UP

DOWN

FIG. 59

## EDIT TITLE

| TITLE No. | TITLE NAME | END |
|---|---|---|

### UPPER CASE
### LOWER CASE

### CURSOR
← →
DELETE ONE LETTER/ CHARACTER

| A | B | C | D | E |
|---|---|---|---|---|
| F | G | H | I | J |
| K | L | M | N | O |
| P | Q | R | S | T |
| U | V | W | X | Y |
| Z | . | - | @ | _ |
| / | : | ~ | http:// www. | |
| 1 | 2 | 3 | 4 | 5 |
| 6 | 7 | 8 | 9 | 0 |

### SORT TITLES

| REASSIGN SERIAL NUMBER | SORT IN ASCENDING ORDER | SORT IN RECORDING ORDER |
|---|---|---|

### LINK       CONTENT

| RE-MOVE | REMOVE MULTIPLE LINKS | DELETE |
|---|---|---|
| REMOVE ALL LINKS | | ALL DELETE |

ENTER ◯ CANCEL ◯ UNDO

FIG. 60

VIDEO/VOICE
DEVICE SUCH
AS TV

VIDEO
AUDIO

MAIN UNIT
OPERATION
BUTTON
DISPLAY
LAMP

EARPHONE/EXTERNAL SP
EXTERNAL MICROPHONE

USB PEN SCANNER

DOT LABEL/PAPER KEYBOARD

FIG. 61

DISPLAY MODE

DISPLAY EXAMPLE

| No. | TITLE | SKIP |
|-----|-------|------|
| VIDEO MODE | | |
| 1 | TORINO FERMALE FIGU | |
| 2 | WINTER SONATA | |
| 3 | SOCCER | ✓ |
| 4 | RONDO | |
| 5 | ? ? ? | |

SELECTED TRACK(HIGHLIGHTED)

CURSOR

## FIG. 62

| 1 SELECT MODE...THERE ARE FOUR MODES.  SELECT MODE FIRST. | |
| --- | --- |
| BUTTON | FUNCTION |
| VIDEO | RECORD MOVING IMAGE |
| STILL IMAGE | RECORD STILL IMAGE (WITHOUT VOICE) |
| STILL IMAGE/WITH VOICE | RECORDS STILL IMAGE (WITH VOICE) |
| VOICE | RECORD ONLY VOICE |

2   RECORD AND STOP

| BUTTON | FUNCTION |
| --- | --- |
| RECORD | START RECORDING.  IN CASE OF STILL IMAGE MODE, ONE IMAGE AT TIME OF PRESSING RECORD BUTTON IS RECORDED.  IN CASE OF STILL IMAGE WITH VOICE, VOICE IS RECORDED SUBSEQUENTLY. |
| STOP | STOP RECORDING.  ONE TRACK (FILE) CORRESPONDS TO DATA RECORDED SINCE PRESSING OF START BUTTON TO STOP |

2'  SET LINK AT TIME OF RECORDING...SPECIAL INSTRUCTION

| BUTTON | FUNCTION |
| --- | --- |
| RECORD→DOT LABEL | WHEN DOT LABEL IS PRESSED DURING RECORDING, RECORDING STOPS AND VIDEO OR VOICE INFORMATION RECORDED TILL THEN IS LINKED TO LABEL. IF ANOTHER DOT LABEL IS PRESSED WITHIN FIVE SECONDS, LINK TO ANOTHER LABEL IS ALSO ESTABLISHED. |

3   PLAY...PLAY CONTENT OF TRACK SELECTED BY POINTER BUTTON (SECTION 9)

| BUTTON | FUNCTION |
| --- | --- |
| VIDEO→PLAY | PLAY RECORDED MOVING IMAGE |
| STILL IMAGE→PLAY | PLAY STILL IMAGE (WITHOUT VOICE) |
| STILL IMAGE/WITH VOICE | PLAY STILL IMAGE (WITH VOICE) |
| VOICE→PLAY | PLAY RECORDED VOICE |

4   STOP, PAUSE

| BUTTON | FUNCTION |
| --- | --- |
| STOP | STOP RECORDING OR PLAY.  IF PRESSING STOP BUTTON DURING PAUSE OR DURING FAST FORWARD, RECORDING OR PLAY COMPLETELY STOPS.  AFTER STOP, PRESENT TRACK IS STILL SELECTED. |
| PAUSE | PAUSE MOVING IMAGE OR VOICE BEING PLAYED.  MOVING IMAGE OR VOICE RESTARTS IF RE-PRESSING PAUSE BUTTON OR PRESSING PLAY BUTTON. |
| FAST FORWARD | FAST FORWARD MOVING IMAGE OR VOICE OF SELECTED TRACK DURING STANDBY OR PLAY. RETURN TO ORIGINAL SPEED IF RE-PRESSING FAST FORWARD BUTTON.  FAST FORWARD SPEED IS DOUBLE SPEED.  RETURN TO ORIGINAL SPEED BY PRESSING PLAY BUTTON.  IN CASE OF STILL IMAGE MODE, ALL SUBSEQUENT STILL IMAGE FILES ARE PLAYED.  DISPLAY TIME IS 1 SECOND PER IMAGE. |

FIG. 63

5    BACK PLAY/FORWARD PLAY

| BUTTON | FUNCTION |
|---|---|
| BACK PLAY | GO BACK TO PREVIOUS TRACK AND PLAY.   SELECTION (HIGHLIGHT) ALSO AUTOMATICALLY MOVES. |
| FORWARD PLAY | GO FORWARD TO NEXT TRACK AND PLAY.   SELECTION (HIGHLIGHT) ALSO AUTOMATICALLY MOVES. |

6    HEAD PLAY/END PLAY

| BUTTON | FUNCTION |
|---|---|
| HEAD PLAY | PLAY FROM FIRST TRACK.   SELECTION (HIGHLIGHT) ALSO AUTOMATICALLY MOVES. |
| END PLAY | PLAY LAST TRACK.   SELECTION (HIGHLIGHT) ALSO AUTOMATICALLY MOVES. |

7    SKIP

| BUTTON | FUNCTION |
|---|---|
| SKIP | WHEN TRACK PLAY OF WHICH IS TO BE SKIPPED IS SELECTED AND BUTTON IS PRESSED, CHECK MARK IS ADDED TO TRACK. |
| NO SKIP | REMOVE CHECK MARK FROM TRACK |

8    REPEAT/ALL REPEAT

| BUTTON | FUNCTION |
|---|---|
| REPEAT | PLAY CONTENT OF SELECTED TRACK REPEATEDLY. |
| ALL REPEAT | PLAY ALL TRACKS REPEATEDLY.   (SKIP TRACKS WITH SKIP CHECK MARKS)   PLAY SELECTED TRACKS IN ORDER OF TITLE NOS. |

9    MOVE POINTER...SELECT TRACK TO BE PLAYED

| BUTTON | FUNCTION |
|---|---|
| UP | MOVE CURRENTLY SELECTED TRACK TO TRACK DISPLAYED ABOVE TRACK CURRENTLY SELECTED ON MONITOR |
| DOWN | MOVE CURRENTLY SELECTED TRACK TO TRACK DISPLAYED BELOW |

EP 2 026 177 A1

| | TRACK CURRENTLY SELECTED ON MONITOR |
|---|---|
| | |

89

FIG. 64

1 0　START/END LINK

| BUTTON | FUNCTION |
|---|---|
| START | TO LINK VIDEO OR VOICE INFORMATION ALREADY RECORDED<br><br>AFTER PRESSING START BUTTON, SELECT TRACK, AND PRESS ONE OR MORE DOT LABELS TO LINK ALL TRACK INFORMATION TO DOT LABELS.<br><br>INTERVAL SINCE PRESSING DOT LABEL UNTIL PRESSING NEXT DOT LABEL IS SET WITHIN FIVE SECONDS.<br><br>IF NO TRACK IS SELECTED, LINK TRACKS ALREADY SELECTED TO DOT LABELS.<br><br>BEFORE PRESSING END BUTTON, TRACKS CAN BE SELECTED AS MANY TIMES AS WISHED AND LINKED.<br>TO ESTABLISH LINK DURING RECORDING (REFER ALSO TO SECTION. 2')<br>STILL IMAGE (WITH VOICE)<br><br>LINK IS ESTABLISHED FOR STILL IMAGE AND VOICE DOES NOT STOP.　BY PRESSING STOP BUTTON, VOICE RECORDING STOPS AND ESTABLISHMENT OF LINK STARTS. |
| END | END LINK MODE.　WITHOUT PRESSING END BUTTON, LINK MODE AUTOMATICALLY ENDS AFTER TEN SECONDS. |

1 1　VOLUME...THERE IS FUNCTION OF STORING VOLUME SET LAST WHEN SW IS TURNED ON.

| BUTTON | FUNCTION |
|---|---|
| UP | TURN VOLUME UP WHEN PRESSING UP BUTTON DURING PLAY OF VOICE.16-LEVEL SETTING IS AVAILABLE. |
| DOWN | TURN VOLUME DOWN WHEN PRESSING DOWN BUTTON DURING PLAY OF VOICE. |

# FIG. 65

OPERATION OF TITLE EDI BUTTON

1  CHANGE TITLE NOS.....PERFORMED WHEN ORDER OF PLAY IS CHANGED.

| BUTTON | FUNCTION |
|---|---|
| TITLE No. | WHEN TRACK IS SELECTED WITH POINTER TO PRESS "TITLE No.", CURSOR APPEARS AFTER No. OF TRACK.  SAME NUMERIC VALUE CAN BE SET AS No.  HOWEVER, IN CASE OF REPEAT PLAY, TRACK OF SAME No. IS PLAYED IN RECORDED ORDER. TITLE No. IS THREE-DIGIT NUMBER FROM 001 TO 999. |
| DELETE ONE LETTER/CHARACTER | WHEN "DELETE ONE LETTER/CHARACTER " IS PRESSED, ONE LETTER/CHARACTER BEFORE CURSOR IS DELETED. IF BUTTON IS PRESSED FOR TWO SECONDS OR LONGER, LETTERS/CHARACTERS ARE SUCCESSIVELY DELETED. |
| NUMERIC KEYPAD | PRESSED NUMBER IS INPUT TO No. |
| END | EXECUTE CHANGE..  IF NEXT TRACK IS SELECTED WITH "MOVE POINTER", CHANGE IS EXECUTED WITHOUT PRESSING END.  CHANGE AUTOMATICALLY ENDS IF NO BUTTON IS PRESSED FOR TEN SECONDS. |

EXAMPLE

| No. | TITLE |
|---|---|
| 1 | TORINO FEMALE FIGURE SKATING |
| 2 | WINTER SONATA |
| 3 | SOCCER |
| 4 | RONDO |

| No. | TITLE |
|---|---|
| 5 | TORINO FEMALE FIGURE SKATING |
| 7 | WINTER SONATA |
| 3 | SOCCER |
| 2 | RONDO |

2  NAME/EDIT TITLE

| BUTTON | FUNCTION |
|---|---|
| TITLE NAME | WHEN TRACK IS SELECTED WITH POINTER AND "TITLE NAME" IS PRESSED, CURSOR APPEARS AT END OF TITLE NAME OF TRACK.  BECAUSE CURSOR IS INVISIBLE WHEN TITLE NAME IS LONG, MOVE CURSOR WITH "CURSOR" "←BUTTON".  WHEN NO TITLE IS GIVEN, ? APPEARS.  DELETE ? WITH DELETE ONE LETTER/CHARACTER TO INPUT TITLE. |
| DELETE ONE LETTER/CHARACTER | WHEN "DELETE ONE LETTER/CHARACTER" IS PRESSED, ONE LETTER/CHARACTER BEFORE CURSOR IS DELETED.  IF BUTTON IS PRESSED FOR TWO SECONDS OR LONGER, LETTERS/CHARACTERS ARE SUCCESSIVELY DELETED. |
| UPPERCASE/LOWERCASE | SELECT UPPERCASE OR LOWERCASE. |
| ALPHABET KEY | ALPHABETS ARE INPUT.  NUMBER OF LETTERS IS UP TO. |

| END | DECIDE TITLE. |
|---|---|

## FIG. 66

3 "SORT TITLES IN ASCENDING ORDER", "REASSIGN SERIAL NUMBERS TO TITLES", "SORT TITLES IN ORDER OF RECORDING

| BUTTON | FUNCTION |
|---|---|
| REASSIGN SERIAL NUMBER | REASSIGN TITLE Nos. CHANGED IN SECTION 1 FROM SMALLER NUMBER.  WHEN THERE ARE DUPLICATED Nos., SERIAL Nos.. ARE ASSIGNED TO TITLES IN RECORDED ORDER. |
| SORT IN ASCENDING ORDER | WHEN ORDER OF TITLE Nos. DIFFERS FROM DISPLAYED ORDER OF TRACKS, SORT TITLES IN ORDER FROM SMALLER TITLE No.  WHEN DUPLICATED Nos. ARE PRESENT, SERIAL Nos. ARE SORTED IN RECORDED ORDER. |
| SORT IN RECORDED ORDER | WHEN MODE IS SELECTED AND THIS BUTTON IS PRESSED, TITLES ARE SORTED IN RECORDED CONTENT ORDER REGARDLESS OF TITLE Nos.  (NEWEST ONE COMES LAST) |

CHANGE NUMBER            REASSIGN SERIAL NUMBERS            SORT IN ASCENDING ORDER

| No. | TITLE |
|---|---|
| 5 | TORINO FEMALE FIGURE SKATING |
| 7 | WINTER SONATA |
| 3 | SOCCER |
| 2 | RONDO |

| No. | TITLE |
|---|---|
| 3 | TORINO FEMALE FIGURE SKATING |
| 4 | WINTER SONATA |
| 2 | SOCCER |
| 1 | RONDO |

| No. | TITLE |
|---|---|
| 1 | RONDO |
| 2 | SOCCER |
| 3 | TORINO FEMALE FIGURE SKATING |
| 4 | WINTER SONATA |

CHANGE NUMBER            REASSIGN SERIAL NUMBERS            SORT IN ASCENDING ORDER

| No. | TITLE |
|---|---|
| 5 | TORINO FEMALE FIGURE SKATING |
| 7 | WINTER SONATA |
| 3 | SOCCER |
| 2 | RONDO |

| No. | TITLE |
|---|---|
| 2 | RONDO |
| 3 | SOCCER |
| 5 | TORINO FEMALE FIGURE SKATING |
| 7 | WINTER SONATA |

| No. | TITLE |
|---|---|
| 1 | RONDO |
| 2 | SOCCER |
| 3 | TORINO FEMALE FIGURE SKATING |
| 4 | WINTER SONATA |

4   LINK-REMOVE/REMOVE ALL

| BUTTON | FUNCTION |
|---|---|
| REMOVE | REMOVE LINK SET ON DOT LABEL TO WHICH SELECTED TITLE IS LINKED |
| REMOVE MULTIPLE LINKS | WHEN SELECTED TITLE IS LINKED TO MULTIPLE DOT LABELS, ALL LINKS ARE REMOVED |
| REMOVE ALL LINKS | REMOVE LINKS OF ALL TITLES IN SELECTED CONTENT MODE |
| ENTER | EXECUTE REMOVAL OF LINK |
| CANCEL | CANCEL REMOVAL OF LINK |

| UNDO | RESTORE LINK JUST REMOVED (ONLY LINK JUST REMOVED BY "ENTER") |

FIG. 67

5　CONTENT-DELETE/DELETE ALL

| BUTTON | FUNCTION |
|---|---|
| DELETE | DELETE CONTENT AND TITLE OF SELECTED TITLE |
| DELETE ALL | DELETE CONTENTS AND TITLES OF ALL TITLES OF SELECTED CONTENT MODE |
| ENTER | EXECUTE DELETION |
| CANCEL | CANCEL DELETION |

FIG. 68

CONTROLLER AREA

WHITE BOARD

VIDEO DISPLAY AREA

Media Player

CONTENT MODE

IMAGE   VOICE

RECORD   LINK
         START  END

VOLUME PLAY
UP
DOWN

BACK PLAY
FORWARD PLAY

TOP PLAY
END PLAY

SKIP
YES   UP
NO

PROJECTOR

FIG. 69

PROJECTOR

SCANNER

DOT

TRANSPARENT
SHEET

ADHESION
LAYER

WHITE BOARD

EP 2 026 177 A1

FIG. 70

VARIOUS ICONS

WHITE BOARD

START | DESKTOP | ICON MENU

PROJECTOR

FIG. 71

EP 2 026 177 A1

FIG. 72

DOT

SCANNER

REAR PROJECTOR

TRANSPARENT
SHEET

ACRYLIC BOARD

INFRARED
CUT FILTER

ADHESION
LAYER

ADHESION
LAYER

FIG. 73

(a)

DISPLAY DEVICE

| KANA- KANJI CONVERSION | SET SLIDESHOW |
| VIEW WEBSITE | A  B  C |
| SEND MAIL | |

(b)

PRINT OUT

| KANA- KANJI CONVERSION | SET SLIDESHOW |
| VIEW WEBSITE | A  B  C |
| SEND MAIL | |

FIG. 74

FIG. 75

⑥ WHEN CONTENTS ARE DOWNLOADED, DOT CODE MANAGEMENT TABLE
TO START CONTENTS IS DOWNLOADED TOGETHER WITH CONTENTS AND IS
ADDED TO DOT CODE MANAGEMENT TABLE ALREADY PRESENT ON PC.
THEREAFTER, WHEN REGISTERED DOT CODE IS READ BY TOUCHING PAPER SHEET
BY eSCANNER, IT IS PROCESSED IN PC AND CORRESPONDING CONTENTS
ARE STARTED.

⑦ WHEN INTERNET SHOPPING OR PAID CONTENT IS USED, VARIOUS SERVICES
CAN BE EXECUTED WHILE BILLING. BY AUTHENTICATING DOT CODE PRINTED
ON PLASTIC ID AT 2 BY DOT CODE MANAGING SERVER REGISTERED
WITH PERSONAL INFORMATION, AND BY INPUTTING PASSWORD.

> AS DESCRIBED, IF GAM IS INSTALLED IN PC, NEWSPAPER OR MAGAZINE, FREE PAPER, CATALOG,
> ADVERTISEMENT, AND VARIOUS DM ARE DELIVERED TO COMPANIES AND INDIVIDUALS.
> JUST BY TOUCHING PLASTIC TAG AND PAPER SHEET, DOT CODE IS VERIFIED SO THAT
> CONTENTS ARE BROWSED THROUGH INTERNET, AND VARIOUS MEMBERSHIP SERVICES SUCH AS
> SHOPPING AND PAID CONTENTS CAN BE RECEIVED.
> FURTHER, TAG ID ENABLES ANALYZING ALL LOGS INDICATING WHO ACCESSED WHAT AT WHAT TIME,
> AND IT CAN BE APPLIED TO STRATEGIC INTERNET MARKETING.

## ○ ADVANTAGES OF GridOnput (TM)

### 1. NO LOSS OF PRINT DESIGN!

BECAUSE DOTS CAN BE PRINTED ANYWHERE ON GRAPHICS SUCH AS PHOTOGRAPH AND
ILLUSTRATION OR TEXT WITH INVISIBLE STEALTH INK, FIRST PRIORITY CAN BE GIVEN
TO DESIGN UNLIKE CONVENTIONAL BARCODE OR QR CODE.

### 2. INTUITIVE INTERFACE!

BY ARRANGING ONE DOT CODE IN EACH 2MM SQUARE, DOTS ARE REPEATEDLY
PRINTED ON GRAPHICS OR TEXT. THEREFORE, DOT CODE CAN BE READ
BY TOUCHING ANYWHERE IN ARBITRARY AREA, AND ENABLES EASY USE EVEN
BY CHILDREN, ELDERLY, OR PHYSICALLY DISABLED PERSONS.

### 3. STRONG SECURITY!

ALL DOT CODES ISSUED FOR CUSTOMERS ARE UNIQUE CODES, AND SUCH INK THAT
REACTS IN INFRARED REGION TO PREVENT COPY IS USED.
THEREFORE, HIGH LEVEL SECURITY IS ACHIEVED.

### 4. HARMONY OF PAPER WITH INTERNET

ADVANTAGE OF PUSH-TYPE PAPER MEDIUM THAT IS LIGHT AND HAS HIGH
VIEWABILITY AND HIGH STORAGE STABILITY AND ADVANTAGE OF INTERNET
THAT ENABLES SEARCHING AND DISTRIBUTING ENORMOUS AND LATEST
MULTIMEDIA INFORMATION AND MAKING ORDERS FOR GOODS AND SERVICES ON
SITE ARE HARMONIZED.

FIG. 76

HANDY TERMINAL

SCANNER

RESTAURANT MENU

MENU

EP 2 026 177 A1

FIG. 77

| MENU | UNIT PRICE | QUA-NITY | TOTAL |
|------|------------|----------|-------|
| GYOZA | 400 | 2 | 800 |
| RAMEN | 800 | 4 | 3200 |
| | | | |
| | | | |
| | | | |
| TOTAL | | | |

○ × RESTAURANT

ORDER SERVER

WIRELESS ANTENNA

SCANNER

SCANNER

MENU

FIG. 78

(a)

DIRECTION OF
CAMERA

DIRECTION OF DOT

α

(b)
INCLINATION OF PEN
(SCANNER)

DIRECTION OF
CAMERA

β

FIG. 79  METHOD OF MEASUARING INCLINATION
DIRECTION AND ANGLE (1)

BL0(i)
i=1,n(=48)

FIG. 80

(a) METHOD OF MEASUARING INCLINATION
DIRECTION AND ANGLE (2)

45°          45°

(b)

FIG. 81

INCLINATION DIRECTION MEASURING METHOD

MEASURING POINT

1-8 ARE MEASURING POINTS

EP 2 026 177 A1

FIG. 82

MEASURING METHOD BY FOURIER FUNCTION

$\alpha_1 \sin(\theta - \beta_1)$

$\alpha_2 \sin 1/2(\theta - \beta_2)$

$$BL(i) = \sum_{j=1}^{\frac{n}{2}} \alpha_j \left\{ \sin\left(\frac{1}{2}\right)^{j-1} (\theta - \beta_j) \right\}$$

WHERE n=2m (n INDICATES NUMBER OF
MEASURING POINTS)

108

FIG. 83

| MEASURING METHOD BY N- TH DEGREE EQUATION |
|---|

$BL(i) = \alpha_1(\theta - \beta_1) \cdot \alpha_2(\theta - \beta_2) \cdots \cdots \alpha_j(\theta - \beta_j)$
WHERE $j$ IS $n/2$, n=2m
SOLVE THIS EQUATION TO ACQUIRE $\alpha_j$ AND $\beta_j$

FIG. 84

(a) MOUSE PAD CODES AND xy COORDINATES ARE PRINTED ON PART OF REGIONS

PAPER
KEYBOARD

| A | B | C | D | E | F | G | H | I | J | K | M | L |
| N | O | P | Q | R | S | T | U | V | W | X | Y | Z |
| a | b | c | d | e | f | g | h | i | j | k | l | m |
| n | o | p | q | r | s | t | u | v | w | x | y | z |

| @ | . | : | ; | $ | \ | ? |
| ! | – | + | / | = | % | ~ |
| _ | · | 1 | 2 | 3 | 4 | 5 |
| 6 | 7 | 8 | 9 | 0 |

y
x

MOUSE PAD

KEYTOP

( b)USE ENTIRE REGION AS MOUSE PAD

PAPER
KEYBOARD

| A | B | C | D | E | F | G | H | I | J | K | M | L |
| N | O | P | Q | R | S | T | U | V | W | X | Y | Z |
| a | b | c | d | e | f | g | h | i | j | k | l | m |
| n | o | p | q | r | s | t | u | v | w | x | y | z |
| @ | . | : | ; | $ | \ | ? | ! | 1 | 2 | 3 | 4 | 5 |
| – | + | / | = | % | ~ | _ | · | 6 | 7 | 8 | 9 | 0 |

Y
X
KEYTOP

110

FIG. 85

(a)

WHITE BOARD

Y

X

(b)

| CODE 61 | CODE 62 | CODE 63 | CODE 64 | CODE 65 | CODE 66 | CODE 67 |
| CODE 51 | CODE 52 | CODE 53 | CODE 54 | CODE 55 | CODE 56 | CODE 57 |
| CODE 41 | CODE 42 | CODE 43 | CODE 44 | CODE 45 | CODE 46 | CODE 47 |
| CODE 31 | CODE 32 | CODE 33 | CODE 34 | CODE 35 | CODE 36 | CODE 37 |
| CODE 21 | CODE 22 | CODE 23 | CODE 24 | CODE 25 | CODE 26 | CODE 27 |
| CODE 11 | CODE 12 | CODE 13 | CODE 14 | CODE 15 | CODE 16 | CODE 17 |

Y

X

( c)

CONTROLLER REGION

MOVING IMAGE REGION

FIG. 86

(a)

| $C_{31}$ | $C_{30}$ | $C_{29}$ | $C_{28}$ | $C_{27}$ | $C_{26}$ | $C_{25}$ | $C_{24}$ | $C_{23}$ | $C_{22}$ | $C_{21}$ | $C_{20}$ | $C_{19}$ | $C_{18}$ | $C_{17}$ | $C_{16}$ | $C_{15}$ | $C_{14}$ | $C_{13}$ | $C_{12}$ | $C_{11}$ | $C_{10}$ | $C_{9}$ | $C_{8}$ | $C_{7}$ | $C_{6}$ | $C_{5}$ | $C_{4}$ | $C_{3}$ | $C_{2}$ | $C_{1}$ | $C_{0}$ |
|---|---|---|---|---|---|---|---|---|---|---|---|---|---|---|---|---|---|---|---|---|---|---|---|---|---|---|---|---|---|---|---|
| PARITY | | CODE VALUE | | | | | | | | | | | | | | X COORDINATE | | | | | | | | Y COORDINATE | | | | | | | |

(b)

Y COORDINATE
X COORDINATE
CODE VALUE
PARITY

(c)

FIG. 87

| CODE VALUE | COMMAND |
|:---:|:---:|
| 1 1 | STOP |
| 1 2 | |
| 1 3 | PAUSE |
| 1 4 | FAST FORWARD |
| ⟨ | ⟨ |

FIG. 88

(a)

(0001)

Y

X (0002) (0003)

START

DISPLAY

(b)

PRINT SHEET

Y

X

START

FIG. 89

| CODE VALUE | START UP PROGRAM |
|------------|------------------|
| 0001 | Warpro.exe |
| 0002 | Internet.exe |
| 0003 | Sheet.exe |

FIG. 90

(a)

| C31 | C30 | C29 | C28 | C27 | C26 | C25 | C24 | C23 | C22 | C21 | C20 | C19 | C18 | C17 | C16 | C15 | C14 | C13 | C12 | C11 | C10 | C9 | C8 | C7 | C6 | C5 | C4 | C3 | C2 | C1 | C0 |
|---|---|---|---|---|---|---|---|---|---|---|---|---|---|---|---|---|---|---|---|---|---|---|---|---|---|---|---|---|---|---|---|
| PARITY | | CODE VALUE | | | | | | | | | | | | | | | | | | | X COORDINATE | | | | | | | Y COORDINATE | | | |

(b)

| $C_{1-0}$ | $C_{9-8}$ | $C_{17-16}$ | $C_{25-24}$ |
| $C_{3-2}$ | $C_{11-10}$ | $C_{19-18}$ | $C_{27-26}$ |
| $C_{5-4}$ | $C_{13-12}$ | $C_{21-20}$ | $C_{29-28}$ |
| $C_{7-6}$ | $C_{15-14}$ | $C_{23-22}$ | $C_{31-30}$ |

Y COORDINATE
X COORDINATE
CODE VALUE
PARITY

## INTERNATIONAL SEARCH REPORT

| International application No. |
| --- |
| PCT/JP2007/055334 |

A. CLASSIFICATION OF SUBJECT MATTER
*G06F3/042*(2006.01)i, *G06F3/023*(2006.01)i, *G06F3/048*(2006.01)i, *H03M11/04*
(2006.01)i

According to International Patent Classification (IPC) or to both national classification and IPC

B. FIELDS SEARCHED

Minimum documentation searched (classification system followed by classification symbols)
G06F3/01, 3/023, 3/03-3/048, 3/16, H03M11/04

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2005-332351 A  (Takako KAWASHIMA), | 1 |
| Y | 02 December, 2005 (02.12.05), | 2-10,12-21, |
|   | Full text; all drawings | 23-25 |
| A | (Family: none) | 11,22,26 |
|   |   |   |
| X | JP 2005-100315 A  (Ricoh Co., Ltd.), | 1 |
| Y | 14 April, 2005 (14.04.05), | 2-10,12-21, |
|   | Full text; all drawings | 23-25 |
| A | (Family: none) | 11,22,26 |
|   |   |   |
| X | JP 2003-345484 A  (Matsushita Electric | 1 |
| Y | Industrial Co., Ltd.), | 2-10,12-21, |
|   | 05 December, 2003 (05.12.03), | 23-25 |
| A | Full text; all drawings | 11,22,26 |
|   | (Family: none) |   |

☒ Further documents are listed in the continuation of Box C.      ☐ See patent family annex.

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 05 July, 2007 (05.07.07) | 17 July, 2007 (17.07.07) |

| Name and mailing address of the ISA/ | Authorized officer |
| --- | --- |
| Japanese Patent Office |   |
| Facsimile No. | Telephone No. |

Form PCT/ISA/210 (second sheet) (April 2005)

## INTERNATIONAL SEARCH REPORT

| | International application No. |
|---|---|
| | PCT/JP2007/055334 |

C (Continuation). DOCUMENTS CONSIDERED TO BE RELEVANT

| Category* | Citation of document, with indication, where appropriate, of the relevant passages | Relevant to claim No. |
|---|---|---|
| X<br>Y<br><br>A | JP 2004-294942 A (Hitachi, Ltd.),<br>21 October, 2004 (21.10.04),<br>Full text; all drawings<br>(Family: none) | 1<br>2-10,12-21,<br>23-25<br>11,22,26 |
| Y | JP 3830956 B1 (Kenji YOSHIDA),<br>11 October, 2006 (11.10.06),<br>Full text; all drawings<br>(Family: none) | 2-4,7-9,25 |
| Y | JP 2005-196759 A (International Business<br>Machines Corp.),<br>21 July, 2005 (21.07.05),<br>Full text; all drawings<br>& US 2005/0146508 A1 & EP 1555601 A2 | 5 |
| Y | JP 2005-44103 A (Toshiba Corp.),<br>17 February, 2005 (17.02.05),<br>Full text; all drawings<br>(Family: none) | 6 |
| Y<br>A | JP 2005-284103 A (Takara Co., Ltd.),<br>13 October, 2005 (13.10.05),<br>Full text; all drawings<br>(Family: none) | 10<br>11 |
| Y<br>A | JP 7-282182 A (Olympus Optical Co., Ltd.),<br>27 October, 1995 (27.10.95),<br>Full text; all drawings<br>(Family: none) | 10<br>11 |
| A | JP 54-144821 A (Nippon Telegraph & Telephone<br>Public Corp.),<br>12 November, 1979 (12.11.79),<br>Full text; all drawings<br>(Family: none) | 11 |
| Y | JP 2002-187382 A (Olympus Optical Co., Ltd.),<br>02 July, 2002 (02.07.02),<br>Full text; all drawings<br>(Family: none) | 12-15 |
| Y | JP 2003-256122 A (Kokuyo Co., Ltd.),<br>10 September, 2003 (10.09.03),<br>Full text; all drawings<br>(Family: none) | 16-20,23,24 |
| Y<br>A | JP 2002-208025 A (Kabushiki Kaisha Kopume<br>Kikaku),<br>26 July, 2002 (26.07.02),<br>Full text; all drawings<br>(Family: none) | 21<br>22 |

Form PCT/ISA/210 (continuation of second sheet) (April 2005)

**INTERNATIONAL SEARCH REPORT**

| International application No. |
| --- |
| PCT/JP2007/055334 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    The technical feature common to the inventions of claims 1-4, 7-9, 25, 26, the invention of claim 5, the invention of claim 6, the inventions of claims 10, 11, the inventions of claims 12-15, the inventions of claims 16-20, 23, 24, and the inventions of claims 21, 22 relate to that "a dot pattern is formed on the medium surface."
    However, this common technical feature is not novel as is disclosed in various documents.

    (continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**
the
☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**INTERNATIONAL SEARCH REPORT**

International application No.

PCT/JP2007/055334

Continuation of Box No.III of continuation of first sheet(2)

As a result, the technical feature that "the dot pattern is formed on the medium surface" makes no contribution over the prior art and this common feature cannot be a special technical feature within the meaning of PCT Rule 13.2, second sentence.

Accordingly, there exists no technical feature common to the inventions of claims 1-4, 7-9, 25, 26, the invention of claim 5, the invention of claim 6, the inventions of claims 10, 11, the inventions of claims 12-15, the inventions of claims 16-20, 23, 24, and the inventions of claims 21, 22.

Form PCT/ISA/210 (extra sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005004574 A